# EUROPEAN PATENT APPLICATION

(11) **EP 4 645 758 A1**
(43) Date of publication of application: **05.11.2025**
(21) Application number: 23917157.2
(22) Date of filing: 09.11.2023
(51) Int. Cl.: H04L 9/40

(54) **PARAMETER NOTIFICATION METHOD AND APPARATUS, AND DEVICE AND SYSTEM**

(30) Priority: 18.01.2023 CN 202310201017; 28.03.2023 CN 202310369045
(71) Applicant: Huawei Technologies Co., Ltd., Shenzhen, Guangdong 518129 (CN)
(72) Inventor: XU, Jian, Shenzhen, Guangdong 518129 (CN); WANG, Guoqiang, Shenzhen, Guangdong 518129 (CN); DAI, Zhuliang, Shenzhen, Guangdong 518129 (CN); DONG, Xiaoyan, Shenzhen, Guangdong 518129 (CN)
(74) Representative: Gill Jennings & Every LLP
(86) International application number: PCT/CN2023/130609
(87) International publication number: WO 2024/152689

(57) **Abstract**

This application discloses a parameter advertisement method and apparatus, a device, and a system. An unpacking end advertises a packing end of a feature of a data flow that needs to be packed and an identifier of a compression algorithm, so that the feature of the data flow and the identifier of the compression algorithm are automatically transferred from the unpacking end to the packing end. Therefore, the packing end can determine packing for some data flows and a to-be-used compression algorithm based on the received feature of the data flow and the received identifier of the compression algorithm, so that the packing end can pack a specified data flow by using a specified compression algorithm, and a process in which the feature of the data flow and the identifier of the compression algorithm are manually configured at the packing end is avoided. Therefore, configuration complexity at the packing end is reduced.

## Description

This application claims priorities to Chinese Patent Application No. 202310201017.2, filed with the China National Intellectual Property Administration on January 18, 2023 and entitled "METHOD FOR PUBLISHING LOCAL CAPABILITY BY USING BGP FS PROTOCOL FOR DATA ENCRYPTION, NETWORK DEVICE, AND SYSTEM", and to Chinese Patent Application No. 202310369045.5, filed with the China National Intellectual Property Administration on March 28, 2023 and entitled "PARAMETER ADVERTISEMENT METHOD AND APPARATUS, DEVICE, AND SYSTEM", both of which are incorporated herein by reference in their entireties.

### TECHNICAL FIELD

This application relates to the field of communication technologies, and specifically, to a parameter advertisement method and apparatus, a device, and a system.

### BACKGROUND

To implement data packing, an access control list (access control list, ACL) rule and a compression parameter are usually configured on each network device in a network, and each network device serving as a packing end packs a data flow based on the locally configured ACL rule and compression parameter. Each network device serving as an unpacking end unpacks the data flow based on the locally configured ACL rule and compression parameter. In the foregoing manner, many parameters need to be configured on each network device to implement a packing function. Consequently, configuration complexity is excessively high.

### SUMMARY

This application provides a parameter advertisement method and apparatus, a device, and a system, to reduce configuration complexity. Technical solutions are described as follows:
According to a first aspect, a parameter advertisement method is provided. The method includes: A first network device obtains a first parameter set. The first parameter set includes a first identifier and a feature of a data flow, and the first identifier indicates a compression algorithm. The first network device sends the first parameter set to a second network device.

In the foregoing method, the first network device advertises the second network device of the feature of the data flow that needs to be packed and the identifier of the compression algorithm, so that the feature of the data flow and the identifier of the compression algorithm are automatically transferred to the second network device, to support the second network device in packing a specified data flow by using a specified compression algorithm. In addition, a correspondence between the feature of the data flow and the identifier of the compression algorithm does not need to be manually configured on the second network device. Therefore, configuration complexity is reduced, and a configuration operation is simplified.

In some implementations, the first parameter set further includes an offset, and the offset indicates at least one of a packing start location or a packing end location.

By advertising the offset, a packing end is supported in starting the packing at a specified location, and ending the packing at a specified location, to further improve flexibility.

In some implementations, the first parameter set further includes a first priority, and the first priority indicates that a packing function is validated.

By advertising the priority, the packing end is supported in determining whether to pack the specific data flow based on the priority.

In some implementations, that the first network device sends the first parameter set to a second network device includes: The first network device sends a first border gateway protocol (border gateway protocol, BGP) packet to the second network device. The first BGP packet includes the first parameter set.

The first parameter set is sent in an extended BGP manner. Because the BGP supports parameter exchange between different autonomous systems (autonomous systems, ASs), supports cross-AS propagation of the first parameter set, and supports a scenario in which the packing end and an unpacking end are separately deployed in different ASs, to support transfer of a packed data flow between the different ASs.

In some implementations, a network layer reachability information (network layer reachability information, NLRI) field in the first BGP packet includes the feature of the data flow, an extended community attribute field in the first BGP packet includes a first type and the first identifier, and the first type indicates packing.

In some implementations, the first BGP packet is a border gateway protocol flow specification (border gateway protocol flow spec, BGP flow specification, BGP flow spec or BGP FS for short) packet or a border gateway protocol Ethernet virtual private network (border gateway protocol ethernet virtual private network, BGP EVPN) packet.

In some implementations, the first parameter set includes the offset and the first priority, and the method further includes: The first network device sends a second BGP packet to the second network device. The second BGP packet includes the first priority and the feature of the data flow. The first network device sends a third BGP packet to the second network device. The third BGP packet includes the offset and the feature of the data flow.

In some implementations, that the first network device sends the first parameter set to a second network device includes: The first network device sends an interior gateway protocol (interior gateway protocol, IGP) packet to the second network device. The IGP packet includes a type-length-value (type-length-value, TLV), the TLV includes a second type, the first identifier, and the feature of the data flow, and the second type indicates packing.

In some implementations, after the first network device sends the first parameter set to the second network device, the method further includes: The first network device receives a first data packet from the second network device. The first data packet includes the feature of the data flow. The first network device obtains the first identifier based on the first data packet and the feature of the data flow. The first network device obtains a second data packet based on the first identifier and the first data packet. The second data packet is a data packet obtained by unpacking the first data packet based on the first identifier. The first network device sends the second data packet.

In some implementations, after the first network device sends the first parameter set to the second network device, the method further includes: The first network device obtains a second parameter set. The second parameter set includes a second priority and the feature of the data flow, and the second priority indicates that the packing function is invalidated. The first network device sends the second parameter set to the second network device.

In some implementations, after the first network device sends the first parameter set to the second network device, the method further includes: The first network device obtains a third parameter set. The third parameter set includes a second identifier and the feature of the data flow, and the second identifier indicates to withdraw packing or disable a packing function. The first network device sends the third parameter set to the second network device.

In some implementations, after the first network device sends the first parameter set to the second network device, the method further includes: The first network device receives a third data packet from the second network device. The third data packet includes the feature of the data flow. If an unpacking function of the first network device is invalidated or the unpacking function of the first network device is disabled, the first network device sends, based on the third data packet and the feature of the data flow, the third data packet to a third network device that is configured for unpacking and that is included in an unpacking group to which the first network device belongs.

In some implementations, the first parameter set further includes at least one of an internet protocol (internet protocol, IP) address of the first network device or a third identifier. The IP address is used to establish an encryption tunnel, and the third identifier indicates an encryption algorithm.

In some implementations, after the first network device sends the first parameter set to the second network device, the method further includes: The first network device receives a fourth data packet from the second network device through the encryption tunnel. The fourth data packet includes the feature of the data flow. The first network device obtains the first identifier and the third identifier based on the fourth data packet and the feature of the data flow. The first network device obtains a fifth data packet based on the first identifier, the third identifier, and the fourth data packet. The fifth data packet is a data packet obtained by unpacking and decrypting the fourth data packet based on the first identifier and the third identifier. The first network device sends the fifth data packet.

In some implementations, the first parameter set further includes at least one of a fourth identifier or a fifth identifier. The fourth identifier indicates an authentication algorithm, and the fifth identifier indicates a key exchange algorithm.

In some implementations, the first parameter set further includes a bidirectional forwarding detection (bidirectional forwarding detection, BFD) identifier. The BFD identifier indicates to establish a BFD session between the first network device and the second network device.

In some implementations, the first parameter set further includes a sixth identifier. The sixth identifier indicates a role of the first network device in an active/standby scenario or a role of the first network device in a load balancing scenario.

In some implementations, the feature of the data flow includes a destination IP address.

In some implementations, the feature of the data flow further includes at least one of a source IP address, a source address prefix, a destination address prefix, a source port number, a destination port number, a protocol number, a flow identifier, an application identifier, or a user identifier.

According to a second aspect, a parameter advertisement method is provided. The method includes: A second network device receives a first parameter set from a first network device. The first parameter set includes a first identifier and a feature of a data flow, and the first identifier indicates a compression algorithm.

In some implementations, the first parameter set further includes at least one of an offset or a first priority. The offset indicates at least one of a packing start location or a packing end location, and the first priority indicates that a packing function is validated.

In some implementations, after the second network device receives the first parameter set from the first network device, the method further includes: The second network device obtains a second data packet. The second data packet includes the feature of the data flow. The second network device obtains the first identifier based on the second data packet and the feature of the data flow. The second network device obtains a first data packet based on the first identifier and the second data packet. The first data packet is a data packet obtained by packing the second data packet based on the first identifier. The second network device sends the first data packet to the first network device.

In some implementations, the method further includes: The second network device receives a second parameter set from the first network device. The second parameter set includes a second priority and the feature of the data flow, and the second priority indicates that the packing function is invalidated.

In some implementations, after the second network device receives the second parameter set from the first network device, the method further includes: The second network device obtains a third data packet. The third data packet includes the feature of the data flow. The second network device obtains the second priority based on the third data packet and the feature of the data flow. The second network device sends the third data packet to the first network device based on the second priority.

In some implementations, the first parameter set includes the first priority, and the method further includes: The second network device receives a second parameter set from a third network device. The second parameter set includes the feature of the data flow and a second priority, and the second priority indicates that the packing function is invalidated.

In some implementations, after the second network device receives the second parameter set from the third network device, the method further includes: The second network device obtains a second data packet. The second data packet includes the feature of the data flow. The second network device obtains the first priority, the second priority, and the first identifier based on the second data packet and the feature of the data flow. When the first priority is higher than the second priority, the second network device obtains a first data packet based on the first identifier and the second data packet. The first data packet is a data packet obtained by packing the second data packet based on the first identifier. The second network device sends the first data packet to the first network device.

In some implementations, the method further includes: The second network device receives a third parameter set from the first network device. The third parameter set includes the feature of the data flow and a second identifier, and the second identifier indicates to withdraw packing or disable a packing function. The second network device deletes the feature of the data flow or disables the packing function of the second network device, based on the second identifier.

In some implementations, the first parameter set further includes an IP address of the first network device, and the method further includes: The second network device obtains a first negotiation packet based on the IP address of the first network device. The first negotiation packet is used to negotiate to establish an encryption tunnel. The second network device sends the first negotiation packet to the first network device.

In some implementations, the first parameter set further includes a third identifier, the third identifier indicates an encryption algorithm, and the method further includes: The second network device obtains a fifth data packet. The fifth data packet includes the feature of the data flow. The second network device obtains the first identifier and the third identifier based on the fifth data packet and the feature of the data flow. The second network device obtains a fourth data packet based on the first identifier, the third identifier, and the fifth data packet. The fourth data packet is a data packet obtained by packing and encrypting the fifth data packet based on the first identifier and the third identifier. The second network device sends the fourth data packet to the first network device through the encryption tunnel.

In some implementations, the first parameter set further includes a fourth identifier, the fourth identifier indicates an authentication algorithm, and the method further includes: The second network device obtains a sixth data packet. The sixth data packet includes an identifier of the data flow. The second network device obtains the first identifier and the fourth identifier based on the sixth data packet and the feature of the data flow. The second network device obtains a seventh data packet based on the first identifier, the fourth identifier, and the sixth data packet. The seventh data packet includes a signature obtained based on the authentication algorithm, and the seventh data packet is a data packet obtained by packing the sixth data packet based on the first identifier. The second network device sends the seventh data packet to the first network device through the encryption tunnel.

In some implementations, the first parameter set further includes a fifth identifier, the fifth identifier indicates a key exchange algorithm, the key exchange algorithm is used to obtain an encryption key, and the method further includes: The second network device obtains an eighth data packet. The eighth data packet includes the feature of the data flow. The second network device obtains the first identifier and the fifth identifier based on the eighth data packet and the feature of the data flow. The second network device obtains a ninth data packet based on the first identifier, the fifth identifier, and the eighth data packet. The ninth data packet is a data packet obtained by packing and encrypting the eighth data packet based on the first identifier and the fifth identifier. The second network device sends the ninth data packet to the first network device through the encryption tunnel.

In some implementations, the first parameter set further includes a BFD identifier, the BFD identifier indicates to establish a BFD session, and the method further includes: The second network device obtains a second negotiation packet based on the BFD identifier. The second negotiation packet is used to negotiate to establish the BFD session. The second network device sends the second negotiation packet to the first network device.

In some implementations, after the second network device sends the second negotiation packet to the first network device, the method further includes: The second network device obtains a tenth data packet. The tenth data packet includes the feature of the data flow. The second network device obtains the first identifier based on the tenth data packet and the feature of the data flow. The second network device obtains an eleventh data packet based on the first identifier and the tenth data packet. The eleventh data packet is a data packet obtained by packing the tenth data packet based on the first identifier. When the BFD session between the second network device and the first network device is in a down (down) state, the second network device sends the eleventh data packet to a third network device that belongs to a same unpacking group as the first network device.

In some implementations, the first parameter set further includes a sixth identifier. The sixth identifier indicates a role of the first network device in an active/standby scenario or a role of the first network device in a load balancing scenario.

According to a third aspect, a parameter advertisement apparatus is provided. The parameter advertisement apparatus is disposed in a first network device, and has a function of implementing any one of the first aspect or the optional manners of the first aspect. The parameter advertisement apparatus includes at least one unit. The at least one unit is configured to implement the method according to any one of the first aspect or the optional manners of the first aspect. In some implementations, the unit in the parameter advertisement apparatus is implemented by using software, and the unit in the parameter advertisement apparatus is a program module. In some other implementations, the unit in the parameter advertisement apparatus is implemented by using hardware or firmware. For specific details about the parameter advertisement apparatus provided in the third aspect, refer to any one of the first aspect or the optional manners of the first aspect. Details are not described herein again.

According to a fourth aspect, a parameter advertisement apparatus is provided. The parameter advertisement apparatus is disposed in a second network device, and has a function of implementing any one of the second aspect or the optional manners of the second aspect. The parameter advertisement apparatus includes at least one unit. The at least one unit is configured to implement the method according to any one of the second aspect or the optional manners of the second aspect. In some implementations, the unit in the parameter advertisement apparatus is implemented by using software, and the unit in the parameter advertisement apparatus is a program module. In some other implementations, the unit in the parameter advertisement apparatus is implemented by using hardware or firmware. For specific details about the parameter advertisement apparatus provided in the fourth aspect, refer to any one of the second aspect or the optional manners of the second aspect. Details are not described herein again.

According to a fifth aspect, a network device is provided. The network device includes a processor and a network interface. The processor is configured to execute instructions, so that the network device is enabled to perform the method according to any one of the first aspect or the optional manners of the first aspect. The network interface is configured to send or receive a packet. For details about the network device according to the fifth aspect, refer to any one of the first aspect or the optional manners of the first aspect. Details are not described herein again.

According to a sixth aspect, a network device is provided. The network device includes a processor and a network interface. The processor is configured to execute instructions, so that the network device is enabled to perform the method according to any one of the second aspect or the optional manners of the second aspect. The network interface is configured to send or receive a packet. For details about the network device according to the sixth aspect, refer to any one of the second aspect or the optional manners of the second aspect. Details are not described herein again.

According to a seventh aspect, a computer-readable storage medium is provided. The storage medium stores at least one instruction. When the instruction is run on a computer, the computer is enabled to perform the method according to any one of the first aspect or the optional manners of the first aspect.

According to an eighth aspect, a computer-readable storage medium is provided. The storage medium stores at least one instruction. When the instruction is run on a computer, the computer is enabled to perform the method according to any one of the second aspect or the optional manners of the second aspect.

According to a ninth aspect, a computer program product is provided. The computer program product includes one or more computer program instructions. When the computer program instructions are loaded and run by a computer, the computer is enabled to perform the method according to any one of the first aspect or the optional manners of the first aspect.

According to a tenth aspect, a computer program product is provided. The computer program product includes one or more computer program instructions. When the computer program instructions are loaded and run by a computer, the computer is enabled to perform the method according to any one of the second aspect or the optional manners of the second aspect.

According to an eleventh aspect, a chip is provided, including a memory and a processor. The memory is configured to store computer instructions. The processor is configured to invoke the computer instructions from the memory and run the computer instructions, to perform the method according to any one of the first aspect or the possible implementations of the first aspect.

According to a twelfth aspect, a chip is provided, including a memory and a processor. The memory is configured to store computer instructions. The processor is configured to invoke the computer instructions from the memory and run the computer instructions, to perform the method according to any one of the second aspect or the optional implementations of the second aspect.

According to a thirteenth aspect, a network system is provided. The network system includes the parameter advertisement apparatus according to any one of the first aspect or the optional manners of the first aspect and the parameter advertisement apparatus according to any one of the second aspect or the optional manners of the second aspect.

### BRIEF DESCRIPTION OF DRAWINGS

FIG. 1 is a diagram of an application scenario according to an embodiment of this application;
FIG. 2 is a diagram of another application scenario according to an embodiment of this application;
FIG. 3 is a diagram of another application scenario according to an embodiment of this application;
FIG. 4 is a diagram of another application scenario according to an embodiment of this application;
FIG. 5 is a diagram of another application scenario according to an embodiment of this application;
FIG. 6 is a flowchart of a parameter advertisement method according to an embodiment of this application;
FIG. 7 is a diagram of a packet format according to an embodiment of this application;
FIG. 8 is a diagram of another packet format according to an embodiment of this application;
FIG. 9 is a diagram of another packet format according to an embodiment of this application;
FIG. 10 is a flowchart of a packet forwarding method according to an embodiment of this application;
FIG. 11 is a diagram of an internal structure of a device according to an embodiment of this application;
FIG. 12 is a flowchart of a packet forwarding method according to an embodiment of this application;
FIG. 13 is a diagram of an unpacking end redundancy backup scenario according to an embodiment of this application;
FIG. 14 is a flowchart of a parameter advertisement method according to an embodiment of this application;
FIG. 15 is a diagram of an unpacking end redundancy backup scenario according to an embodiment of this application;
FIG. 16 is a flowchart of a packet forwarding method according to an embodiment of this application;
FIG. 17 is a flowchart of a packet forwarding method according to an embodiment of this application;
FIG. 18 is a diagram of another unpacking end redundancy backup scenario according to an embodiment of this application;
FIG. 19 is a diagram of another unpacking end redundancy backup scenario according to an embodiment of this application;
FIG. 20 is a diagram of another unpacking end redundancy backup scenario according to an embodiment of this application;
FIG. 21 is a diagram of another unpacking end redundancy backup scenario according to an embodiment of this application;
FIG. 22 is a diagram of another packet format according to an embodiment of this application;
FIG. 23 is a diagram of another packet format according to an embodiment of this application;
FIG. 24 is a diagram of another packet format according to an embodiment of this application;
FIG. 25 is a diagram of another packet format according to an embodiment of this application;
FIG. 26 is a diagram of another packet format according to an embodiment of this application;
FIG. 27 is a flowchart of a parameter advertisement method according to an embodiment of this application;
FIG. 28 is a flowchart of a parameter advertisement method according to an embodiment of this application;
FIG. 29 is a flowchart of a parameter advertisement method according to an embodiment of this application;
FIG. 30 is a flowchart of a parameter advertisement method according to an embodiment of this application;
FIG. 31 is a flowchart of a parameter advertisement method according to an embodiment of this application;
FIG. 32 is a diagram of an internal structure of a device according to an embodiment of this application;
FIG. 33 is a diagram of a structure of a parameter advertisement apparatus 800 according to an embodiment of this application;
FIG. 34 is a diagram of a structure of a parameter advertisement apparatus 810 according to an embodiment of this application; and
FIG. 35 is a diagram of a structure of a network device according to an embodiment of this application.

### DESCRIPTION OF EMBODIMENTS

To make the foregoing objectives, features, and advantages of this application clearer and more comprehensible, the following describes embodiments of this application in more detail with reference to the accompanying drawings and specific implementations.

To implement data packing, a feature of a data flow that needs to be packed and a series of packing-related parameters usually need to be manually configured on each of a packing end and an unpacking end. Consequently, configuration complexity is excessively high, and configuration operations are excessively complex. Based on some embodiments of this application, the unpacking end advertises the packing end of the feature of the data flow that needs to be packed and an identifier of a compression algorithm, so that the feature of the data flow and the identifier of the compression algorithm are automatically transferred from the unpacking end to the packing end. Therefore, the packing end can determine, based on the feature of the received data flow and the identifier of the compression algorithm, the data flow that needs to be packed and the compression algorithm that needs to be used, so that the packing end can pack the specified data flow by using the specified compression algorithm. In addition, a process in which the feature of the data flow and the identifier of the compression algorithm are manually configured at the packing end is avoided. Therefore, configuration complexity at the packing end is reduced.

In embodiments of this application, in a full mesh (full mesh) scenario, an effect of reducing the configuration complexity is more significant. Full mesh is also referred as multipoint-to-multipoint, and refers to a network in which a plurality of devices exist and each device is connected to all the other devices. If a feature of a data flow and an identifier of a compression algorithm are configured for each of a head node and a tail node of each data flow in a full mesh network, when the network includes n devices, each device needs to be configured with n sets of parameters, that is, a total of n*n sets of parameters need to be configured for a compression algorithm of the device and compression algorithms corresponding to the other n-1 devices. As a result, the configuration complexity increases rapidly as a quantity of nodes increases. This is almost infeasible. Consequently, an application scenario is limited, and large-scale networking cannot be supported. Based on some embodiments of this application, when the full mesh network includes n devices, each device separately advertises a feature of a data flow that needs to be packed and an identifier of a compression algorithm to the other n-1 devices other than the local device, so that each device automatically learns a compression algorithm that should be used when transmitting a data flow to any other device. Therefore, the compression algorithms corresponding to the other n-1 devices do not need to be configured. This greatly reduces the configuration complexity, meets a requirement of the full mesh network, and helps support the large-scale networking.

For example, in a financial scenario, there are a plurality of networks such as a bank headquarters, a bank branch, and a data center. The bank headquarters and the bank branch, the bank branch and a bank branch, the bank headquarters and the data center, and the bank branch and the data center need to communicate with each other. In this case, devices in each network need to be connected to devices in all other networks to form a full mesh network, so as to perform transmission of data flows for access between different networks. Based on embodiments of this application, after a compression algorithm at a local end and a feature of a data flow are configured for a device in each network, the device is supported in notifying a device in another network of the compression algorithm at the local end and the feature of the data flow, to automatically generate a full mesh network, so as to meet a networking requirement of a bank in the financial scenario.

The full mesh scenario listed above is only an optional scenario. Embodiments of this application may also be applied to a point-to-point scenario, for example, a scenario in which a network includes only two devices. One device advertises the other device of a feature of a data flow that needs to be packed and an identifier of a compression algorithm, to reduce configuration complexity at one device. Certainly, embodiments of this application may also be applied to other networking scenarios other than the full mesh scenario and the point-to-point scenario. Examples are not listed one by one herein.

The following further describes application scenarios of this application by using examples with reference to the figures.

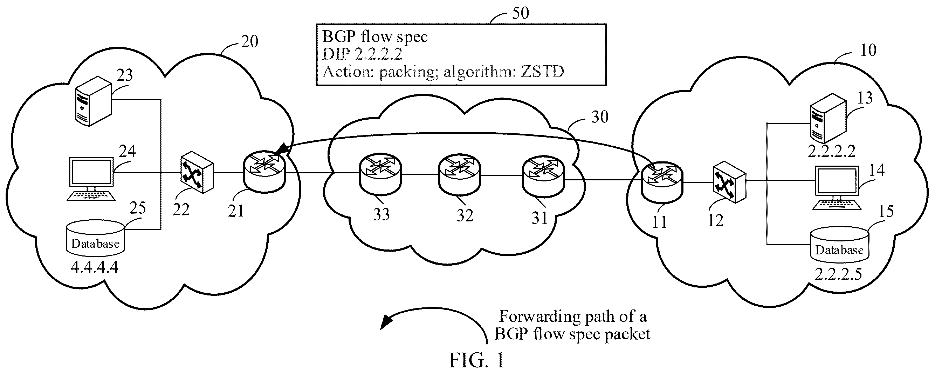

FIG. 1 is a diagram of an application scenario according to an embodiment of this application.

A network 20 is, for example, a local area network. For example, the network 20 is a data center. For example, the network 20 is a production center or a disaster recovery center. For another example, the network 20 is a campus network. For example, the network 20 is an enterprise network or a school network. For example, in a financial scenario, the network 20 is a bank headquarters network or a bank branch network. A router 21, a switch 22, a server 23, a terminal 24, and a storage device 25 are deployed in the network 20. The router 21 is located at a border of the network 20. The router 21 is a gateway of the network 20, or is referred to as an egress node or an ingress node of the network 20. The router 21 communicates with the server 23, the terminal 24, and the storage device 25 via the switch 22. The network 20 may be a customer premises network, and the router 21 is a customer edge (customer edge, CE) device.

The network 30 is, for example, a wide area network, for example, a backbone network. The network 30 includes a router 33, a router 32, and a router 31. The router 33 and the router 31 are located at a border of the network 30, and the router 33 and the router 31 are egress nodes or ingress nodes of the network 30. The router 31 is located inside the network 30, and the router 31 is configured to forward traffic between the router 33 and the router 31. The router 33 and the router 31 are, for example, provider edge (provider edge, PE) devices, and the router 32 is, for example, a provider (provider, P) device.

A network 10 is, for example, a local area network. For example, the network 10 is a data center. For example, the network 10 is a production center or a disaster recovery center. For another example, the network 10 is a campus network. For example, the network 10 is an enterprise network or a school network. For example, in a financial scenario, the network 10 is a bank headquarters network or a bank branch network. A router 11, a switch 12, a server 13, a terminal 14, and a storage device 15 are deployed in the network 10. The router 11 is located at a border of the network 10. The router 11 is a gateway of the network 10, or is referred to as an egress node or an ingress node of the network 10. The router 11 communicates with the server 13, the terminal 14, and the storage device 15 via the switch 12. The network 10 is, for example, a customer premises network, and the router 11 is a CE device in the customer premises network.

In an example scenario, a data flow is transmitted between an enterprise network and a data center. For example, in a scenario of patch pushing, antivirus database pushing, application downloading, email transmission, or the like, the network 20 is the enterprise network, the network 10 is the data center, and an email generated by the terminal 24 in the network 20, an antivirus database stored in the storage device 25, and an email or application software stored in the server 23 need to be transmitted to the server 13 in the network 10. In this scenario, a destination IP address of a to-be-packed data flow is configured as 2.2.2.2: an internet protocol (internet protocol, IP) address of the server 13, on the router 11, and an identifier of a compression algorithm ZSTD corresponding to the data flow is configured for the router 11.

At a control plane parameter advertisement phase, as shown in FIG. 1, the router 11 sends a border gateway protocol (border gateway protocol, BGP) flow specification (flow specification, flow spec) packet 50 to the router 21 based on the configured destination IP address and the identifier of the compression algorithm. A network layer reachability information (network layer reachability information, NLRI) field in the BGP flow spec packet 50 includes the destination IP address 2.2.2.2 of the data flow, a type in an extended community attribute (extended community) in the BGP flow spec packet 50 indicates that an action is packing, and a value in the extended community attribute includes an identifier of the compression algorithm Zstandard (ZSTD). In other words, the router 11 advertises the router 21 that a packet with the destination IP address 2.2.2.2 needs to be packed, and a compression algorithm used during packing is the compression algorithm ZSTD.

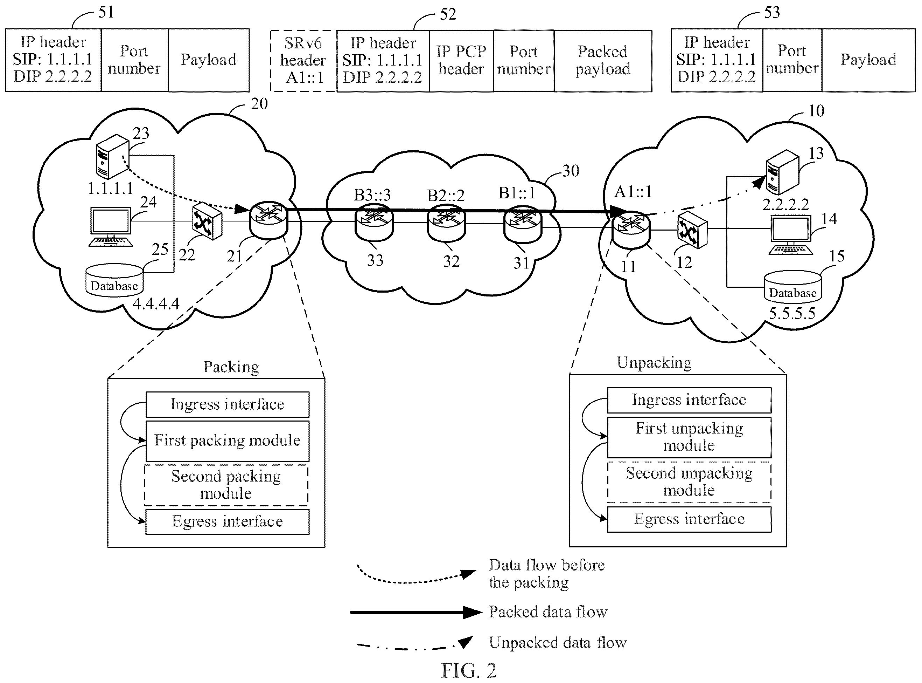

At a data plane forwarding phase, refer to FIG. 2. The server 23 sends a data packet 51. A source IP address in the data packet 51 is an IP address 1.1.1.1 of the server 23, and a destination IP address is an IP address 2.2.2.2 of the server 13. After an ingress interface of the router 21 receives the data packet 51, based on the destination IP address 2.2.2.2 of the data packet 51, the router 21 packs a payload of a data packet 5251 by using the compression algorithm ZSTD via a packing module 1, and sends a data packet 52 including a packed payload to the router 33 through an egress interface. The data packet 52 including the packed payload is sequentially forwarded by the router 33, the router 32, and the router 31, to traverse the network 30 and reach the router 31. The router 31 receives the packed data packet 52 through an ingress interface, and unpacks, based on the IP address 2.2.2.2 of the packed data packet 52, the data packet 52 by using the compression algorithm ZSTD via an unpacking module 1, to obtain an unpacked data packet 53. The router 31 forwards the unpacked packet 53 to the server 13 through an egress interface based on the destination IP address 2.2.2.2 of the unpacked data packet 53.

In the foregoing scenario, the router 21 can automatically determine, based on the BGP flow spec packet 50 sent by the router 11, that the data flow for the destination IP address 2.2.2.2 needs to be packed, and the compression algorithm used during packing is the compression algorithm ZSTD. In addition, a correspondence between the identifier of the compression algorithm ZSTD and the destination IP address 2.2.2.2 does not need to be configured on the router 21. Therefore, configuration complexity at the router 21 is reduced. In addition, because the payload of the data packet is packed before being forwarded from the network 20, egress bandwidth of the network 20 is saved. Because the data packet enters the network 10 in a packed form, ingress bandwidth of the network 10 is saved.

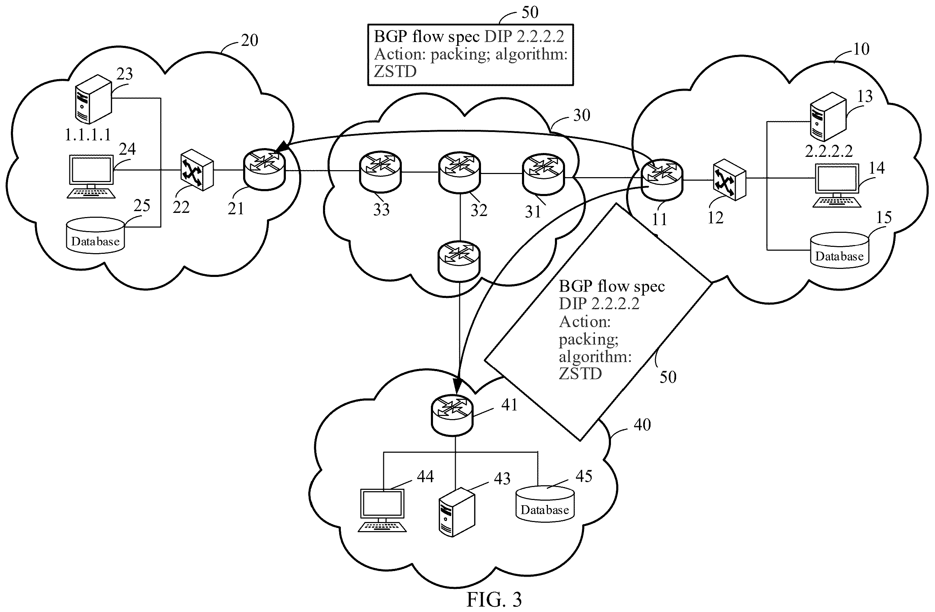

In another example scenario, for a full mesh network, a scenario in which devices in three networks access each other is used as an example. As shown in FIG. 3, not only the network 20 and the network 10 are deployed, but also a network 40 is deployed. A router 41, a server 43, a terminal 44, and a storage device 45 are deployed in the network 40. The router 11 not only sends the BGP flow spec packet 50 to the router 21, but also sends the BGP flow spec packet 50 to the router 41. Both the router 21 and the router 41 can automatically pack, based on the destination IP address and the identifier of the compression algorithm ZSTD that are carried in the BGP flow spec packet 50, a data flow sent to the storage device 45 by using the compression algorithm ZSTD. This is equivalent to that one device, for example, the router 11, controls two remote devices such as the router 21 and the router 41 to pack a specified data flow by using a specified compression algorithm, or automatically generate a packing network. This significantly reduces overall configuration complexity at the networks.

In another example scenario, a data flow is transmitted between data centers. For example, in a scenario of remote storage array disaster recovery backup, remote database backup, remote file replication, or the like, the network 20 is a data center, and the network 10 is another data center, data of the storage device 25 in the network 20 needs to be backed up to the storage device 15 in the network 10. In this scenario, the destination IP address of the to-be-packed data flow configured on the router 11 is replaced with an IP address 2.2.2.5 of the storage device 15, and the destination IP address carried in the NLRI field in the BGP flow spec packet 50 sent by the router 11 is replaced with the IP address 2.2.2.5 of the storage device 15. The source IP address of the data packet 51 received by the router 21 is replaced with an IP address 4.4.4.4 of the storage device 25, and the destination IP address of the data packet 51 is replaced with the IP address 2.2.2.5 of the storage device 15. The router 21 unpacks the data packet 52 by using the compression algorithm ZSTD based on the destination IP address 2.2.2.5 of the data packet 51. The router 31 unpacks the data packet 52 by using the compression algorithm ZSTD based on the IP address 2.2.2.5 of the packed data packet 52, and forwards an unpacked packet 53 to the storage device 15.

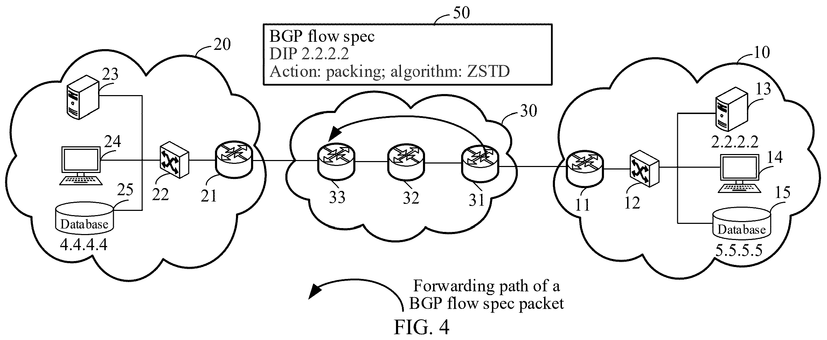

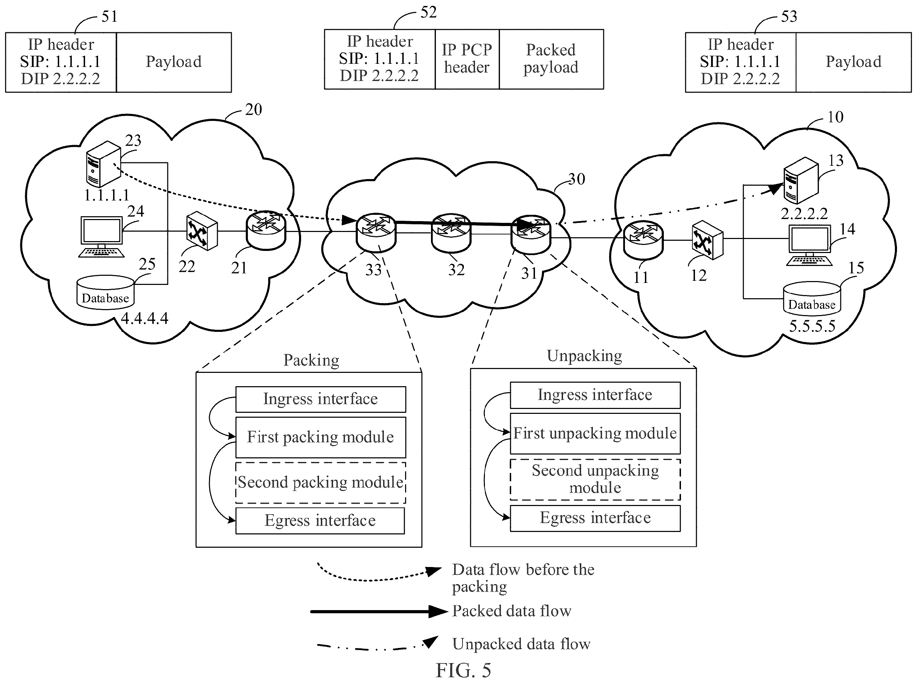

A scenario in which a parameter notifier: an unpacking end like the router 11, is located at an ingress of a local area network, and a parameter receiver: a packing end like the router 21, is located at an egress of another local area network, or a scenario in which both the parameter notifier and the parameter receiver are local area network gateways is only an optional scenario. In some other scenarios, the parameter notifier: the unpacking end, is located at an egress of a wide area network, and the parameter receiver: the packing end, is located at an ingress of the wide area network. For example, both the parameter notifier and the parameter receiver are PE devices in the wide area network. In a scenario shown in FIG. 4, the router 31 is deployed as a parameter notifier: an unpacking end, and the router 33 is deployed as a parameter receiver: a packing end. The destination IP address 2.2.2.2 of the to-be-packed data flow and the identifier of the compression algorithm ZSTD are configured on the router 31. The router 31 sends the BGP flow spec packet 50 to the router 33, so that the router 33 can automatically pack, based on the BGP flow spec packet 50, the data flow for the destination IP address 2.2.2.2 by using the compression algorithm ZSTD. FIG. 5 shows a data packet forwarding procedure based on the parameter advertisement scenario shown in FIG. 4. A difference between FIG. 5 and FIG. 2 lies in that an execution body for packing a data packet is replaced from the router 21 to the router 33, and an execution body for unpacking the data packet is replaced from the router 11 to the router 31.

The foregoing describes, by using FIG. 1 to FIG. 5 as examples, some application scenarios and overall procedures provided in this application. The following further describes a method procedure of this application in detail.

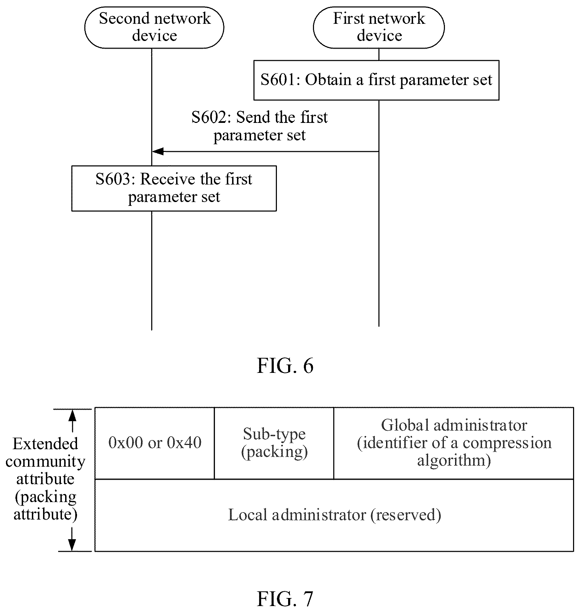

FIG. 6 is a flowchart of a parameter advertisement method according to an embodiment of this application. The method shown in FIG. 6 relates to interaction between devices. For distinguishing and description, a first network device and a second network device are used to distinguish and describe a plurality of different network devices. For roles of the first network device and the second network device, in a parameter advertisement procedure, the role of the first network device is a parameter advertiser, and the role of the second network device is a parameter receiver. The first network device advertises the second network device of a feature of a data flow and an identifier of a compression algorithm, to control the second network device to pack a data packet having the feature by using the compression algorithm indicated by the identifier. In a packet forwarding procedure, the role of the first network device is an unpacking end, and the role of the second network device is a packing end.

For deployment locations of the first network device and the second network device, optionally, the first network device is a gateway of a network in which a destination end device of a data flow is located, and the second network device is a gateway of a network in which a source end device of the data flow is located. For example, with reference to the scenario shown in FIG. 1, the first network device is the router 11, and the second network device is the router 21. Alternatively, the first network device and the second network device are boundary nodes of a wide area network (or a metropolitan area network) through which the data flow passes during forwarding. For example, with reference to the scenario shown in FIG. 4, the first network device is the router 31, and the second network device is the router 33. Certainly, alternatively, the first network device may be a gateway of a network in which the destination end device of the data flow is located, and the second network device may be a boundary node of a wide area network through which the data flow passes during forwarding; or the first network device may be a boundary node of a wide area network through which the data flow passes during forwarding, and the second network device may be a gateway of a network in which the destination end device of the data flow is located.

For product forms of the first network device and the second network device, optionally, the first network device and the second network device are universal hardware entities that support routing and forwarding. For example, the first network device and the second network device are routers, switches, firewalls, or the like. For example, the routers are used for implementation. For example, an unpacking module is disposed inside one router, so that the router supports an unpacking function and serves as the first network device for performing this embodiment; and a packing module is disposed inside the other router, so that the router supports a packing function and serves as the second network device for implementing this embodiment. The unpacking module or the packing module may be implemented by hardware or software. For example, a form of the unpacking module or the packing module is a service board. For example, the unpacking module or the packing module is a service board. Alternatively, a form of the unpacking module or the packing module is a card, the unpacking module is an unpacking card, and the packing module is a packing card. Certainly, the unpacking module or the packing module may alternatively be a processor, a chip, an accelerator, or the like used for packing. In this way, the router supports a built-in packing function, and no additional packing device is needed in a networking topology. Alternatively, the packing module is implemented by a general-purpose central processing unit (central processing unit, CPU) executing program code of a compression algorithm, and the unpacking module is implemented by a CPU executing program code of a decompression algorithm. Alternatively, the first network device is a hardware entity dedicated to unpacking, and the second network device is a hardware entity dedicated to packing.

The method shown in FIG. 6 includes the following step S601 to step S603.

Step S601: A first network device obtains a first parameter set.

The first parameter set includes a first identifier and a feature of a data flow. The first identifier indicates a compression algorithm. The compression algorithm includes but is not limited to a Zstandard (ZSTD) compression algorithm, a Lempel-Ziv 4 (LZ4) compression algorithm, a Lempel-Ziv-Storer-Szymanski (LZSS) compression algorithm, a deflate compression algorithm, a Lempel-Ziv-77 (LZ77) compression algorithm, and a Lempel-Ziv-Renau (LZR) compression algorithm. Certainly, the compression algorithm may alternatively be a compression algorithm based on deep learning, or another type of compression algorithm. Examples are not listed one by one herein. The first identifier may also be referred to as an identifier of the compression algorithm. For example, the first identifier is a name of the compression algorithm or a number allocated to the compression algorithm. The first identifier may alternatively be other information that can identify the compression algorithm. A data form of the first identifier includes a plurality of cases. In a possible implementation, the first identifier is a character string. For example, the first identifier corresponding to the ZSTD compression algorithm is ZSTD, and the first identifier corresponding to the LZ4 compression algorithm is LZ4. In another possible implementation, the first identifier is one digit or a string of digits. For example, the first identifier corresponding to the ZSTD compression algorithm is 1, and the first identifier corresponding to the LZ4 compression algorithm is 2. In some embodiments, the first identifier is a compression algorithm index (compression algorithms index, CPI). When a value of the CPI is 1, it indicates a dedicated compression algorithm defined by a vendor; when a value of the CPI is 2, it indicates the deflate compression algorithm; or when a value of the CPI is 3, it indicates the LZSS compression algorithm. Because the compression algorithm indicated by the value of the CPI has been defined in a related standard in the RFC, the CPI is used as the first identifier, so that an existing protocol can be reused, thereby further reducing implementation complexity.

A function of notifying the first identifier is to specify an execution action, that is, specify a compression algorithm to be used for packing or unpacking. Specifically, by obtaining the identifier of the compression algorithm, the first network device can determine a compression algorithm that should be used for unpacking when receiving a specified data flow, that is, a data flow having the foregoing feature. The first network device sends the identifier of the compression algorithm to the second network device, so that the second network device can determine, based on the identifier of the compression algorithm, the compression algorithm that should be used for unpacking when forwarding the specified data flow, that is, the data flow having the foregoing feature, to avoid a process of configuring the identifier of the compression algorithm on an unpacking end: the second network device. Configuration complexity at the unpacking end: the second network device, is reduced. For example, that the first network device advertises the value 3 of the CPI and the feature of the data flow to the second network device means that the second network device is indicated to pack, by using the LZSS compression algorithm, the data flow having the feature, and that the first network device advertises the value 2 of the CPI and the feature of the data flow to the second network device that the second network device is indicated to pack, by using the deflate compression algorithm, the data flow having the feature.

For a same data flow, the first identifier obtained by the first network device is consistent with the first identifier advertised to the second network device, so that compression algorithms configured at the packing end and the unpacking end for the same specified data flow are consistent, thereby reducing a risk of traffic interruption caused because the unpacking end cannot perform unpacking when a packed data flow reaches the unpacking end but a compression algorithm configured on the unpacking end for the data flow is different from a compression algorithm used by the packing end to pack the data flow.

A function of notifying the feature of the data flow is to define a match item, that is, specify packing or unpacking is performed on the data flow. Specifically, the first network device can determine, by obtaining the feature of the data flow, whether a data packet needs to be unpacked when the data packet is received. For example, when the data packet has the feature of the data flow, the data packet needs to be unpacked; or when the data packet does not have the feature of the data flow, the data packet does not need to be unpacked. The first network device sends the feature of the data flow to the second network device, so that the second network device can determine, based on the feature of the data flow, whether a data packet needs to be packed when forwarding the data packet. For example, when the data packet has the feature of the data flow, the data packet needs to be packed; or when the data packet does not have the feature of the data flow, the data packet does not need to be packed. The feature of the data flow is sent to the second network device, so that a process of configuring the feature of the data flow on the unpacking end: the second network device, is avoided. Configuration complexity at the unpacking end: the second network device, is reduced.

In some implementations, the feature of the data flow that is advertised by the first network device includes a destination IP address of the data flow. The destination IP address is used to locate a destination end device of the data flow. For example, the destination IP address is an IP address of a destination server of the data flow. For example, with reference to the scenario shown in FIG. 1, the first network device is the router 11 in FIG. 1, and the destination IP address of the data flow that is advertised by the first network device is an IP address of the server 13, the terminal 14, or the storage device 15. The destination IP address advertised by the first network device is, for example, an internet protocol version 4 (internet protocol version 4, IPv4) address, or an internet protocol version 6 (internet protocol version 6, IPv6) address. The destination IP address advertised by the first network device is, for example, a private network address, or for another example, a public network address.

For example, the router 11 advertises the IP address 2.2.2.2 of the server 13 and the identifier of the compression algorithm ZSTD. By obtaining the IP address and the identifier of the compression algorithm ZSTD, when a destination IP address of a received data flow is the IP address of the server 13, the router 11 can obtain that the data flow needs to be unpacked by using the compression algorithm ZSTD. Because a data packet sent to the network 10 needs to pass through the router 11, the data packet in a packed format is unpacked before entering the network 10, to reduce a risk of a service processing failure caused when the data packet in the packed format reaches the server 13 but the server 13 does not support processing of the data packet in the packed format. The router 11 sends the IP address 2.2.2.2 of the server 13 and the compression algorithm ZSTD to the router 21, that is, specifies that the match item includes the destination IP address, so that when the destination IP address of the received data flow is the IP address 2.2.2.2 of the server 13, the router 21 determines that the data flow needs to be packed, and when the destination IP address of the received data flow is not the IP address 2.2.2.2 of the server 13, the router 21 determines that the data flow does not need to be packed, to reduce a possibility that a data flow sent to another device other than the server 13 is packed because the data flow matches a flow feature. This further reduces a risk of traffic interruption caused because the another device is not sure that the data flow needs to be unpacked when the packed data flow reaches the another device other than the router 11, for example, the router 41 in FIG. 3.

In some implementations, the feature of the data flow that is advertised by the first network device includes a destination address prefix. The destination address prefix is an address range, including a plurality of IP addresses. For example, the destination address prefix is first n bits of the destination IP address, and the destination address prefix is used to locate a network in which the destination device of the data flow is located. The scenario shown in FIG. 1 is used as an example. The destination address prefix advertised by the router 11 is an IP address segment of the network 10, or the destination address prefix advertised by the router 11 includes a common prefix of an IP address of the server 13, an IP address of the terminal 14, and an IP address of the storage device 15. The router 11 sends the destination address prefix to the router 21, so that the router 21 can pack a data packet when forwarding the data packet to any IP address belonging to the destination address prefix.

In some implementations, the feature of the data flow that is advertised by the first network device includes a source IP address of the data flow. The source IP address of the data flow is used to locate a source end device of the data flow. For example, with reference to the scenario shown in FIG. 1, the first network device is the router 11 in FIG. 1, and the source IP address of the data flow that is advertised by the first network device is an IP address of the server 23, the terminal 24, or the storage device 25. The source IP address advertised by the first network device is, for example, an IPv4 address, or for another example, an IPv6 address. The source IP address advertised by the first network device is, for example, a private network address, or for another example, a public network address.

The first network device advertises the second network device of the identifier of the compression algorithm together with the source IP address of the data flow, so that the second network device can pack data flows from different sources by using different compression algorithms, to improve scalability and applicability. In an example scenario, in a scenario of transmitting a video flow and a text, considering that a packing ratio of the text is greater than a packing ratio of the video flow, a first compression algorithm is used for the text, and a second compression algorithm is used for the video flow. A packing ratio of the first compression algorithm is greater than a packing ratio of the second compression algorithm. The first network device advertises the second network device of an identifier of the first compression algorithm, an IP address (the foregoing source IP address) of a database node that stores the text, and the identifier of the first compression algorithm, and advertises the second network device of an IP address (the foregoing source IP address) of the video server and an identifier of the second compression algorithm, so that the second network device uses the first compression algorithm for a text flow sent by the database node, and uses the second compression algorithm for a video flow sent by the video server, to use compression algorithms with different packing ratios for data flows with different features.

In some implementations, the feature of the data flow includes a source address prefix. The source address prefix is first n bits of the source IP address, and the source address prefix is used to locate a network in which the source end device of the data flow is located. The scenario shown in FIG. 1 is used as an example. The source address prefix advertised by the router 11 is an IP address segment of the network 20, and the source address prefix advertised by the router 11 is a common prefix of an IP address of the server 23, an IP address of the terminal 24, and an IP address of the storage device 25. The router 11 sends the source address prefix to the router 21, so that the router 21 can pack a data packet when receiving the data packet from any IP address in the source address prefix. The source address prefix is a source IPv4 prefix or a source IPv6 prefix.

In some implementations, the feature of the data flow that is advertised by the first network device further includes a destination port number. The destination port number identifies an application program of the destination end device of the data flow. The scenario shown in FIG. 1 is used as an example. The destination port number is, for example, a port number of a service application running on the server 13. The destination port number is, for example, a destination port number of a transmission control protocol (transmission control protocol, TCP), or for another example, a destination port number of a user datagram protocol (user datagram protocol, UDP), or may be certainly a destination port number of another transport layer protocol. The first network device sends the first identifier together with the destination port number of the data flow to the second network device, that is, specifies that the match item includes the destination port number, so that when a destination port number of the received data packet matches the destination port number advertised by the first network device, the second network device can determine to perform packing by using the compression algorithm indicated by the first identifier, so as to specify that a specific compression algorithm is used to pack a data flow reaching a specific service application.

In some implementations, the feature of the data flow that is advertised by the first network device further includes a source port number. The source port number identifies an application program of the source end device of the data flow. The scenario shown in FIG. 1 is used as an example. The destination port number is, for example, a port number of a service application running on the server 23. The source port number is, for example, a source port number of the TCP, or a source port number of the UDP, or may be certainly a source port number of the another transport layer protocol. The first network device sends the source port number of the data flow and the first identifier together to the second network device, equivalent to specifying that the match item includes the source port number, and can specify that a specific compression algorithm is used to pack a data flow reaching a specific service application.

In some implementations, the feature of the data flow that is advertised by the first network device further includes a protocol number of the data flow. The protocol number is, for example, a protocol number of an internet control message protocol (internet control message protocol, ICMP), a protocol number of the TCP, or a protocol number of the UDP. The first network device sends the first identifier and the protocol number to the second network device, to specify that a specific compression algorithm is used to pack a data flow of a specific protocol.

In some implementations, the feature of the data flow that is advertised by the first network device further includes an application identifier. The application identifier is, for example, an identifier of an application that generates the data flow. The first network device sends the first identifier and the application identifier to the second network device, to specify that a specific compression algorithm is used to pack a data flow generated by a specific application.

In some implementations, the feature of the data flow that is advertised by the first network device further includes a user identifier. The user identifier is, for example, a user account used to log in to a destination device of the data flow. The first network device sends the first identifier and the user identifier to the second network device, to specify that a specific compression algorithm is used to pack a data flow sent to a specific user.

In some implementations, the feature of the data flow further includes a flow identifier. The flow identifier identifies the data flow. For example, the flow identifier is a set of a plurality of data flow features listed above. For another example, the flow identifier is a flow label (flow label). For example, the flow identifier is a 5-tuple, that is, the source IP address, the destination IP address, the source port number, the destination port number, and the protocol number. For another example, the flow identifier is a 3-tuple, that is, the destination IP address, the destination port number, and the protocol number.

The various data flow features listed above may exist independently, or may be randomly combined. Various combinations of the data flow features are listed above to provide abundant match conditions, so that the data flow can be packed in a more targeted manner.

In some embodiments, the feature of the data flow that is advertised by the first network device includes at least the destination IP address, and further includes at least one of the source IP address, the source address prefix, the destination address prefix, the source port number, the destination port number, the protocol number, the flow identifier, the application identifier, or the user identifier. Alternatively, the feature of the data flow that is advertised by the first network device does not include the destination IP address, but includes a next-hop IP address. The next-hop IP address is an IP address of the first network device. In other words, the destination IP address of the data flow is not specified, but a next hop of the data flow is specified as the first network device. In this manner, a risk that a packed data flow cannot be unpacked because the packed data flow is not forwarded to the first network device is reduced.

In some implementations, the first parameter set advertised by the first network device further includes an offset. The offset may also be referred to as a packing offset format or an offset of a payload. For example, the offset indicates a packing start location. The first network device sends the offset to the second network device, to support the second network device in starting the packing from the specified location, to further improve flexibility. For example, the offset is a quantity of bytes or a quantity of bits that are offset by the start location of the packing relative to a port number field. For example, the offset is M. The first network device sends the offset M to the second network device, to support the second network device in starting the packing after an offset of M bytes from the port number. For example, it is considered that the source port number occupies 2 bytes, the destination port number occupies 2 bytes, a total length of the source port number and the destination port number is 4 bytes, and the first network device advertises that the offset (offset) is 4. This means that the two fields: the source port number and the destination port number, are offset during packing. To be specific, the packing is performed by using a 1^{st} field after the destination port number as the start location, and the source port number and the destination port number are not packed, that is, the source port number and the destination port number are forwarded between devices in an unpacked form. Therefore, the devices can perform load balancing based on the port numbers. For example, refer to FIG. 2, the packet 51 before the packing includes a port number and a payload. The router 21 offsets the port number during packing, and packs the payload after the port number, so that a packed packet 52 includes the port number. Therefore, when forwarding the packed packet 52, the router 33, the router 32, and the router 31 can perform load balancing based on the port number in the packet 52. For another example, the offset indicates a packing end location. The first network device sends the offset to the second network device, to support the second network device in ending the packing from the specified location, to further improve flexibility. For example, the offset is a quantity of bytes or a quantity of bits that are offset by the end location of the packing relative to the port number. For example, the offset is N. The first network device sends the offset N to the second network device, to support the second network device in ending the packing after an offset of N bytes from the port number. For another example, the offset indicates the start location and the end location of the packing. The first network device advertises the second network device of the offset, to support the second network device in starting the packing from the specified location and ending the packing at the specified location, to further improve flexibility. The offset is an optional advertisement parameter. In some other embodiments, the first network device does not notify the second network device of the offset. When the offset is not advertised, the second network device uses, for example, a default location as the offset. For example, the first network device starts the packing from a 1^{st} bit after the port number of the data packet.

Optionally, the first network device further advertises the second network device of a first priority. The first priority indicates that a packing function is validated. The first network device advertises the second network device of the first priority, to support the second network device in selecting, based on the priority, whether to pack a specific data flow. For details about how to use the first priority, refer to the following descriptions related to a second priority. Optionally, the first priority and the first identifier are represented by a same parameter. For example, both the first priority and the first identifier are a CPI whose value is non-zero. In other words, the first network device advertises the second network device of the CPI whose value is non-zero, so that the second network device determines that the packing function is effective, and performs the packing by using a compression algorithm corresponding to the CPI. Alternatively, the first priority and the first identifier are represented by different parameters. For example, the first identifier is a CPI, and the first priority is a parameter named priority or weight. In some other embodiments, the first network device further advertises the second network device of a priority of a compression algorithm. For example, different priorities are advertised for different compression algorithms, so that the second network device selects a to-be-used compression algorithm based on the priority.

For how the first network device obtains the feature of the data flow and a packing-related parameter, some manners are used as examples below for description.

### Implementation 1: Delivered by a controller

For example, the controller determines a data flow that needs to be packed. The controller determines a packing-related parameter (for example, a compression algorithm, an offset, or a priority) that needs to be used for the data flow. The controller obtains a feature of the data flow and the packing-related parameter. The controller determines the first network device in devices through which a forwarding path of the data flow passes. The controller sends the feature of the data flow and the packing-related parameter to the first network device. For example, the controller obtains a BGP link-state (BGP link-state, BGP-LS) packet, and the controller sends the BGP-LS packet to the first network device. The BGP-LS packet includes the feature of the data flow and the packing-related parameter.

Implementation 2: The network administrator configures the feature of the data flow and the packing-related parameter on the first network device by using a command line.

Implementation 3: A third-party network management system configures the feature of the data flow and the packing-related parameter for the first network device.

Implementation 4: The first network device receives the feature of the data flow from the destination end device of the data flow. For example, with reference to the scenario shown in FIG. 1, the first network device is the router 11 in FIG. 1, the server 13, the terminal 14, and the storage device 15 separately advertise IP addresses of the devices to the router 11, and the router 11 uses the IP addresses of the server 13, the terminal 14, and the storage device 15 as IP addresses of the to-be-packed data flow.

Step S602: The first network device sends the first parameter set to the second network device.

That the first network device sends the feature of the data flow and the first identifier together to the second network device is equivalent to notifying the second network device of a correspondence between the feature of the data flow and the compression algorithm. To be specific, each data packet that matches the feature needs to be packed by using the compression algorithm indicated by the first identifier.

In a possible implementation, the first network device advertises the first parameter set to the second network device through route advertisement. To be specific, the first network device generates a route advertisement packet, where the route advertisement packet includes the first parameter set, and the first network device sends the route advertisement packet to the second network device. For example, the first network device uses the feature like the destination IP address or the source IP address of the data flow as to-be-advertised routing information, uses the packing-related parameter like the identifier of the compression algorithm or a priority as an attribute of the routing information, and sends the first parameter set to the second network device by advertising the routing information and the routing attribute. The following uses two routing protocols as examples for description.

### Implementation 1: Extended BGP

The first network device obtains a first BGP packet, and the first network device sends the first BGP packet to the second network device. The first BGP packet includes the first parameter set. The first BGP packet is, for example, a BGP update (BGP update) packet. In a possible implementation, the first network device establishes a BGP peer (peer) relationship with the second network device, the first network device serves as a BGP speaker (BGP speaker), the second network device is a BGP peer (BGP peer) of the first network device, and the first network device sends the first BGP packet to the BGP peer, so that the first parameter set is transferred to the second network device through the first BGP packet. Because the BGP supports parameter exchange between different ASs, the first parameter set is sent in an extended BGP manner, to support cross-AS propagation of the first parameter set, and support a scenario in which the packing end and the unpacking end are separately deployed in the different Ass, so as to support transfer of the packed data flow between the different ASs. For example, with reference to the scenario shown in FIG. 1, the network 10 is, for example, an AS 1, the network 20 is, for example, an AS 2, and the network 30 is, for example, an AS 3. After the router 11 establishes the BGP peer relationship with the router 21, the router 11 sends one BGP packet to the router 21. The BGP packet includes an identifier of a compression algorithm and a feature of a data flow, and the BGP packet is forwarded from the AS 1 to the router 21 of the AS 2 via the AS 3. Certainly, a scenario in which a parameter is advertised across ASs is only an optional scenario. In some other embodiments, the parameter may alternatively be transferred based on the BGP in an AS or a wide area network.

In some implementations, the first parameter set is published based on a BGP flow spec. In other words, the first BGP packet sent by the first network device is a BGP flow spec packet. Alternatively, the first parameter set is published based on another type of BGP protocol instead of the BGP flow spec. For example, the first parameter set is published by using a BGP EVPN, or the first parameter set is published by using a border gateway protocol virtual private network (Border Gateway Protocol Virtual Private Network, BGP VPN). In other words, the first BGP packet is a BGP EVPN packet or a BGP VPN packet.

For a location at which the packing-related parameter is carried in the packet, in some embodiments, the packing-related parameter like the first identifier, the offset, or the priority is carried in an extended community attribute field in the BGP packet. For example, FIG. 7 is a diagram of a format of the extended community attribute field according to an embodiment of this application. The extended community attribute shown in FIG. 7 is used to carry the packing-related parameter. The extended community attribute shown in FIG. 7 may also be referred to as a packing attribute. The extended community attribute field includes a sub-type (sub-type) field, a global administrator (global administrator) field, and a local administrator (local administrator) field. The sub-type field may also be referred to as a type low field or a low-order byte of a type field, and the sub-type field indicates a type of an execution action. The global administrator field and the local administrator field are attribute value fields, and are used to carry parameters related to the execution action. In some embodiments of this application, parameters related to different execution actions are advertised by using different extended community attribute fields, and the different execution actions are represented by using different values of the sub-type field. For distinguishing and description, the value of the sub-type field that identifies the packing is referred to as a first type below. For example, the first BGP packet includes a first extended community attribute shown in FIG. 7, and the first extended community attribute includes the sub-type (sub-type) field and the local administrator (local administrator) field. The sub-type field includes the first type. The first type indicates packing. The first type may also be referred to as a data packing sub-type or data-process. The global administrator (global administrator) field includes the first identifier (for example, the CPI). The local administrator field is a reserved field, and is reserved for future extension. For example, with reference to the scenario shown in FIG. 1, the BGP flow spec packet 50 in FIG. 1 includes the extended community attribute shown in FIG. 7. The action in the BGP flow spec packet 50 in FIG. 1: the packing, is represented by using the value of the sub-type of the extended community attribute in FIG. 7. The algorithm in the BGP flow spec packet 50 in FIG. 1: the ZSTD, is represented by using a value of the global administrator field of the extended community attribute in FIG. 7. 0x00 or 0x40 in FIG. 7 is a value of a high-order byte (type high field) of the type field, and 0x00 means that the extended community attribute may be transferred between the ASs. 0x40 indicates that the extended community attribute is transferred within an AS. Certainly, the local administrator field may alternatively include the first identifier, and the global administrator field is reserved as the reserved field. A specific location of the first identifier in the extended community attribute field is not limited in this embodiment.

Various packing-related parameters, such as the offset, the first identifier, or the first priority, may be carried in a same extended community attribute field, or may be carried in different extended community attribute fields. For a manner of carrying the various packing-related parameters in the same extended community attribute field, an example is used for description: The global administrator field and the local administrator field in the extended community attribute field separately carry the first identifier, the offset, and the first priority. For example, the local administrator field in FIG. 7 carries the offset or the priority. For a manner of carrying the various packing-related parameters in the different extended community attribute fields, an example is used for description: A local administrator field in an extended community attribute field carries the first identifier, and a value of a sub-type field in the extended community attribute field indicates the compression algorithm, a local administrator field in another extended community attribute field carries the offset, and a value of a sub-type field in the extended community attribute field indicates a packing offset.

For a location at which the feature of the data flow is carried in the packet, in some embodiments, the feature of the data flow is carried in an NLRI field in the BGP packet, for example, carried in a flow-spec NLRI field in the BGP flow spec packet. For a definition of the flow-spec NLRI field, refer to descriptions in RFC 5575. The following uses 14 cases as examples for description. The 14 cases listed below are equivalent to 14 match items or 14 flow features.

### Case 1: Destination IPv4 address prefix

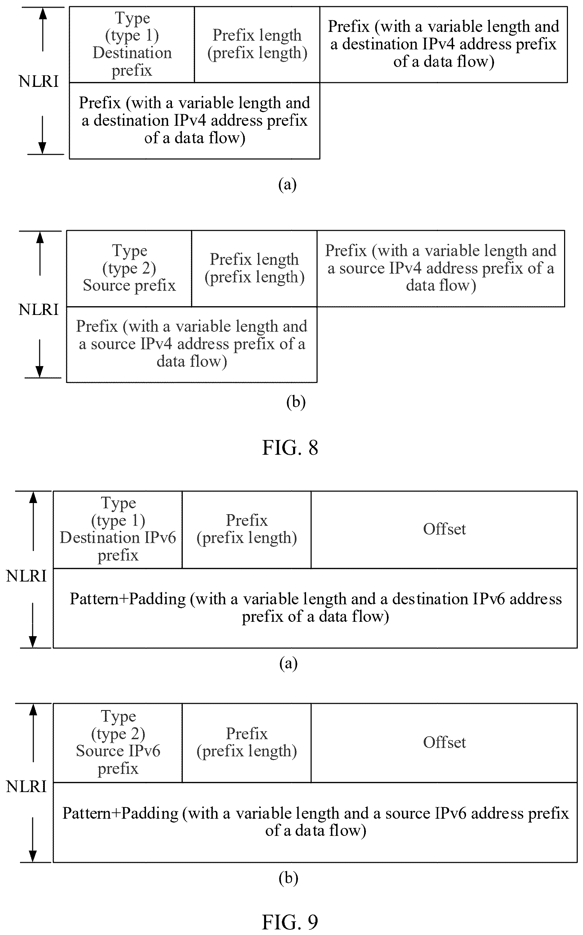

For example, (a) in FIG. 8 is a diagram of a format of the NLRI field according to an embodiment of this application. The NLRI field shown in (a) in FIG. 8 is used to carry the destination IPv4 address prefix of the data flow. The NLRI field includes a type (type) field, a prefix length (prefix length) field, and a prefix field. A value of the type field is type 1, where the type 1 identifies a destination prefix (destination prefix), the prefix field is used to carry the destination IPv4 address prefix of the data flow, and the prefix length field indicates a length of the destination IPv4 address prefix carried in the prefix field. An overall meaning of the field shown in (a) in FIG. 8 is to specify that matching needs to be performed between a destination IPv4 address in the packet and the destination IPv4 address prefix carried in the prefix field.

### Case 2: Source IPv4 address prefix

For example, (b) in FIG. 8 is a diagram of a format of the NLRI field according to an embodiment of this application. The NLRI field shown in (b) in FIG. 8 is used to carry the source IPv4 address prefix of the data flow. The NLRI field includes a type field, a prefix length (prefix length) field, and a prefix field. A value of the type field is type 2, where the type 2 identifies a source prefix (source prefix), the prefix field is used to carry the source IPv4 address prefix of the data flow, and the prefix length field indicates a length of the source IPv4 address prefix carried in the prefix field. An overall meaning of the field shown in (b) in FIG. 8 is to specify that matching needs to be performed between a source IPv4 address in the packet and the source IPv4 address prefix carried in the prefix field.

### Case 3: Destination IPv6 address prefix

For example, (a) in FIG. 9 is a diagram of a format of the NLRI field according to an embodiment of this application. The NLRI field shown in (a) in FIG. 9 is used to carry the destination IPv6 address prefix of the data flow. The NLRI field includes a type field, a prefix length (prefix length) field, an offset (offset) field, a pattern field, and a padding field. A value of the type field is type 1, where the type 1 identifies a destination IPv6 prefix (destination IPv6 prefix), the pattern field and the padding field are used to carry the destination IPv6 address prefix of the data flow, and the prefix length field indicates a length of the destination IPv6 address prefix carried in the pattern field and the padding field. An overall meaning of the field shown in (a) in FIG. 9 is to specify that matching needs to be performed between a destination IPv6 address in the packet and the destination IPv6 address prefix carried in the NLRI field.

### Case 4: Source IPv6 address prefix

For example, (b) in FIG. 9 is a diagram of a format of the NLRI field according to an embodiment of this application. The NLRI field shown in (b) in FIG. 9 is used to carry the source IPv6 address prefix of the data flow. The NLRI field includes a type field, a prefix length (prefix length) field, an offset (offset) field, a pattern (pattern) field, and a padding (padding) field. A value of the type field is type 2, where the type 2 identifies a source IPv6 prefix (source IPv6 prefix), the pattern field and the padding field are used to carry the source IPv6 address prefix of the data flow, and the prefix length field indicates a length of the source IPv6 address prefix carried in the pattern field and the padding field. An overall meaning of the field shown in (b) in FIG. 9 is to specify that matching needs to be performed between a source IPv6 address in the packet and the source IPv6 address prefix carried in the NLRI field.

### Case 5: Agreement number

When a value of the type field in the NLRI field is type 3 (type 3), it indicates that the protocol number (or a protocol type) is specified for matching, and a value field in the NLRI field carries a protocol number of the IPv4 protocol or a protocol number of the IPv6 protocol. Based on this packet format, when receiving the data packet, a receive end performs matching between a protocol number carried in the data packet and the protocol number carried in the value field.

### Case 6: Port number

When a value of the type field in the NLRI field is type 4, it indicates that the port number is specified for matching, and a value field in the NLRI field carries the port number. Based on this packet format, when receiving the data packet, a receive end performs matching between a source port number or a destination port number carried in the data packet and the port number carried in the value field.

### Case 7: Destination port number

When a value of the type field in the NLRI field is type 5, it indicates that a destination port is specified for matching, and a value field in the NLRI field carries the destination port number. Based on this packet format, when receiving the data packet, a receive end performs match between a destination port number carried in the data packet and the destination port number carried in the value field.

### Case 8: Source port number

When a value of the type field in the NLRI field is type 6, it indicates that the source port number is specified for matching, and a value field in the NLRI field carries the source port number. Based on this packet format, when receiving the data packet, a receive end performs matching between a source port number carried in the data packet and the source port number carried in the value field.

### Case 9: ICMP type

When a value of the type field in the NLRI field is type 7, it indicates that an ICMP type is used for matching, and a value field in the NLRI field carries a protocol number of the ICMP.

### Case 10: ICMP code

When a value of the type field in the NLRI field is type 8, it indicates that an ICMP code is used for matching, and a value field in the NLRI field carries the ICMP code.

### Case 11: TCP flag

When a value of the type field in the NLRI field is type 9, it indicates that at least one TCP flag (TCP Flags) is used for matching, and a value field in the NLRI field carries the at least one TCP flag.

### Case 12: Packet length

When a value of the type field in the NLRI field is type 10, it indicates that a packet length (Packet Length) is used for matching, and a value field in the NLRI field carries the packet length.

### Case 13: Differentiated services code point (differentiated services code point, DSCP)

When a value of the type field in the NLRI field is type 11, it indicates that the DSCP is used for matching, and a value field in the NLRI field carries the DSCP.

### Case 14: Fragment (Fragment)

When a value of a type field in the NLRI field is type 12, it indicates that a fragment (Fragment) is used for matching, and a value field in the NLRI field carries the fragment.

For the foregoing listed 14 cases, a manner in which the receive end determines whether the parameter carried in the data packet matches a parameter carried in the NLRI field is as follows: For example, for the NLRI of type 1 and the NLRI of type 2, a minimum prefix is used for matching; and for the NLRI of another type, a longest character string is used for matching. When one BGP flow spec packet includes a plurality of NLRIs, the data packet is usually packed if each parameter carried in the data packet matches a parameter carried in a corresponding NLRI field. For example, if one BGP flow spec packet includes two NLRIs that separately carry a source IP address and a destination IP address, the data packet is packed when a source IP address in the data packet matches the source IP address carried in the NLRI and a destination IP address in the data packet matches the destination IP address carried in the NLRI. For more details about the format of the NLRI field listed above, refer to RFC 5575.

The extended community attribute field is used to carry the packing-related parameter, and the NLRI field is used to carry the feature of the data flow. The extended community attribute field is a route attribute field specified in the BGP protocol, and a main function of the route attribute field is to provide a parameter corresponding to the NLRI. This is equivalent to further descriptions of the NLRI. Therefore, the feature of the data flow and the packing-related parameter are separately carried in the NLRI field and the extended community attribute field. This is equivalent to notifying the packing end that the feature of the data flow has an association relationship with the packing-related parameter, so that after receiving the BGP packet, the packing end automatically establishing, based on content of the NLRI field and content of the extended community attribute field, a correspondence between the feature of the data flow and the packing-related parameter by using the feature of the data flow as an index. In addition, the extended community attribute has a new type field (namely, the foregoing sub-type field) in comparison with another route attribute field, and the sub-type field has a length of 8 bits and has high scalability. Different actions can be distinguished by using different values of the sub-type field, and a type of the action can be flexibly defined based on the sub-type field, to reduce a possibility of a conflict between the different actions. The value of the sub-type field is defined as packing, and a field following the sub-type field carries a parameter needed by the receive end to perform the packing, so that the receive end does not need to configure a packing policy.

The foregoing listed packing-related parameters may be published through one BGP packet, or may be published through a plurality of BGP packets.

For a manner of publishing a series of packing-related parameters through one BGP packet, an example is used for description: The first network device obtains the first BGP packet, and the first network device sends the first BGP packet to the second network device. The first BGP packet includes the feature of the data flow, the first identifier, the offset, and the first priority. Because the feature of the data flow, the first identifier, the offset, and the first priority are published to the packing end together through a same packet, it is equivalent to notifying the packing end that there is a correspondence between the feature of the data flow, the first identifier, the offset, and the first priority, that is, a compression algorithm and a start location of the packing that are used for the data flow, and a packing function is validated, and advertising that a quantity of packets needing to be sent for the packing is relatively small. Overheads are relatively low.

For a manner of publishing the packing-related parameters through a plurality of BGP packets, an example is used for description: The first network device obtains the first BGP packet, a second BGP packet, and a third BGP packet, and the first network device sends the first BGP packet, the second BGP packet, and the third BGP packet to the second network device. The first BGP packet includes the first identifier and the feature of the data flow. The second BGP packet includes the first priority and the feature of the data flow, and the third BGP packet includes the offset and the feature of the data flow.

When the packing-related parameters are published through the plurality of packets, a sequence of publishing different parameters is not limited in this embodiment, that is, a sequence of sending the first BGP packet, the second BGP packet, and the third BGP packet is not limited. For example, the first network device first sends the first BGP packet to the second network device, where the first BGP packet includes the first identifier and the feature of the data flow, to notify the second network device of the first identifier corresponding to the data flow, so that the second network device can establish the correspondence between the feature of the data flow and the first identifier by using the feature of the data flow as an index. Then, the first network device sends the third BGP packet to the second network device, where the third BGP packet includes the offset and the feature of the data flow, to notify the second network device of the start location of the packing in a payload of the data flow, so that the second network device can establish the correspondence between the feature of the data flow and the offset by using the feature of the data flow as an index. In this case, because the feature of the data flow is used as the index in the two correspondences established by the second network device, the second network device can associate the offset with the priority by using the feature of the data flow, to obtain the correspondence between the feature of the data flow, the first identifier, and the offset.

In some embodiments, the BGP flow spec peer relationship is established between the first network device and the second network device, and the first parameter set is transferred based on the BGP flow spec peer relationship. For example, in a public network scenario, the destination IP address or the source IP address of the data flow that is advertised by the first network device is a public IP address, and the first network device may publish the first parameter set by using a BGP flow spec address family of the public network. For example, in a public IPv4 scenario, the first network device and the second network device establish the peer relationship in a view of a BGP flow spec IPv4 address family, and the first network device sends the BGP flow spec packet based on the peer relationship. The BGP flow spec packet includes an address family identifier (address family identifier, AFI) field and a subsequent address family identifier (subsequent address family identifier, SAFI) field. A value of the AFI field is 1, and a value of the SAFI field is 133, indicating that a public network IPv4 flowspec rule is transferred. The destination IP address and/or the source IP address of the flow in the NLRI field in the BGP flow spec packet are/is public IPv4 addresses/a public IPv4 address. An implementation in a public IPv6 scenario is similar to that in the public IPv4 scenario. A main difference is that, in the BGP flow spec packet, the value of the AFI field is 2, and the value of the SAFI field is 133, indicating that a public IPv6 flowspec rule is transferred. The destination IP address and/or the source IP address of the flow in the NLRI field are/is public IPv6 addresses/a public IPv6 address. In a private network scenario, the destination IP address and/or the source IP address of the flow that are/is advertised by the first network device are/or private IP addresses/a private IP address, and the first network device may publish the first parameter set by using a BGP flow spec address family of the private network. For example, in an IPv4 scenario, the first network device and the second network device establish the peer relationship in a view of an IPv4 flowspec VPN address family, and the first network device sends the BGP flow spec packet based on the peer relationship. The BGP flow spec packet includes an AFI field and an SAFI field. A value of the AFI field is 1, and a value of the SAFI field is 134, indicating that a private IPv4 flowspec rule is transferred. The destination IP address and/or the source IP address of the flow in the NLRI field in the BGP flow spec packet are/is private IPv4 addresses/a private IPv4 address. An implementation in a private IPv6 scenario is similar to that in the private IPv4 scenario. A main difference is that, in the BGP flow spec packet, the value of the AFI field is 2, and the value of the SAFI field is 134, indicating that a private IPv6 flowspec rule is transferred. The destination IP address and/or the source IP address of the flow in the NLRI field are/is private IPv6 addresses/a private IPv6 address.

### Implementation 2: Extended interior gateway protocol (interior gateway protocol, IGP)

In a possible implementation, the first network device sends the first parameter set in an IGP flooding manner. For example, the first network device floods, in an AS to which the first network device belongs, an IGP packet that carries the first parameter set, and the second network device and the first network device are located in the same AS. Therefore, the second network device can receive the IGP packet that includes the first parameter set. For example, with reference to the scenario shown in FIG. 4, the router 31 floods the IGP packet in the network 30, and the IGP packet includes the first identifier and the feature of the data flow. Each router that receives the IGP packet in the network 30 sends the IGP packet to another router other than the router, so that the router 33 receives the IGP packet, to obtain the first identifier and the feature of the data flow.

For a field carried in the first parameter set in the IGP packet, in some embodiments, the IGP packet includes a TLV, and the TLV includes a second type, the first identifier, and the feature of the data flow. The second type indicates packing. For example, the TLV field includes a type field and a value field, a value of the type field indicates the packing, and the value field includes the first identifier and the feature of the data flow.

The foregoing listed packing-related parameters may be published through one IGP packet, or may be published through a plurality of IGP packets. For example, when the parameters are published through one IGP packet, the first network device obtains a first IGP packet, and the first network device sends the first IGP packet to the second network device. The first IGP packet includes the first parameter set. For another example, when the parameters are published through a plurality of IGP packets, the first network device obtains a second IGP packet and a third IGP packet, and the first network device sends the second IGP packet and the third IGP packet to the second network device. The second IGP packet includes the first priority and the feature of the data flow, and the third IGP packet includes the offset and the feature of the data flow.

In some other embodiments, the packing-related parameters are published by extending an intermediate system to intermediate system (intermediate system to intermediate system, IS-IS). In other words, the first IGP packet, the second IGP packet, and the third IGP packet are IS-IS packets. In some other embodiments, the packing-related parameters are published by extending an OSPF. In other words, the first IGP packet, the second IGP packet, and the third IGP packet are open shortest path first (open shortest path first, OSPF) packets.

In some embodiments, the first network device generates and sends an IS-IS packet. The IS-IS packet includes an LSP field and a TLV field, the LSP field includes the feature of the data flow, a type identifier in the TLV field is packing, and a value field in the TLV field includes the first identifier.

Step S603: The second network device receives the first parameter set from the first network device.

In some embodiments, the second network device receives the first BGP packet. The second network device obtains the first parameter set from the first BGP packet. For example, the second network device parses the NLRI field and the extended community attribute field in the first BGP packet, and the second network device obtains the feature of the data flow from the NLRI field. The second network device obtains the first identifier, the offset, and the first priority from the extended community attribute field. For example, the second network device parses the sub-type field in the extended community attribute field, and the second network device determines, based on the value (first type) that is of the sub-type field in the extended community attribute field and that indicates packing, that the extended community attribute field carries the packing-related parameter. In this case, the second network device further parses the global administrator field or the local administrator field in the extended community attribute field, to obtain the first identifier, the offset, and the first priority.

In some embodiments, because the feature of the data flow, the first identifier, the offset, and the first priority are carried in a same BGP packet, the first network device further establishes and stores a correspondence between the feature of the data flow, the first identifier, the offset, and the first priority.

In some embodiments, the second network device receives the first BGP packet, the second BGP packet, and the third BGP packet. The second network device parses the NLRI field and the extended community attribute field in the first BGP packet, and the second network device obtains the feature of the data flow from the NLRI field. The second network device obtains the first identifier from the extended community attribute field. The second network device parses an NLRI field and an extended community attribute field in the second BGP packet, obtains the feature of the data flow from the NLRI field, and obtains the first priority from the extended community attribute field. The second network device parses an NLRI field and an extended community attribute field in the third BGP packet, obtains the feature of the data flow from the NLRI field, and obtains the offset from the extended community attribute field.

In some embodiments, because the feature of the data flow and the first identifier are carried in the same BGP packet, the first network device establishes and stores a correspondence between the feature of the data flow and the first identifier. Because the feature of the data flow and the first priority are carried in the same BGP packet, the first network device establishes and stores a correspondence between the feature of the data flow and the first priority. Because the feature and the offset of the data flow are carried in the same BGP packet, the first network device establishes and stores a correspondence between the feature of the data flow and the offset.

In some embodiments, the second network device receives the IGP packet, the second network device parses the TLV in the IGP packet, and the second network device determines that the type field of the TLV includes the second type, and obtains the first identifier and the feature of the data flow from the value field of the TLV.

According to the method provided in this embodiment, the first network device advertises the second network device of the feature of the data flow that needs to be packed and the identifier of the compression algorithm, so that the feature of the data flow and the identifier of the compression algorithm are automatically transferred to the second network device, to support the second network device in packing a specified data flow by using a specified compression algorithm. In addition, a correspondence between the feature of the data flow and the identifier of the compression algorithm does not need to be manually configured on the second network device. Therefore, configuration complexity is reduced, and a configuration operation is simplified.

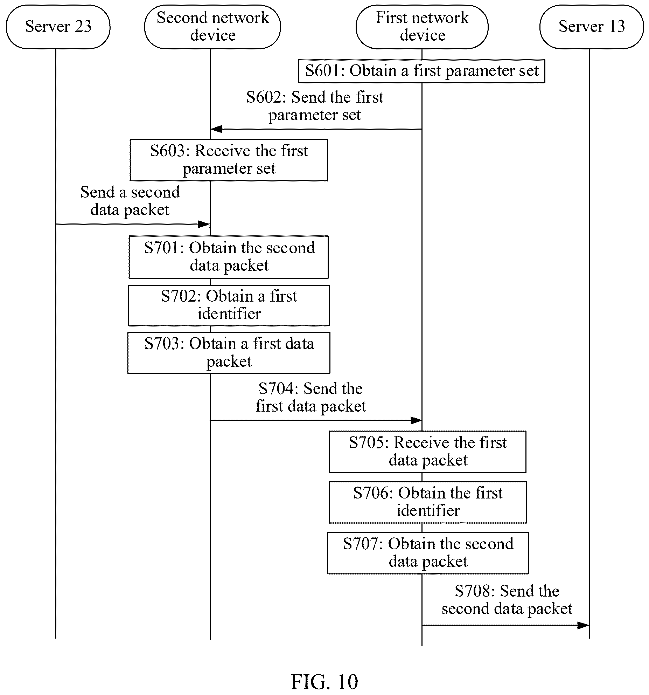

The foregoing embodiment in FIG. 6 focuses on a procedure in which the parameter is advertised on a control plane. An embodiment of this application further provides a forwarding procedure on a data plane, that is, how to pack and forward a data flow by using the parameter advertised on the control plane. The following uses an embodiment in FIG. 10 as an example for description. To distinguish data packets before and after packing, a "first data packet" is used to describe a packed packet, and a "second data packet" is used to describe a data packet before packing. The embodiment in FIG. 10 is optionally used to pack and forward each data packet in a data flow. For ease of understanding, a process of packing and forwarding one data packet (second data packet) is used as an example below for description. A procedure of forwarding another data packet in the data flow is similar to the procedure of forwarding the second data packet. As shown in FIG. 10, based on the embodiment in FIG. 6, the following step S701 to step S708 are further included.

Step S701: The second network device obtains the second data packet.

The second data packet includes a feature of a data flow that is advertised by the first network device. In other words, the second data packet is a to-be-packed data packet. For a manner of obtaining the second data packet, in some embodiments, the second network device receives the second data packet sent by another device that communicates with the second network device. For example, with reference to the scenario shown in FIG. 2, the second network device is, for example, the router 21, and the router 21 receives the second data packet sent by the server 23, the terminal 24, or the storage device 25 via the switch 22. For example, the second data packet is the packet 51 sent by the server 23 to the server 21. The packet 51 includes the IP header and the payload. The source address in the IP header is the IP address 1.1.1.1 of the server 23, and the destination address in the IP header is the IP address 2.2.2.2 of the server 13. The payload includes service data generated by the server 23. For another example, with reference to the scenario shown in FIG. 5, the second network device is, for example, the router 33, and the router 33 receives the second data packet sent by the router 21. Alternatively, the second data packet is not received from the another device, but is locally generated by the second network device.

Step S702: The second network device obtains a first identifier based on the second data packet and the feature of the data flow.

In a possible implementation, this step specifically includes the following step A and step B.

Step A: The second network device performs matching between the second data packet and the feature of the data flow, and if the second data packet matches the feature of the data flow, that is, the data packet includes the feature of the data flow, performs step B.

The second network device performs the matching between the obtained data packet and the feature of the data flow, to determine whether the data packet needs to be packed. If the data packet matches the feature of the data flow, the second network device may determine that the data packet needs to be packed. If the data packet does not match the feature of the data flow, the second network device may determine that the data packet does not need to be packed. In this manner, the data packet is selectively packed. That is, the data packet that hits the advertised feature is packed.

The matching between the data packet and the feature of the data flow is performed to determine whether the data packet includes the feature of the data flow. That the data packet matches the feature of the data flow means that the data packet includes the feature of the data flow. That the data packet does not match the feature of the data flow means that the data packet does not include the feature of the data flow.

For a manner of determining that the feature of the data packet matches the feature of the data flow, the following uses two cases as examples for description.

Case 1: A match item (feature of the data flow) is a feature (1-tuple) in one dimension.

For example, the match item is a destination address prefix. For example, the second network device reads a destination address field in an IP header of the second data packet, to obtain a destination IP address of the second data packet. If the destination IP address of the second data packet includes a destination address prefix advertised by the first network device, that is, if first N bits of the destination IP address of the second data packet are the same as the destination address prefix advertised by the first network device, the second network device determines that the second data packet includes the feature of the data flow.

For example, the match item is a destination IP address. For example, the second network device reads a destination address field in an IP header of the second data packet, to obtain a destination IP address of the second data packet. If the destination IP address of the second data packet is a destination IP address advertised by the first network device, the second network device determines that the second data packet includes the feature of the data flow.

For example, the match item is a source IP address. For example, the first network device reads a source address field in an IP header of the second data packet, to obtain a source IP address of the second data packet. If the source IP address of the second data packet is a source IP address advertised by the first network device, the first network device determines that the second data packet includes the feature of the data flow.

Case 2: A match item (feature of the data flow) includes features in a plurality of dimensions.

For example, the match item is a 5-tuple. For example, the second network device reads a destination address field and a source address field in an IP header of the second data packet, a source port number and a destination port number in a transport layer protocol header of the second data packet, and a protocol number of the second data packet, if the destination IP address of the second data packet is a destination IP address of the data flow that is advertised by the first network device, the source IP address of the second data packet is a source IP address of the data flow that is advertised by the first network device, the source port number of the second data packet is a source port number of the data flow that advertised by the first network device, the destination port number of the second data packet is a destination port number of the data flow that is advertised by the first network device, and the protocol number of the second data packet is a protocol number of the data flow that is advertised by the first network device, the second network device determines that the second data packet includes the feature of the data flow.

Step B: In response to determining that the second data packet includes the feature of the data flow, the second network device obtains the first identifier based on the feature of the data flow.

In a possible implementation, the second network device stores a correspondence between the feature of the data flow and the first identifier. The second network device searches for the correspondence between the feature of the data flow and the first identifier by using the feature of the data flow as an index, to obtain the first identifier.

Optionally, in response to determining that the second data packet includes the feature of the data flow, the second network device searches for a correspondence between the feature of the data flow and an offset by using the feature of the data flow as an index, to obtain the offset.

Optionally, in response to determining that the second data packet includes the feature of the data flow, the second network device searches for a correspondence between the feature of the data flow and a first priority by using the feature of the data flow as an index, to obtain the first priority.

Step S703: The second network device obtains a first data packet based on the first identifier and the second data packet.

The first data packet is a data packet obtained by packing the second data packet based on the first identifier. The first data packet includes the feature of the data flow.

A payload in the first data packet is obtained by packing a payload in the second data packet. For example, the second network device determines a compression algorithm indicated by the first identifier, and packs the payload of the second data packet by using the compression algorithm, to obtain the payload of the first data packet. For example, if the first identifier is a CPI value of a ZSTD compression algorithm, the second network device packs the payload of the second data packet by using the ZSTD compression algorithm, to obtain the payload of the first data packet. Based on this manner, a data packet is packed by using a compression algorithm specified by an unpacking end.

In some embodiments, in a scenario in which the first network device advertises the offset, the second network device determines a start location of the packing in the second data packet based on the offset advertised by the first network device, and packs a payload starting from the start location. For example, the offset is N. The second network device determines N bytes after a port number of the second data packet, and performs the packing starting from the N bytes after the port number, to obtain a packed payload. For another example, the second network device determines a packing end location in the second data packet based on the offset, and packs a payload before the end location. In this way, a payload within a specified range is packed. In some embodiments, in a scenario in which the first network device does not notify the offset, the second network device determines a start location of the packing and a packing end location in the second data packet based on a default offset, and packs a payload between the start location and the end location.

In some embodiments, in a scenario in which the first network device advertises a priority, the second network device determines whether the priority indicates that a packing function is validated, and if the priority indicates that the packing function is validated, performs the foregoing process of packing the payload of the second data packet.

In some embodiments, the second network device further encapsulates an IP payload compression protocol (payload packing protocol, PCP) header into the packed payload. In other words, the first data packet includes the IP PCP header. The IP PCP header is located at an outer layer of the packed payload. The IP PCP header includes a protocol number of a packing protocol. Because the IP PCP header is encapsulated, it is convenient to identify that the payload of the first data packet is packed.

In some embodiments, the second data packet includes the IP header, and the first data packet includes the IP header of the second data packet. To be specific, the first data packet includes the source IP address and the destination IP address of the second data packet. In other words, both the source IP address and the destination IP address of the data packet are reserved before and after the packing, so that a source IP address and a destination IP address of the packed packet are the same as the source IP address and the destination IP address of the packet before the packing. For example, the second network device does not need to pack the IP header, to avoid impact on normal forwarding of the packet due to a change of an IP address after the IP header is packed.

In some embodiments, the second data packet includes the transport layer protocol header, and the first data packet includes the transport layer protocol header of the second data packet. That is, the first data packet includes the source port number and the destination port number of the second data packet. In other words, both the source port number and the destination port number of the data packet are reserved before and after the packing, so that a source port number and a destination port number of the packed packet are the same as the source port number and the destination port number of the packet before the packing. For example, the second network device does not need to pack the transport layer protocol header, to avoid impact on normal forwarding of the packet due to a change of a port number after the transport layer protocol header is packed.

For example, as shown in FIG. 2, the second data packet is, for example, the packet 51 in FIG. 2, and the first data packet is, for example, the packet 52 in FIG. 2. The packet 51 includes the IP header and the IP payload, and the packet 52 includes the IP header, the IP PCP header, and the packed payload. The IP header in the packet 52 is the same as the IP header in the packet 51, and the packed payload in the packet 52 is obtained by the router 21 by packing the IP payload in the packet 41 by using a compression algorithm advertised by the router 11. The IP PCP header in the packet 52 is encapsulated by the router 21.

Step S704: The second network device sends the first data packet to the first network device.

A manner of sending the first data packet includes but is not limited to a routing-based manner, a policy-based manner, or a tunneling manner.

The routing-based manner is used as an example for description. For example, the second network device searches a routing table based on the destination IP address of the first data packet, to obtain an address of a next hop, and the second network device sends the first data packet to the address of the next hop. After receiving the first data packet, the next hop of the second network device also searches the routing table based on the destination IP address of the first data packet, and forwards the first data packet until the first data packet reaches the first network device. In this manner, forwarding based on a native IP (or native IP) is implemented.

The tunneling manner is used as an example. For example, in a scenario based on an internet protocol version 6 for segment routing (internet protocol version 6 for segment routing, SRv6) tunnel, the second network device is a head node of the SRv6 tunnel, and the first network device is a tail node of the SRv6 tunnel. The second network device not only packs the payload, but also encapsulates an SRv6 header into the packed payload. The SRv6 header includes a segment identifier (segment ID, SID) of the first network device. The SID of the first network device is carried in the data packet, so that an intermediate node between the second network device and the first network device can forward the data packet to the first network device based on the SID of the first network device. In other words, a forwarding path of the packed packet is controlled to some extent, so that the packet is diverted to a parameter advertisement device through the SRv6 tunnel. In this way, the packet is unpacked on the parameter advertisement device. For example, refer to FIG. 2. The first data packet is, for example, the packet 52 in FIG. 2. Optionally, the packet 52 further includes an SRv6 header, and the SRv6 header includes a SID A1::1 of the router 11. The SRv6 header is encapsulated by the router 21 into an outer layer of the packed payload. Because the packet 52 includes the SID A1::1 of the router 11, the router 33, the router 32, and the router 31 forward the packet 52 to the router 11 based on the SID A1::1 of the router 11. In this manner, the packed packet can enter the SRv6 tunnel, so that a needed path is selected to pack data traffic.

Optionally, the SRv6 header of the first data packet further includes a SID list, and the SID list includes a SID of at least one hop of intermediate node between the second network device and the first network device, to strictly control the forwarding path of the packed packet. For example, refer to FIG. 2. The SRv6 header of the packet 52 optionally further includes a SID B3::3 of the router 33, a SID B2::2 of the router 32, and a SID B1::1 of the router 31.

Alternatively, in a scenario of a multi-protocol label switching (Multi-Protocol Label Switching, MPLS) tunnel, the SRv6 header is replaced with an MPLS header, the SID of the first network device is replaced with an MPLS label of the first network device, and the SID list is replaced with an MPLS label stack.

Step S705: The first network device receives the first data packet from the second network device.

Optionally, in a scenario in which the packed packet is forwarded through the tunnel, the first network device strips a tunnel header based on the IP address of the first network device included in the tunnel header, and performs the following steps based on a data packet obtained by stripping the tunnel header. For example, refer to FIG. 2. After receiving the packet 52, in response to the local SID of the router 11 included in the SRv6 header of the packet 52, the router 11 strips the packet 52, and performs the following steps based on an inner IP header and another packet header that are of the packet 52.

Step S706: The first network device obtains the first identifier based on the first data packet and the feature of the data flow.

### In a possible implementation, this step specifically includes the following step A and step B.

Step A: The first network device performs matching between the first data packet and the feature of the data flow, and if the first data packet matches the feature of the data flow, that is, the first data packet includes the feature of the data flow, performs step B.

The first network device may determine, by determining whether the feature of the data packet matches the feature of the data flow, whether the data packet needs to be unpacked by the first network device. For example, the first network device determines, based on that the data packet matches the feature of the data flow, that the data packet needs to be unpacked. The first network device determines, based on that the data packet does not match the feature of the data flow, that the data packet does not need to be unpacked. In this manner, the data packet is selectively unpacked. That is, the data packet that hits the advertised feature is packed.

For implementation details about how the first network device determines that the data packet matches the feature of the data flow, refer to a manner in which the second network device performs the matching between the second data packet and the feature of the data flow.

In a possible implementation, the first network device further performs the matching between the first data packet and an IP PCP protocol number. To be specific, if the first data packet includes the feature of the data flow, and the first data packet includes the IP PCP protocol number, the first data packet is unpacked. For example, the IP PCP protocol number is 108.

Step B: In response to determining that the first data packet matches the feature of the data flow, the first network device searches for the correspondence between the feature of the data flow and the first identifier by using the feature of the data flow as an index, to obtain the first identifier.

Step S707: The first network device obtains the second data packet based on the first identifier and the first data packet.

The second data packet is a data packet obtained by unpacking the first data packet based on the first identifier. Specifically, the first network device determines a decompression algorithm based on the first identifier, and unpacks the payload of the first data packet by using the decompression algorithm, to obtain the second data packet. For example, if the first identifier is the CPI value of the ZSTD compression algorithm, the first network device packs the payload of the first data packet by using the ZSTD compression algorithm, to obtain the payload of the second data packet. Based on this manner, a data packet is packed by using a specified compression algorithm. In addition, when the first data packet includes the IP PCP header, the second network device further decapsulates the IP PCP header from the first data packet.

Step S708: The first network device sends the second data packet.

A manner of sending the second data packet includes but is not limited to route-based forwarding, policy-based forwarding, tunnel-based forwarding, or the like. For example, the first network device searches a routing table based on the destination IP address of the second data packet, to obtain a next-hop IP address, and sends the second data packet to the next-hop IP address.

For example, with reference to the scenario shown in FIG. 2, the first network device is, for example, the router 11, and the first data packet is the packet 53 obtained by the router 11 through unpacking. The router 11 sends the packet 53 to the server 13, the terminal 14, or the storage device 15 based on the destination IP address in the packet 53. For example, if the destination IP address in the packet 53 is the IP address 2.2.2.2 of the server 12, the router 11 sends the packet 53 to the server 12. For another example, with reference to the scenario shown in FIG. 5, the first network device is, for example, the router 31, and the first data packet is the packet 53 obtained by the router 31 through unpacking. After obtaining the packet 53, the router 31 searches the routing table based on the destination IP address in the packet 53, and determines that a next hop to the destination IP address is the router 11. In this case, the router 31 sends the packet 53 to the router 11.

According to the method provided in this embodiment, the first network device packs the data packet based on the feature of the data flow and the packing-related parameter that are advertised by the second network device, and supports packing performed on the specified data flow by using the specified compression algorithm, so that redundant information in the payload of the data flow is reduced, and bandwidth occupied for transmission of the data flow is saved, and link utilization is improved. In addition, packing and a used compression algorithm for some data flows do not need to be manually configured on a packing end, but may be flexibly controlled by the unpacking end.

The foregoing embodiment focus on an overall procedure of interaction between the devices. The following further describes the foregoing listed method embodiments in detail with reference to components inside the devices.

The following embodiment relates to a procedure in which a device generates an ACL. The ACL includes one or more rules. The rule is a judgment statement that describes a packet matching condition. When a packet matches the ACL, the device performs an action corresponding to the ACL. In this embodiment, the packet matching condition is a feature of a data flow. To distinguish ACLs with different functions, an "unpacking ACL" is used to describe an ACL used by an unpacking end to determine a to-be-unpacked data packet, and a "packing ACL" is used to describe a packing ACL used by a packing end to determine a to-be-packed data packet.

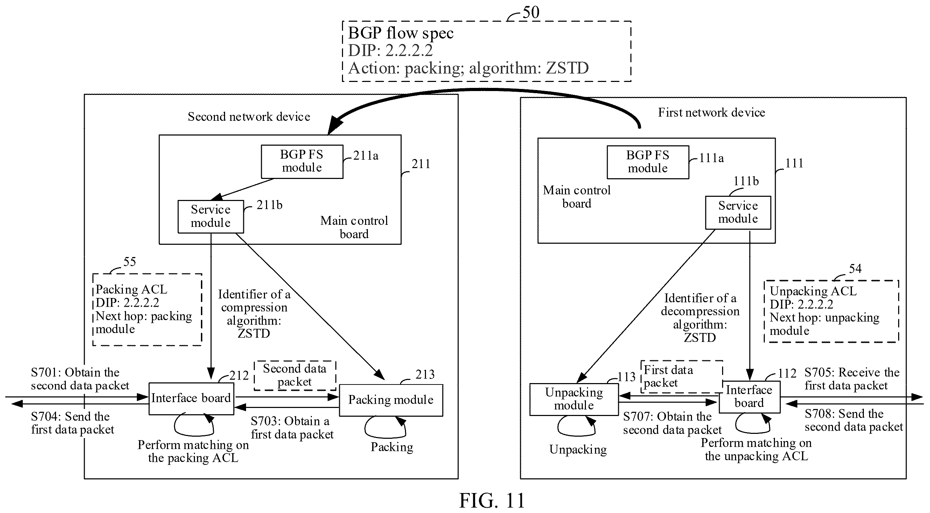

FIG. 11 is a diagram of internal structures of a first network device and a second network device. As shown in FIG. 11, the first network device includes a main control board 111, an interface board 112, and an unpacking module 113. The main control board 111 includes a service module 111b and a BGP FS module 111a. The BGP FS module 111a is configured to establish a BGP flow spec peer relationship with the first network device. After obtaining an identifier of a compression algorithm and a feature of a data flow: the foregoing first parameter set, the BGP FS module 111a generates a BGP flow spec packet 50 that carries the first parameter set, and sends the BGP flow spec packet 50 to the second network device. The service module 111b is configured to: generate an unpacking ACL based on the first parameter set, and deliver the unpacking ACL to the interface board 112. In addition, the service module 211b is further configured to deliver packing-related parameters such as an identifier of a decompression algorithm and an offset to the unpacking module 113. The unpacking ACL is used to filter out, from received traffic, a packet that needs to be unpacked. The packet is forwarded to the unpacking module. For example, the unpacking ACL includes a match item field and an execution action field. The match item field includes the feature of the data flow. The execution action field includes an action identifier of forwarding the packet to a next hop and an identifier of the next hop. For example, in a local unpacking scenario, the identifier of the next hop in the unpacking ACL is an identifier of the unpacking module 113 of the first network device. In a hot standby scenario, the next hop in the unpacking ACL is an identifier of a third network device that belongs to a same unpacking group as the first network device.

The interface board 112 stores the unpacking ACL. After the interface board 112 receives the packet, for example, S705 in the embodiment in FIG. 10 is performed to receive the first data packet, the interface board 112 performs matching between the first data packet and the match item in the unpacking ACL. In response to that the first data packet matches the match item in the unpacking ACL (that is, including the feature of the data flow), the interface board 112 sends the first data packet to the unpacking module 113 based on the action identifier and the identifier of the next hop in the unpacking ACL.

The unpacking module 113 unpacks the first data packet based on the decompression algorithm corresponding to the identifier of the decompression algorithm: performs the step of obtaining the second data packet in S707, and returns the second data packet to the interface board 112. The interface board 112 performs S708. There may be one or more unpacking modules 113. For example, with reference to the scenario shown in FIG. 2, the unpacking module 113 includes a first unpacking module and a second unpacking module in FIG. 2. The first unpacking module and the second unpacking module unpack the packet through load balancing. In some other embodiments, the first unpacking module and the second unpacking module belong to a same unpacking group, one of the first unpacking module and the second unpacking module is in an active state, and the other unpacking module is in a standby state. When one of the first unpacking module and the second unpacking module is faulty, an unpacking task is switched to the other unpacking module that is not faulty for execution. When both the first unpacking module and the second unpacking module are faulty, the first network device may redirect the packed data flow to the third network device for unpacking, or advertise the second network device to withdraw the packing, to reduce a risk of traffic discarding caused by an unpacking failure.

The second network device includes a main control board 211, an interface board 212, and a packing module 213. The main control board 211 includes a BGP FS module 211a and a service module 211b. The BGP FS module 211a is configured to establish a BGP peer relationship with the first network device. After receiving the BGP flow spec packet, the BGP FS module 211a parses the BGP flow spec packet to obtain the first parameter set carried in the BGP flow spec packet, and sends the first parameter set to the service module 211b. The service module 211b is configured to obtain a packing ACL based on the first parameter set. The service module 211b delivers the packing ACL to the interface board 212.

The interface board 212 stores the packing ACL. The packing ACL is used to filter out, from received traffic, a packet that needs to be packed. The packet is forwarded to the packing module. For example, the packing ACL includes a match item field and an execution action field. The match item field includes the feature of the data flow. The execution action field includes an action identifier of forwarding the packet to a next hop and an identifier of the next hop. For example, in a local packing scenario, the identifier of the next hop in the packing ACL is an identifier of the packing module 113 of the second network device. In a hot standby scenario, the identifier of the next hop in the packing ACL is an identifier of a fourth network device that belongs to a same packing group as the second network device. After the interface board 212 receives the packet, for example, S701 in the embodiment in FIG. 10 is performed to obtain the second data packet, the interface board 212 performs matching between the second data packet and the match item in the packing ACL. In response to that the second data packet matches the match item in the packing ACL (that is, including the feature of the data flow), the interface board 212 sends the second data packet to the packing module 213 based on the action identifier and the identifier of the next hop in the packing ACL.

The packing module 213 packs the second data packet based on the compression algorithm corresponding to the identifier of the compression algorithm: performs the step of obtaining the first data packet in S703, and returns the first data packet to the interface board 112. The interface board 112 performs S704. There may be one or more packing modules 213. For example, with reference to the scenario shown in FIG. 2, the packing module 213 includes a first packing module and a second packing module in FIG. 2. The first packing module and the second packing module pack the packet through load balancing. In some other embodiments, the first packing module and the second packing module belong to a same packing group, one of the first packing module and the second packing module is in an active state, and the other packing module is in a standby state. When one of the first packing module and the second packing module is faulty, a packing task is switched to the other packing module that is not faulty for execution. When both the first packing module and the second packing module are faulty, the second network device may redirect the packed data flow to the fourth network device that belongs to the same packing group as the second network device for packing, or withdraw the packing.

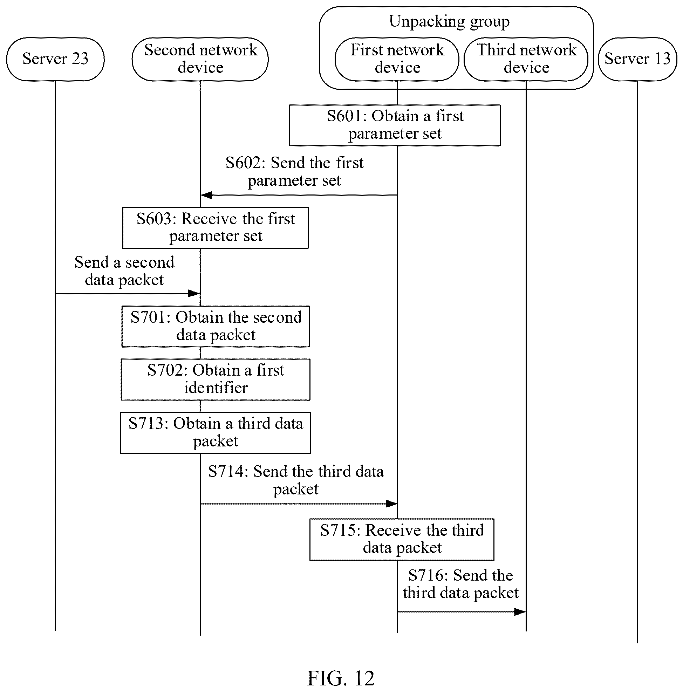

According to the method provided in this embodiment, when an unpacking function of an unpacking end is invalidated, the unpacking end forwards a received packed data flow to an unpacking end with an effective unpacking function, so that the packed data flow is redirected from the invalidated unpacking end to the effective unpacking end, to improve reliability. The following provides further specific descriptions with reference to an embodiment in FIG. 12. In the embodiment in FIG. 12, a scenario in which two unpacking ends (a first network device and a third network device) are deployed is used as an example. The two unpacking ends may have a dual-host hot backup relationship. As shown in FIG. 12, based on S601 to S603, this embodiment further includes the following step S701 to step S716.

Step S701: A second network device obtains a second data packet. The second data packet includes the feature of the data flow.

Step S702: The second network device obtains a first identifier based on the second data packet and the feature of the data flow.

Step S713: The second network device obtains a third data packet based on the first identifier and the second data packet.

The third data packet includes the feature of the data flow. The third data packet is a data packet obtained by packing the second data packet based on the first identifier. A process of obtaining the third data packet is similar to the process of obtaining the first data packet in the embodiment in FIG. 10. For details, refer to the foregoing descriptions about how to obtain the first data packet.

Step S714: The second network device sends the third data packet to the first network device.

A process of sending the third data packet is similar to the process of sending the first data packet in the foregoing embodiment. For details, refer to the foregoing descriptions about how to send the first data packet.

Step S715: The first network device receives the third data packet from the second network device. The third data packet includes the feature of the data flow.

Step S716: If an unpacking function of the first network device is invalidated or the unpacking function of the first network device is disabled, the first network device sends, based on the third data packet and the feature of the data flow, the third data packet to the third network device that is configured for unpacking and that is included in an unpacking group to which the first network device belongs.

The unpacking function invalidation is, for example, that each unpacking module of the first network device is in a faulty state.

The unpacking group includes a plurality of devices for unpacking. Each device in the unpacking group may be an active device, and unpacks a same data flow through load balancing. Alternatively, the devices in the unpacking group are classified into an active device and a standby device. When an unpacking function of the active device is validated, the active device unpacks a packed data flow, and forwards an unpacked data flow to a destination end of the data flow. When the unpacking function of the active device is invalidated, the standby device unpacks the packed data flow in place of the active device, and forwards the unpacked data flow to the destination end of the data flow. The first network device and the third network device belong to the same unpacking group. The first network device is an active device, and the third network device is a standby device. After the first network device receives the third data packet, the first network device determines whether the third data packet matches the feature of the data flow. The first network device determines, based on that the third data packet includes the feature of the data flow, that the third data packet is a packed data packet. In response to the invalidation of the unpacking function of the first network device or disabling of the unpacking function, the first network device determines the third network device serving as the standby device. The first network device sends the third data packet to the third network device.

For how the first network device determines the third network device, in other words, how the active device determines the standby device, in this embodiment, the standby device can be specified at a granularity of an entire device, or the standby device can be specified at a granularity of a flow. A possible implementation of specifying the standby device at the granularity of the entire device is, for example, configuring an identifier of the standby device on the active device. When the unpacking function of the active device is invalidated, the active device forwards any received packed data flow to the standby device based on the identifier of the standby device. For example, an identifier of the third network device is configured on the first network device. After the first network device determines that the third data packet matches the feature of the data flow, the first network device obtains the identifier of the third network device, and the first network device sends the third data packet to the third network device based on the identifier of the third network device. A possible implementation of specifying the standby device based on the granularity of the flow is, for example, configuring a correspondence between an identifier of the standby device and the feature of the data flow on the active device. When the unpacking function of the active device is invalidated, the active device determines, based on a feature of a received packed data flow, an identifier of a standby device corresponding to the packed data flow, and forwards the packed data flow to the standby device based on the identifier of the standby device. For example, a correspondence between the feature of the data flow and the identifier of the third network device is configured on the first network device. After the first network device determines that the third data packet matches the feature of the data flow, the first network device obtains the identifier of the third network device based on the feature of the data flow and the correspondence between the feature of the data flow and the identifier of the third network device, and the first network device sends the third data packet to the third network device based on the identifier of the third network device.

In a possible implementation, the first network device stores a local unpacking ACL and a peer unpacking ACL. The local unpacking ACL includes a correspondence between the feature of the data flow and an identifier of the unpacking module of the first network device, and is used to divert the packed data flow to the unpacking module inside the device for unpacking. The peer unpacking ACL includes the correspondence between the feature of the data flow and the identifier of the third network device, and is used to divert the packed data flow to the third network device serving as a peer end for unpacking. When the unpacking module of the first network device is not faulty, the first network device validates the local unpacking ACL, and invalidates the peer unpacking ACL; or configures a priority of the local unpacking ACL as a first priority, and configures a priority of the peer unpacking ACL as a second priority, where the first priority is higher than the second priority. Therefore, when the first network device receives a packet, and the packet matches the feature of the data flow (indicating that the packet is a packed packet), the first network device selects an effective or highest-priority policy, to select the local unpacking ACL. In this case, the first network device forwards the packet to the local unpacking module to unpack the packet. When the unpacking module of the first network device is faulty, the first network device invalidates the local unpacking ACL, and validates the peer unpacking ACL; or updates the priority of the local unpacking ACL to the second priority, and updates the priority of the peer unpacking ACL to the first priority. In this way, when the first network device receives a packet, and the packet matches the feature of the data flow (indicating that the packet is a packed packet), the first network device selects an effective or highest-priority policy, to select the peer unpacking ACL. In this case, the first network device forwards the packet to the third network device to unpack the packet.

The identifier of the third network device is, for example, an IP address of the third network device. The first network device may use the IP address of the third network device as an address of a next hop, and send the third data packet to the IP address of the third network device.

In some embodiments, different devices in the unpacking group detect states of each other. When detecting that an unpacking function of a peer device in the unpacking group is effective and an unpacking function of the unpacking end is invalidated or is disabled, the unpacking end redirects the packed data flow to the peer device in the unpacking group. When detecting that the unpacking function of the peer device in the unpacking group is invalidated or is disabled, a packing withdrawal manner described in a subsequent embodiment may be used. Optionally, the state of the peer device in the unpacking group is sensed by using a remote backup service (Remote Backup Service, RBS). For example, the first network device and the third network device establish an RBS connection, exchange an RBS message through the RBS connection, and sense the states of each other through the RBS message. If the unpacking function of the third network device is effective, the third network device sends a first RBS message to the first network device. The first RBS message indicates that the unpacking function is effective. If the unpacking function of the third network device is invalidated, the third network device sends a second RBS message to the first network device. The second RBS message indicates that the unpacking function is invalidated. When determining, based on the first RBS message, that the unpacking function of the third network device is effective, the first network device sends the third data packet to the third network device.

Step S717: The third network device receives the third data packet from the first network device.

Step S718: The third network device obtains the first identifier based on the third data packet and the feature of the data flow.

A manner in which the third network device obtains the first identifier is similar to the manner in which the first network device obtains the first identifier. For details, refer to the process in which the first network device obtains the first identifier.

Step S719: The third network device obtains the second data packet based on the first identifier and the third data packet.

A manner in which the third network device obtains the second data packet based on the third data packet is similar to the manner in which the first network device obtains the second data packet based on the first data packet. For details, refer to the descriptions of the process of obtaining the second data packet.

Step S720: The third network device sends the second data packet.

According to the method provided in this embodiment, when an unpacking function of one unpacking end is invalidated, the unpacking end forwards a received packed data flow to an unpacking end with an effective unpacking function, so that the packed data flow is redirected from the invalidated unpacking end to the effective unpacking end, to reduce a risk of traffic interruption caused by invalidation of an unpacking function of a single device. In addition, a packing end can still pack the data flow without validating a packing function for the data flow. In other words, a packing capability can still be maintained after the single device is faulty, thereby further improving reliability.

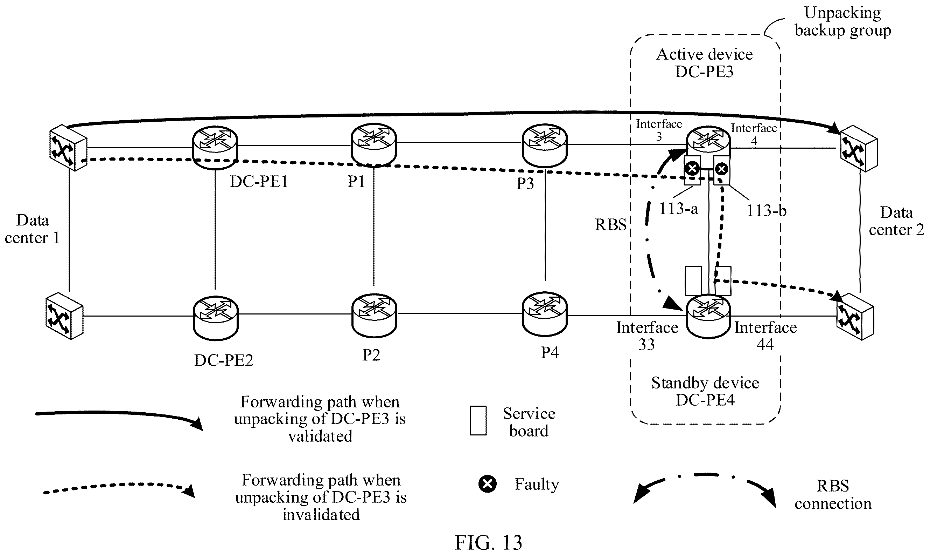

The following describes the embodiment in FIG. 12 by using an example with reference to the scenario shown in FIG. 13. The scenario in FIG. 13 is a specific example of an unpacking end redundancy backup scenario. Two unpacking service boards are deployed in each unpacking device. The two unpacking service boards have a load balancing relationship or a dual-system backup relationship. If one unpacking service board is faulty, an unpacking task is switched to the other unpacking service board of the device for execution. If both the unpacking service boards are faulty, an unpacking function of the unpacking end serving as an active device is invalidated. The active device redirects packed traffic to a standby device for unpacking, to avoid traffic discarding caused by an unpacking failure. A data center provider edge (data center provider edge, DC-PE) 1 in FIG. 13 is an active device in the packing group, and is also a specific example of the second network device. DC-PE3 in FIG. 13 is an active device in the unpacking group, and is also a specific example of the first network device. DC-PE4 in FIG. 13 is a standby device in the unpacking group, and is also a specific example of the third network device.

As shown in FIG. 13, in a scenario in which DC-PE3 is not faulty, after DC-PE3 receives packed traffic from a data center 1 through an interface 3, DC-PE3 unpacks the packed traffic via an unpacking service board of DC-PE3, and sends unpacked traffic through an interface 4, so that the unpacked traffic is forwarded to a data center 2. DC-PE3 is the active device in the unpacking group, and two unpacking service boards: an unpacking service board 113-a and an unpacking service board 113-b, are disposed inside DC-PE3. When one of the unpacking service board 113-a and the unpacking service board 113-b is faulty, the packed traffic is carried and processed by the other unpacking service board. In other words, the unpacking service board 113-a and the unpacking service board 113-b have an inter-board backup relationship. When both the unpacking service board 113-a and the unpacking service board 113-b in DC-PE3 are faulty, in other words, both the unpacking service boards in the active device are faulty, because DC-PE3 cannot perform unpacking processing, DC-PE3 senses, by using an RBS, a state of an unpacking service board of DC-PE4 that serves as the standby device. If the unpacking service board of DC-PE4 is normal and a link between DC-PE3 and DC-PE4 is reachable, DC-PE3 redirects the packed data flow to DC-PE4. DC-PE4 unpacks the data flow, searches for a route for forwarding, and forwards the data flow to the CE.

In some embodiments of this application, an unpacking end is further supported in controlling a packing end to automatically withdraw packing. The following describes an implementation of withdrawing a packing function by using examples.

Manner 1 of withdrawing packing: Delete a feature of a data flow on a packing end or disable a packing function of the packing end.

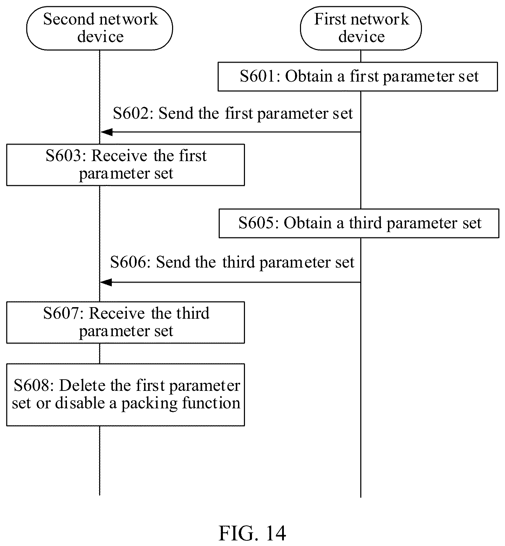

For example, refer to FIG. 14. The embodiment shown in FIG. 14 further includes the following step S605 to step S608 based on S601 to S603.

Step S605: The first network device obtains a third parameter set.

The third parameter set includes a second identifier and a feature of a data flow. For the feature of the data flow, refer to the foregoing descriptions. The second identifier is equivalent to an action instruction. For example, the second identifier indicates to withdraw packing. Alternatively, the second identifier indicates to disable a packing function. A manner of obtaining the third parameter set is similar to the manner of obtaining the first parameter set. For details, refer to the descriptions of obtaining the first parameter set.

In an example scenario, when an unpacking function of the first network device is invalidated, the first network device obtains the third parameter set and sends the third parameter set to the second network device. In another example scenario, when an unpacking function of the first network device is disabled, the first network device obtains the third parameter set and sends the third parameter set to the second network device. In another example scenario, when unpacking-related configuration information of the first network device is deleted, the first network device obtains the third parameter set and sends the third parameter set to the second network device. In another example scenario, when the first network device cannot sense a state of a third network device that belongs to a same unpacking group as the first network device, the first network device obtains the third parameter set and sends the third parameter set to the second network device. Alternatively, when an intermediate link between the first network device and the third network device is unreachable, the first network device obtains the third parameter set and sends the third parameter set to the second network device.

Step S606: The first network device sends the third parameter set to the second network device.

In some embodiments, the first network device sends the third parameter set to the second network device by advertising route withdrawal. Specifically, advertising a feature of one data flow is equivalent to advertising one piece of routing information, and the advertising route withdrawal is equivalent to an inverse operation of route advertisement. To be specific, a neighbor is notified that a previously advertised route is unreachable, and the previously advertised route needs to be deleted, that is, a previously advertised feature of the data flow is deleted.

For example, advertisement is performed according to a BGP. In some embodiments, the first network device obtains a fifth BGP packet. The fifth BGP packet includes the third parameter set. The first network device sends the fifth BGP packet to the second network device serving as a BGP peer. The fifth BGP packet is, for example, a packet for advertising route withdrawal. The fifth BGP packet is, for example, a BGP update packet. The fifth BGP packet is, for example, a BGP flow spec packet, or for another example, a BGP EVPN packet, or may be certainly another type of BGP packet. In a possible implementation, the fifth BGP packet includes a withdraw routes (withdraw routes) field, the withdraw routes field is the second identifier, and a value of the withdraw routes (withdraw routes) field is the feature of the data flow. In another possible implementation, the fifth BGP packet includes an NLRI field and an extended community attribute field, and the NLRI field includes the feature of the data flow. The extended community attribute field includes the second identifier. For example, the extended community attribute field includes a sub-type field. A value (second identifier) in the sub-type field indicates to withdraw the packing or disable the packing.

For example, advertisement is performed according to an IGP. The first network device obtains a fifth IGP packet. The fifth IGP packet includes the third parameter set. The first network device sends the fifth IGP packet to the second network device in a flooding manner. The fifth IGP packet is, for example, an IS-IS packet or an OSPF packet. For example, the IS-IS packet includes an LSP field and a TLV field, the LSP field includes the feature of the data flow, and a type (second identifier) in the TLV field indicates to withdraw the packing or disable the packing.

Step S607: The second network device receives the third parameter set from the first network device.

Step S608: The second network device deletes the first parameter set or disables the packing function of the second network device.

For example, the second network device deletes the first parameter set based on the second identifier indicating to withdraw the packing. For example, the second network device deletes a packing ACL. When the second network device subsequently receives a data packet, because the feature of the data flow that is used as a match item has been deleted, the second network device cannot perform a packing action on the data packet based on the feature of the data flow that matches the data packet, and therefore withdraws packing. In a possible implementation, the second network device receives the fifth BGP packet from the BGP peer (first network device), and parses the withdraw routes field in the fifth BGP packet to obtain the feature of the data flow. In the BGP protocol, the withdraw routes field is used to carry a to-be-deleted route. Therefore, the second network device deletes, based on the feature of the data flow that is carried in the withdraw routes field, the feature of the data flow that is previously advertised by the first network device.

For another example, the second network device disables the packing function of the second network device based on the second identifier indicating to disable the packing.

According to the method provided in this embodiment, the unpacking end advertises the packing end to delete the feature of the data flow at the packing end or disable the packing function of the packing end, to reduce a risk of traffic interruption caused by invalidation of the unpacking end to perform unpacking.

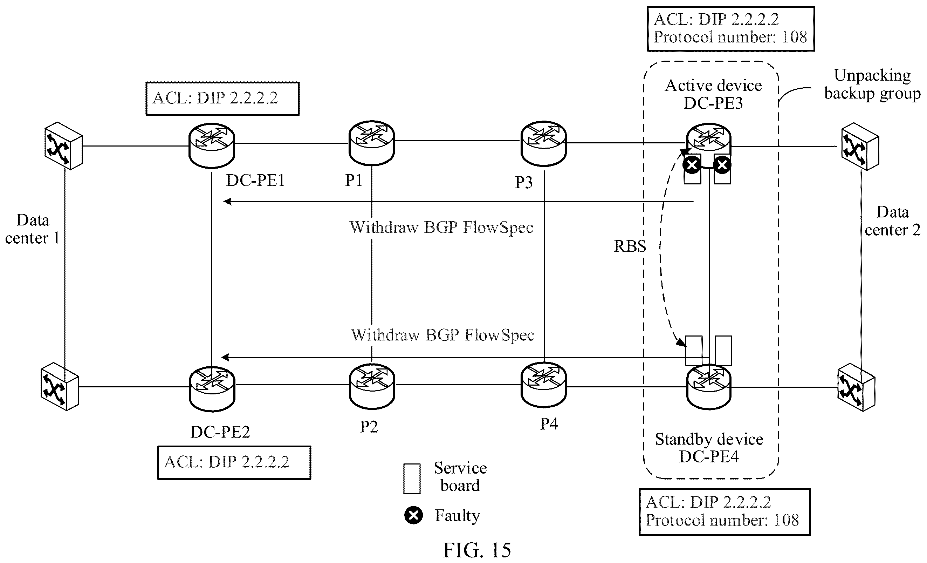

The following describes the embodiment in FIG. 14 by using an example with reference to a scenario shown in FIG. 15. DC-PE1 in FIG. 15 is an active device in a packing group, and is also a specific example of the second network device. DC-PE3 in FIG. 15 is an active device in an unpacking group, and is also a specific example of the first network device. DC-PE4 in FIG. 15 is a standby device in the unpacking group, and is also a specific example of the third network device.

When an unpacking function of the active device in the unpacking group is invalidated, an unpacking function of the standby device is effective, and a backup link between the active device and the standby device is reachable, the active device sends a BGP flow spec route to the packing end, and the active device generates a BGP flow spec ACL. When the active device receives packed traffic, the active device locally redirects the packed traffic to the standby device. When the unpacking function of the standby device is effective and the standby device senses that the unpacking function of the active device is invalidated, the standby device sends a BGP flow spec route to the packing end, and the standby device generates a BGP flow spec ACL.

In a possible implementation, implementations of deploying a backup group in various scenarios are shown in the following Table 1.

**Table 1**

| Scenario | Local unpacking service board | Peer unpacking service board | Whether a backup path is reachable | Local behavior |
|---|---|---|---|---|
| 1 | up | unknown | Reachable | Withdraw a BGP flow spec route |
| 2 | up | unknown | unreachable | Withdraw a BGP flow spec route |
| 3 | down | unknown | Reachable | Withdraw a BGP flow spec route |
| 4 | down | unknown | unreachable | Withdraw a BGP flow spec route |
| 5 | up | up | Reachable | Publish a BGP flow spec route, and perform local unpacking |
| 6 | up | up | unreachable | Publish a BGP flow spec route, and perform local unpacking |
| 7 | down | up | Reachable | Publish a BGP flow spec route, and perform local redirection |
| 8 | down | up | unreachable | Withdraw a BGP flow spec route |
| 9 | up | down | Reachable | Publish a BGP flow spec route, and perform local unpacking |
| 10 | up | down | unreachable | Withdraw a BGP flow spec route |
| 11 | down | down | Reachable | Withdraw a BGP flow spec route |
| 12 | down | down | unreachable | Withdraw a BGP flow spec route |

Each device in the unpacking group senses a state of the peer unpacking service board by using an RBS. For example, an IP addresses of a loopback interface of the active device and an IP addresses of a loopback interface of the standby device are configured as IP addresses used to establish an RBS connection. If the IP addresses are reachable, the RBS connection is established. A state of an unpacking service board of another device in the unpacking group is sensed by using an RBS message. If the peer unpacking service board is down, the RBS message indicates that the peer device is down. If the peer unpacking service board is up, the RBS message indicates that the peer device is up. If the IP addresses are unreachable, the RBS connection cannot be established: The state of the peer unpacking service board cannot be indicated. In this case, the state of the peer unpacking service board is unknown.

The RBS is used to sense a state of the peer end in the unpacking group. If the state is not sensed, the local end cannot determine whether the peer unpacking service board is in the up state or in the down state. In this case, the peer unpacking service board may be in the down state. For example, in the scenarios 1 and 3, although an intermediate link between two devices in the unpacking group is reachable, the state of the peer unpacking service board in the unpacking group is unknown. In the scenario 1, the local unpacking service board is in the up state, but the peer unpacking service board is in the down state. In the scenario 3, the local unpacking service board is in the down state, and the peer end is in the down state but cannot determine the state of the local end. In this case, the peer end considers that the local end may also be in the down state. In this case, the unpacking end device in the down state optionally withdraws the BGP flow spec route, to reduce a case in which a packed packet cannot be unpacked because each device in the unpacking group is in the down state. In other words, the unpacking end device in the up state also withdraws the BGP flow spec route, to avoid a case in which traffic cannot be unpacked because the packing end receives the BGP flow spec route, diverts and packs the traffic, searches a forwarding information base (Forwarding Information Base, FIB) after the packing, and performs load balancing to the unpacking end device in the down state, but the unpacking end device in the down state does not have a BGP ACL because the unpacking end device advertises withdrawal of the packing and deletes a local BGP ACL traffic diversion table, cannot find an unpacking procedure through matching, and cannot perform redirection. Similarly, this is also applicable if the intermediate link is unreachable. Therefore, in the scenario 1, the scenario 2, the scenario 3, and the scenario 4 in Table 1, the BGP flow spec route is withdrawn.

The RBS is used to sense a state. In the scenarios 5, 6, 7, 8, 9, 10, 11, and 12 in Table 1, based on the state of the local end, the state of the peer end in the unpacking group to which the local end belongs, and the state of the backup link, in a scenario in which redirection may be performed, for example, the scenario 7, the unpacking end device does not directly withdraw the flow route, and performs packing processing. In addition, the unpacking end determines, based on the state of the local unpacking service board, the state of the peer unpacking service board in the unpacking group to which the unpacking end belongs, and a reachable state of the backup path, whether a local behavior is to publish the BGP flow spec route for packing and traffic diversion or withdraw the BGP flow spec for packing and traffic diversion. In some embodiments, the unpacking end determines, based on whether to send the BGP flow spec route, whether to generate the BGP FS ACL. For example, if the local end sends the BGP flow spec route, the BGP FS ACL is locally generated. If the local end does not send or withdraw the BGP flow spec route, no BGP FS ACL is locally generated.

### Manner 2 of withdrawing packing: Update a priority

In some embodiments, corresponding priorities are separately provided to indicate that a packing function is validated and the packing function is invalidated, and an unpacking end is controlled to withdraw packing by updating the priority. For example, when the unpacking end needs to control a packing end to perform the packing, the unpacking end further publishes, when publishing a feature of a data flow to the packing end, the priority indicating that the packing function is validated. When the unpacking end needs to control the packing end not to perform the packing any longer, the unpacking end publishes a feature of a data flow again to the packing end, and publishes the priority indicating that the packing function is invalidated, to update the priority of the packing end for the data flow. This is equivalent to setting the priority of the packing end for the data flow from validation to invalidation, so that the packing end withdraws the packing for the specified data flow.

For distinguishing and description, in the following, the priority indicating that the packing function is validated is referred to as a first priority, and the priority indicating that the packing function is invalidated is referred to as a second priority. The first priority is higher than the second priority. Optionally, the first priority is represented by a CPI whose value is not 0, and the second priority is represented by a CPI whose value is 0. Alternatively, the first priority and the second priority are represented by other parameters than the CPI.

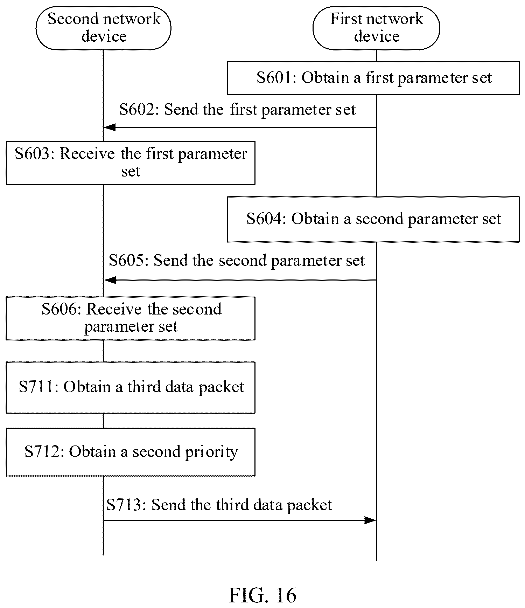

For example, refer to FIG. 16. The embodiment shown in FIG. 16 further includes the following step S604 to step S606 based on S601 to S603.

Step S604: The first network device obtains a second parameter set.

The second parameter set includes a feature of a data flow and a second priority, and the second priority indicates that a packing function is invalidated. The feature of the data flow in the second parameter set is the same as a feature of a data flow in the first parameter set.

In an example scenario, when an unpacking function of the first network device is invalidated, the first network device obtains the second parameter set and sends the second parameter set to the second network device. For example, when detecting that an unpacking module of the first network device is faulty, the first network device obtains the second parameter set and sends the second parameter set to the second network device. For example, when detecting that all unpacking service boards in the first network device are faulty, because the data flow cannot be unpacked on the first network device, the first network device sends the second parameter set to the second network device, to withdraw a packing function of the second network device.

In an example scenario, when the unpacking function of the first network device is disabled, the first network device obtains the second parameter set and sends the second parameter set to the second network device.

In another example scenario, when configuration information of the first network device is deleted, the first network device obtains the second parameter set and sends the second parameter set to the second network device. For example, when a specified data flow no longer needs to be packed, a controller or an administrator sends a deletion instruction to the first network device. The deletion instruction instructs to delete unpacking-related configuration information. The first network device receives the deletion instruction, deletes locally stored unpacking-related configuration information, and sends the second parameter set to the second network device, to withdraw the packing function of the second network device.

In another example scenario, when the first network device cannot sense a state of a third network device that belongs to a same unpacking group as the first network device, the first network device obtains the second parameter set and sends the second parameter set to the second network device. Alternatively, when an intermediate link between the first network device and the third network device is unreachable, the first network device obtains the second parameter set and sends the second parameter set to the second network device.

For example, if an RBS connection between the first network device and the third network device is interrupted, that is, the first network device cannot sense the state of the third network device, because the third network device may be faulty, the first network device sends the second parameter set to the second network device, to withdraw the packing function of the second network device. This reduces a risk of traffic interruption caused because the second network device balances load of a packed data flow to third network device, but the packed data flow cannot be unpacked by the third network device and cannot be redirected from the third network device to the first network device. Similarly, when the intermediate link is unreachable, considering that the third network device cannot redirect the packed data flow to the first network device through the intermediate link, the first network device sends the second parameter set to the second network device, to withdraw the packing function of the second network device.

Step S605: The first network device sends the second parameter set to the second network device.

In some embodiments, a BGP is extended to advertise invalidation of the packing function. For example, the first network device obtains a fourth BGP packet. The fourth BGP packet includes the second parameter set. The first network device sends the fourth BGP packet to the second network device. The fourth BGP packet is, for example, a BGP update packet. The fourth BGP packet is, for example, a BGP flow spec packet, or for another example, a BGP EVPN packet, or may be certainly another type of BGP packet.

For a field carried in the second parameter set, for example, the fourth BGP packet includes an NLRI field and an extended community attribute field, the NLRI field includes the feature of the data flow, and the extended community attribute field includes the second priority. For example, the extended community attribute field includes a sub-type field and a local administrator field. The sub-type field includes a first type. The first type indicates packing. The local administrator field includes the second priority.

In some other embodiments, an IGP is extended to advertise invalidation of the packing function. The first network device obtains a fourth IGP packet. The fourth IGP packet includes the second parameter set. The first network device sends the fourth IGP packet to the second network device. The fourth IGP packet is, for example, an IS-IS packet or an OSPF packet. For example, the IS-IS packet includes a TLV field, a type in the TLV field identifies the packing, and a value field in the TLV field includes the second priority.

Step S606: The second network device receives the second parameter set from the first network device.

In a possible implementation, the second network device determines that the first parameter set and the second parameter set are from a same BGP peer (first network device), where a time point for receiving the second parameter set is closer to a time point for receiving the first parameter set, and updates, based on the second parameter set, a priority corresponding to the feature of the data flow. Specifically, after the second network device receives the second parameter set from the first network device, the second network device searches for a correspondence between the feature of the data flow and the first priority based on the feature of the data flow, and updates the first priority in the correspondence to the second priority.

After obtaining the second parameter set, the second network device may invalidate, based on the second parameter set, the packing function for the data flow. That is, the second network device resumes forwarding the data flow without packing the data flow. A process of forwarding a third data packet in the data flow is used as an example. This embodiment further includes the following step S711 to step S713.

Step S711: The second network device obtains the third data packet. The third data packet includes the feature of the data flow.

A manner of obtaining the third data packet is similar to the manner of obtaining the second data packet. For details, refer to the foregoing descriptions of the manner of obtaining the second data packet.

Step S712: The second network device obtains the second priority based on the third data packet and the feature of the data flow.

In a possible implementation, this step specifically includes the following step A and step B.

Step A: The second network device performs matching between the third data packet and the feature of the data flow.

Step B: In response to determining that the third data packet includes the feature of the data flow, the second network device obtains the second priority based on the feature of the data flow.

For example, the second network device searches for a correspondence between the feature of the data flow and the priority by using the feature of the data flow as an index, to obtain the second priority.

Step S713: The second network device sends the third data packet to the first network device based on the second priority.

The second network device withdraws the packing of the third data packet based on the second priority indicating that the packing is invalidated. In other words, the second network device forwards the third data packet without packing the third data packet.

According to the method provided in this embodiment, in various scenarios in which an unpacking end cannot perform unpacking, for example, an unpacking module is faulty, an unpacking-related configuration is deleted, unpacking is disabled, or a device is upgraded, a packing end controls the packing end to withdraw packing for a specified data flow, so that the data flow is forwarded without being packed. Therefore, this reduces a risk of traffic interruption caused because a packed data flow cannot be unpacked when the data flow reaches the unpacking end, and improves reliability.

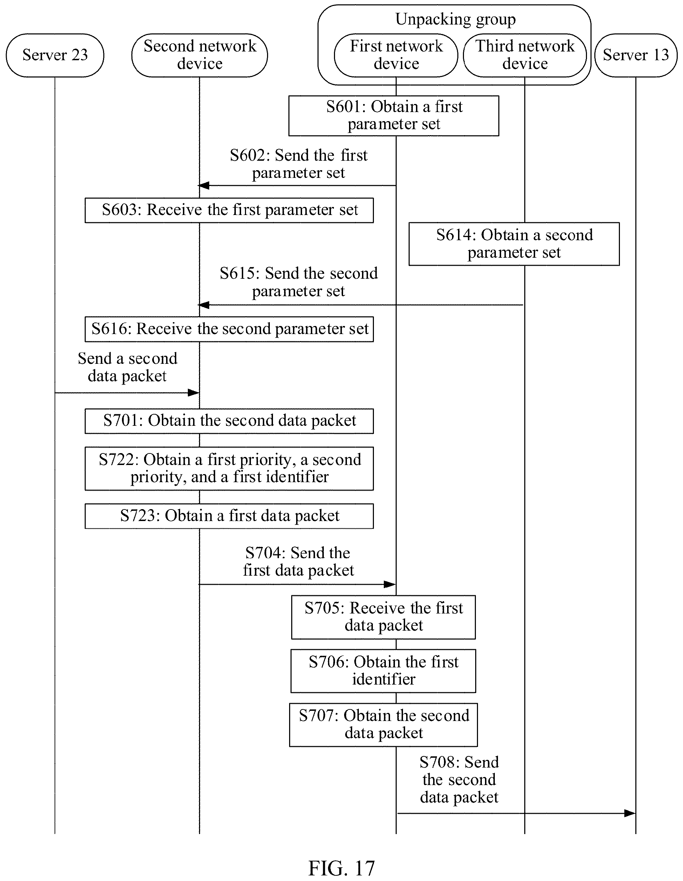

In some embodiments, when an unpacking function of one unpacking end is invalidated and an unpacking function of another unpacking end is effective, the two unpacking ends publish routes with different priorities for a same data flow. One priority indicates that a packing function is effective, and the other priority indicates that the packing function is invalidated. A packing end preferentially selects, based on the priorities, the route for which the packing function is validated, to maintain the packing function when a single unpacking end is faulty. An embodiment shown in FIG. 17 is used as an example below for description. Based on the embodiment shown in FIG. 10, the embodiment shown in FIG. 17 further includes step S614 to step S616. In addition, S702 and S703 in the embodiment shown in FIG. 10 are replaced with the following step S722 and step S723.

Step S614: The third network device obtains a second parameter set. The second parameter set includes a feature of a data flow and a second priority, and the second priority indicates that a packing function is invalidated.

Step S615: The third network device sends the second parameter set to the second network device.

Step S614 and step S615 are performed by the third network device instead of the first network device that performs S604 and S605 in the embodiment in FIG. 16. For implementation details, refer to the embodiment in FIG. 16. For example, when detecting that the unpacking function of the third network device is invalidated or the unpacking function of the third network device is disabled, the third network device sends the second parameter set to the second network device.

Step S616: The second network device receives the second parameter set from the third network device.

In some embodiments, the second network device is based on the feature of the data flow that is advertised by the first network device.

Step S722: The second network device obtains the first priority, the second priority, and a first identifier based on a second data packet and the feature of the data flow.

Step S723: When the first priority is higher than the second priority, the second network device obtains a first data packet based on the first identifier and the second data packet. The first data packet is a data packet obtained by packing the second data packet based on the first identifier.

In a possible implementation, if the second network device determines that the first parameter set and the second parameter set are from different BGP peers (the first network device and the third network device), the second network device selects an effective parameter set from the first parameter set and the second parameter set based on the first priority and the second priority. The second network device preferentially selects the first parameter set when the first priority is higher than the second priority. Therefore, the packing function remains effective. The second network device packs the second data packet based on a compression algorithm corresponding to the first identifier, to obtain the first data packet.

A manner of implementing the first priority and the second priority by using CPIs with different values is used as an example below for description. In the following embodiment, a specific example in which a non-zero CPI is the first priority and a CPI value being 0 is the second priority is used. In RFC 2407, the CPI value 0 is a reserved bit. Therefore, in this embodiment, the CPI value 0 is used to advertise a BGP flow spec route not for packing. In a dual-device scenario, there are the following three cases.

Case 1: Both unpacking devices advertise BGP flow spec routes with non-zero CPIs. In this case, the packing end maintains a packing capability.

Case 2: Two unpacking devices separately advertise a BGP flow spec route with a CPI 0 and a BGP flow spec route with a non-zero CPI. In this case, the packing end maintains a packing capability.

Case 3: Two unpacking devices each advertise a BGP flow spec route with a CPI 0. In this case, the packing end withdraws packing.

In a possible implementation, when the packing end has two routes, the packing end sets a non-zero BGP flow spec route to a high priority according to a BGP flow spec route filtering policy, to maintain the packing capability.

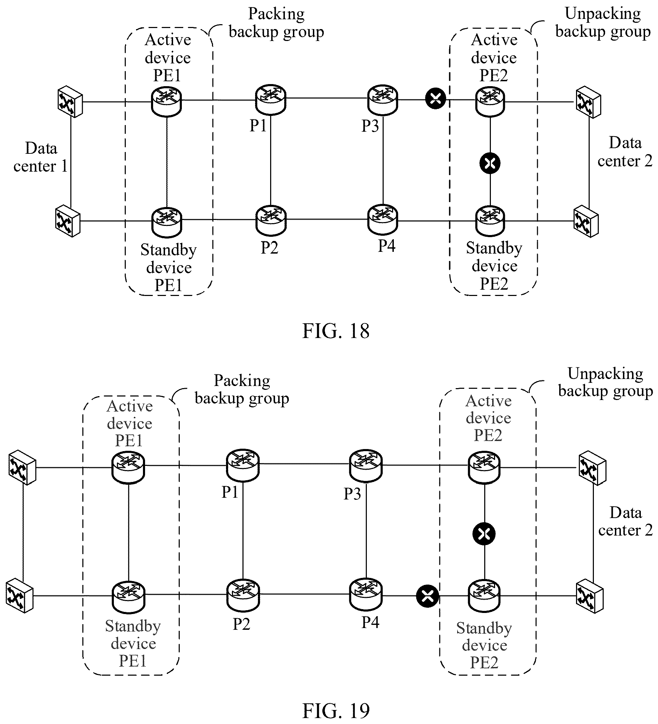

Corresponding to a scenario 1 in the following Table 2, when one unpacking end device in an unpacking group is in an up state, the local end of the unpacking end device publishes a BGP flow spec route whose CPI is not 0; and when the peer end in the unpacking group to which the unpacking end device belongs is in a down state, the unpacking end device advertises a BGP flow spec route whose CPI value is 0. The packing end packs traffic. If packed traffic is forwarded to the peer device in the unpacking group, the peer device redirects the packed traffic to the local end for unpacking. If the packed traffic is forwarded to the local end, the local end unpacks the packed traffic. If the peer device in the same unpacking group is in the up state, the local end publishes the BGP flow spec route whose CPI value is not 0. The packing end packs the traffic and forwards the packed traffic to the local end or the peer end in the unpacking group for unpacking. For example, refer to FIG. 18. FIG. 18 is a specific example of a scenario in which packed traffic cannot be forwarded to an unpacking end. As shown in FIG. 18, a network-side link (a link between an active device PE2 and an intermediate node P3 and a link between the active device PE2 and a standby device PE2 in FIG. 18) of the active device PE2 in an unpacking backup group is faulty. As a result, the packed traffic cannot be sent to the active device PE2. A result of performing the foregoing embodiment in the scenario shown in FIG. 18 is that the standby device PE2 does not advertise withdrawal of packing, and the packed traffic is not load balanced to the active device PE2. This meets an expectation.

Corresponding to a scenario 2 in the following Table 2, for example, refer to FIG. 19. FIG. 19 is a specific example of a scenario in which packed traffic cannot be forwarded to an unpacking end. As shown in FIG. 19, a network-side link (a link between a standby device PE2 and an intermediate node P4 and a link between an active device PE2 and the standby device PE2 in FIG. 18) of the standby device PE2 in an unpacking backup group is faulty. As a result, the packed traffic cannot be sent to the standby device PE2. A result of performing the foregoing embodiment in the scenario shown in FIG. 19 is that the standby device PE2 does not publish a BGP flow spec route. If an unpacking service board of the active device PE2 is normal, the active device PE2 publishes a BGP flow spec route, and traffic is not load balanced to the standby device PE2. If the unpacking service board of the active device PE2 is in the down state, the active device PE2 withdraws the BGP flow spec route. In this case, the packing end does not pack the traffic. This meets an expectation.

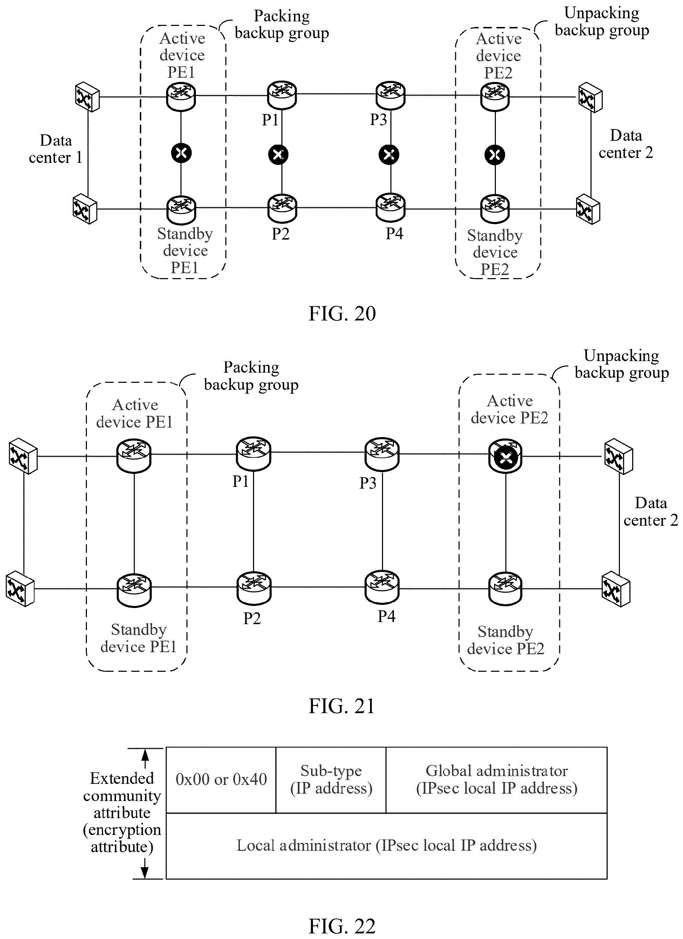

In a scenario 3, when a local unpacking service board is in the down state, one unpacking end device in the unpacking group publishes a BGP flow spec route whose CPI value is 0. When a peer device in the unpacking group to which the unpacking end device belongs is in the down state, the unpacking end device publishes a BGP flow spec route whose CPI value is 0. The BGP flow spec routes received by the packing end are all flow spec routes whose CPI values are 0. Therefore, packing is withdrawn. When the peer device in the unpacking group to which the unpacking end device belongs is in the up state, the unpacking end device publishes a BGP flow spec route whose CPI value is not 0. The packing end has the packing capability and packs traffic. When packed traffic is forwarded to the unpacking end device in the down state, the unpacking end device redirects the packed traffic to the peer device in the unpacking group to which the unpacking end device belongs. When the packed traffic reaches the peer end, the peer end unpacks the traffic. For example, refer to FIG. 20. FIG. 20 is a specific example of a scenario in which packed traffic can be forwarded to an unpacking end. As shown in FIG. 20, a network-side link between an active device PE2 and a standby device PE2 in an unpacking backup group is faulty. The packing end is reachable to the active device PE2, and the packing end is reachable to the standby device PE2. A result of performing the foregoing embodiment in the scenario shown in FIG. 20 is that neither the active device PE2 nor the standby device PE2 advertises withdrawal of packing. The packing end device packs traffic, and packed traffic is forwarded to the active device PE2 and the standby device PE2 through load balancing. The active device PE2 and the standby device PE2 separately unpack received packed traffic. If an unpacking service board of the active device PE2 is faulty, the active device PE2 advertises withdrawal of packing. The packed traffic does not reach the active device PE2. This meets an expectation.

For example, refer to FIG. 21. FIG. 21 is a specific example of a scenario of an entire unpacking end. As shown in FIG. 21, an entire active device PE2 is faulty, and a network-side link is faulty. Packed traffic is not sent to the active device PE2. A result of performing the foregoing embodiment in the scenario shown in FIG. 21 is that a standby device PE2 does not advertise withdrawal of packing, and packed traffic is not load balanced to the active device PE2. This meets an expectation.

**Table 2**

| Scenario | Local unpacking service board | Peer unpacking service board | Whether a backup path is reachable | Local behavior |
|---|---|---|---|---|
| 1 | up | unknown | Reachable | Publish a BGP flow spec route, and perform local unpacking |
| 2 | up | unknown | unreachable | Publish a BGP flow spec route, and perform local unpacking |
| 3 | down | unknown | Reachable | Publish a BGP flow spec route with CPI=0 |
| 4 | down | unknown | unreachable | Publish a BGP flow spec route with CPI=0 |
| 5 | up | up | Reachable | Publish a BGP flow spec route, and perform local unpacking |
| 6 | up | up | unreachable | Publish a BGP flow spec route, and perform local unpacking |
| 7 | down | up | Reachable | Publish a BGP flow spec route, and perform local redirection |
| 8 | down | up | unreachable | Publish a BGP flow spec route with CPI=0 |
| 9 | up | down | Reachable | Publish a BGP flow spec route, and perform local unpacking |
| 10 | up | down | unreachable | Publish a BGP flow spec route with CPI=0 |
| 11 | down | down | Reachable | Publish a BGP flow spec route with CPI=0 |
| 12 | down | down | unreachable | Publish a BGP flow spec route with CPI=0 |

In the foregoing embodiment, a scenario in which two unpacking ends are deployed is used as an example for description. An implementation in a scenario in which more unpacking ends are deployed is similar to this.

The foregoing embodiments focus on a procedure of advertising a packing-related parameter and packing and forwarding a packet by using the advertised parameter. Some embodiments of this application further provide a procedure of advertising an encryption-related parameter and a procedure of encrypting and forwarding a packet by using the advertised parameter. The procedure of advertising an encryption-related parameter may be implemented in combination with the foregoing procedure of advertising a packing-related parameter, and the procedure of encrypting and forwarding a packet may be implemented in combination with the foregoing procedure of packing and forwarding a packet. Alternatively, the procedure of advertising an encryption-related parameter is independently implemented, and does not depend on the foregoing procedure of advertising a packing-related parameter. The procedure of encrypting and forwarding a packet is independently implemented, and does not depend on the foregoing procedure of packing and forwarding a packet. The following specifically describes an implementation related to encryption.

In some embodiments of this application, a decryption end advertises an encryption end of an encryption-related parameter and a feature of a data flow needing to be encrypted, so that the feature of the data flow and the encryption-related parameter are automatically transferred from the decryption end to the encryption end. In this way, the feature of the data flow and the encryption-related parameter do not need to be manually configured on the encryption end, to reduce configuration complexity at the encryption end.

There are a plurality of types of encryption-related parameters advertised by the decryption end. The following uses examples to describe parameters that may be advertised.

### (1) IP address used to establish an encryption tunnel

The foregoing IP address of the decryption end is used to negotiate with the encryption end to establish the encryption tunnel. The IP address is, for example, an IPv4 address of the decryption end, or for another example, an IPv6 address of the decryption end. For the decryption end, the IP address may also be referred to as an internet protocol security (Internet Protocol Security, IPsec) local address, or referred to as an internet key encryption protocol (internet key encryption, IKE) local address. For the encryption end, the IP address may be referred to as an IPsec peer address or an IKE peer address. The IP address may also be referred to as an endpoint IP address of the encryption tunnel. Optionally, the IP address is a destination IP address in a tunnel header of the encryption tunnel. The IP address is optionally a virtual IP address. The IP address is, for example, an IP address of a tunnel interface of the decryption end. In a scenario in which a plurality of decryption ends are deployed for a same flow, a same IP address is optionally configured as an IP address of an encryption tunnel for the plurality of decryption ends, or different IP addresses are configured as IP addresses of different encryption tunnels.

The decryption end advertises the encryption end of the IP address of the encryption tunnel, so that the IP address of the decryption end does not need to be configured on the encryption end, and the encryption end can also initiate, based on the IP address of the decryption end, a packet for negotiating to establish the encryption tunnel, to reduce configuration complexity at the encryption end.

### (2) Identifier of an encryption algorithm

For distinguishing and description, the identifier of the encryption algorithm is referred to as a third identifier below. For example, the third identifier is a name of the encryption algorithm or a number allocated to the encryption algorithm. The encryption algorithm includes but is not limited to a data encryption standard (Data Encryption Standard, DES), a triple data encryption algorithm (Triple Data Encryption Algorithm, 3DES), an advanced encryption standard with cipher block chaining mode using a 128-bit key (Advanced Encryption Standard with Cipher Block Chaining mode using a 128-bit key, AES_CBC_128), an advanced encryption standard with cipher block chaining mode using a 192-bit key (Advanced Encryption Standard with Cipher Block Chaining mode using a 192-bit key, AES_CBC_192), an advanced encryption standard with cipher block chaining mode using a 256-bit key (Advanced Encryption Standard with Cipher Block Chaining mode using a 256-bit key, AES_CBC_256), an advanced encryption standard Galois/Counter mode with 128-bit key and 128-bit authentication tag (Advanced Encryption Standard Galois/Counter Mode with 128-bit key and 128-bit authentication tag, AES-GCM-128-128), an advanced encryption standard Galois/Counter mode with 128-bit key and 192-bit authentication tag (Advanced Encryption Standard Galois/Counter Mode with 128-bit key and 192-bit authentication tag, AES-GCM-128-192), an advanced encryption standard Galois/Counter mode with 128-bit key and 256-bit authentication tag (Advanced Encryption Standard Galois/Counter Mode with 128-bit key and 256-bit authentication tag, AES-GCM-128-256), and the like.

The decryption end advertises the identifier of the encryption algorithm, and the encryption end may select the encryption algorithm advertised by the decryption end to encrypt a specified data flow, so that the encryption algorithm used for the data flow does not need to be pre-configured on the encryption end for encryption, to reduce configuration complexity at the encryption end. In addition, in this way, the encryption end and the decryption end use a same encryption algorithm.

Advertising the third identifier is an optional step. In some other embodiments, when advertising the IP address of the encryption tunnel, the decryption end does not advertise the third identifier, but sends the third identifier to the encryption end in a process of negotiating to establish the encryption tunnel after receiving the packet sent by the encryption end for negotiating to establish the encryption tunnel. Alternatively, both the decryption end and the encryption end use a default encryption algorithm.

### (3) Identifier of an authentication algorithm

An advertised identifier of the authentication algorithm is, for example, an identifier of an IPsec authentication (IPsec Authentication, IPsec AH) authentication algorithm, for another example, an identifier of an IKE authentication algorithm, or for still another example, an identifier of an IPsec encapsulating security payload (IPsec Encapsulating Security Payload, IPsec ESP) authentication algorithm. For distinguishing and description, the identifier of the authentication algorithm is referred to as a fourth identifier below. For example, the fourth identifier is a name of the authentication algorithm, or is a number allocated to the authentication algorithm. An authentication algorithm type includes but is not limited to a message-digest algorithm 5 (Message-Digest Algorithm 5, MD5), a secure Hash algorithm 1 (Secure Hash Algorithm 1, SHA1), and a secure Hash algorithm 2 (256 bits, 384 bits, or 512 bits, or SHA2-256, SHA2-384, or SHA2-512). The decryption end advertises the identifier of the authentication algorithm, and the encryption end may select to use the authentication algorithm advertised by the decryption end to generate a signature. Therefore, the authentication algorithm used for the data flow does not need to be pre-configured on the encryption end to generate the signature, to reduce configuration complexity at the encryption end. In addition, in this way, the encryption end and the decryption end use a same authentication algorithm for a same data flow, to reduce a risk of a processing failure caused by inconsistency between an authentication algorithm used by the encryption end to generate a signature and an authentication algorithm used by the decryption end to verify the signature.

Advertising the fourth identifier is an optional step. In some other embodiments, when advertising the IP address of the encryption tunnel, the decryption end does not advertise the fourth identifier, but sends the fourth identifier to the encryption end in a process of negotiating to establish the encryption tunnel after receiving the packet sent by the encryption end for negotiating to establish the encryption tunnel. Alternatively, both the decryption end and the encryption end use a default authentication algorithm.

### (4) Identifier of a key exchange algorithm

For example, the key exchange algorithm is used to generate a key used for encryption, or is used to generate a key used for authentication. The key exchange algorithm is, for example, a Diffie-Hellman group (Diffie-Hellman group, DH-group) algorithm, for example, a DH-group 1 algorithm, a DH-group 2 algorithm, a DH-group 5 algorithm, a DH-group 14 algorithm, a DH-group 15 algorithm, a DH-group 16 algorithm, a DH-group 19 algorithm, a DH-group 20 algorithm, or a DH-group 21 algorithm.

For distinguishing and description, the identifier of the key exchange algorithm is referred to as a fifth identifier below. For example, the fifth identifier is a name of the key exchange algorithm, or is a number allocated to the key exchange algorithm. The decryption end advertises the identifier of the key exchange algorithm, and the encryption end may select to use the key exchange algorithm advertised by the decryption end to generate a key, so that the key exchange algorithm used for the data flow does not need to be pre-configured on the encryption end to generate the key, to reduce configuration complexity at the encryption end.

Advertising the fifth identifier is an optional step. In some other embodiments, when advertising the IP address of the encryption tunnel, the decryption end does not advertise the fifth identifier, but sends the fifth identifier to the encryption end in a process of negotiating to establish the encryption tunnel after receiving the packet sent by the encryption end for negotiating to establish the encryption tunnel. Alternatively, both the decryption end and the encryption end use a default key exchange algorithm.

### (5) Rekey parameter

The rekey parameter indicates a trigger condition that needs to be met for updating the key. For example, the rekey parameter is a rekey interval, a quantity of packets, or a quantity of bytes. For example, the rekey parameter is internet key exchange security association keying (Internet Key Exchange Security Association rekeying, IKE SA rekey).

Advertising the rekey parameter is an optional step. In some other embodiments, when advertising the IP address of the encryption tunnel, the decryption end does not advertise the rekey parameter, but sends the rekey parameter to the encryption end in a process of negotiating to establish the encryption tunnel after receiving the packet sent by the encryption end for negotiating to establish the encryption tunnel. Alternatively, both the decryption end and the encryption end use a default rekey parameter.

### (6) Authentication mode

The authentication mode includes but is not limited to pre-shared key authentication and certificate authentication. Advertising the authentication mode is an optional step. In some other embodiments, when advertising the IP address of the encryption tunnel, the decryption end does not advertise the authentication mode, but sends the authentication mode to the encryption end in a process of negotiating to establish the encryption tunnel after receiving the packet sent by the encryption end for negotiating to establish the encryption tunnel. Alternatively, both the decryption end and the encryption end use a default authentication mode.

### (7) Encapsulation mode

The encapsulation mode includes a tunnel mode or a transmission mode. Advertising the encapsulation mode is an optional step. In some other embodiments, when advertising the IP address of the encryption tunnel, the decryption end does not advertise the encapsulation mode, but sends the encapsulation mode to the encryption end in a process of negotiating to establish the encryption tunnel after receiving the packet sent by the encryption end for negotiating to establish the encryption tunnel. Alternatively, both the decryption end and the encryption end use a default encapsulation mode.

For a manner in which the decryption end advertises the encryption-related parameter, in some embodiments, the decryption end advertises the encryption end of both the encryption-related parameter and the packing-related parameter of the decryption end. For example, with reference to the embodiment in FIG. 6, the decryption end is, for example, the first network device, and the encryption end is, for example, the encryption end. The first parameter set sent by the first network device to the second network device further includes the foregoing encryption-related parameter, for example, the IP address of the first network device that is used to establish an encryption tunnel, an identifier (third identifier) of an encryption algorithm, an identifier (fourth identifier) of an authentication algorithm, an identifier (fifth identifier) of a key exchange algorithm, a rekey parameter, authentication mode, or an encapsulation mode.

In some embodiments, the first network device includes the encryption-related parameter and a packing-related parameter in a packet, and sends the packet to the second network device.

For example, advertisement is performed according to a BGP. For example, the first network device obtains a first BGP packet, and the first network device sends the first BGP packet to the second network device. The first BGP packet includes a first identifier, a feature of a data flow, and the encryption-related parameter. For example, the first BGP packet is a BGP flow spec packet or a BGP EVPN packet.

For a field carrying the encryption-related parameter, in some embodiments, packing and encryption are separately advertised by using different extended communities of the BGP, so that a receive end can pack and encrypt a specified data flow. For example, the first BGP packet not only includes a first extended community attribute that carries an identifier (first identifier) of a compression algorithm, but also includes the following extended community attribute.

In some embodiments, the first BGP packet further includes a second extended community attribute, and the second extended community attribute includes an IP address of the first network device that is used to establish an encryption tunnel. For example, refer to FIG. 22. The first BGP packet includes the second extended community attribute shown in FIG. 22, and the second extended community attribute includes a sub-type field, a global administrator field, and a local administrator field. The sub-type field includes a second type, and the second type indicates an IP address. The sub-type or the second type may also be referred to as an IPsec local IP address or an IKE local IP address. The global administrator field and the local administrator field include the IP address of the first network device that is used to establish the encryption tunnel. Optionally, in a scenario in which the first network device and the second network device establish an encryption tunnel based on an IPv6 address, an extended community attribute may be added to carry an IPv6 address with more than 8 bytes.

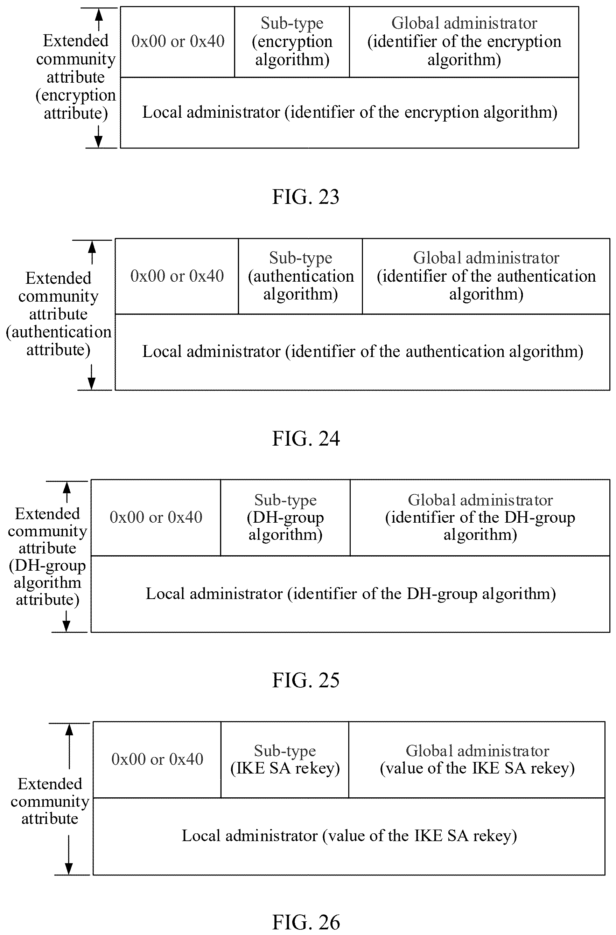

In some embodiments, the first BGP packet further includes a third extended community attribute, and the third extended community attribute includes a third identifier. For example, refer to FIG. 23. The first BGP packet includes the third extended community attribute shown in FIG. 23, and the third extended community attribute includes a sub-type field, a global administrator field, or a local administrator field. The sub-type field includes a third type, and the third type indicates an encryption algorithm. The third type may also be referred to as a sub-type of IKE data encryption. The global administrator field or the local administrator field includes the third identifier.

In some embodiments, the first BGP packet further includes a fourth extended community attribute, and the fourth extended community attribute includes a fourth identifier. For example, refer to FIG. 24. The first BGP packet includes the fourth extended community attribute shown in FIG. 24, and the fourth extended community attribute includes a sub-type field, a global administrator field, or a local administrator field. The sub-type field includes a fourth type, and the fourth type indicates an authentication algorithm. The fourth type may also be referred to as a sub-type of IKE data authentication. The global administrator field or the local administrator field includes the fourth identifier.

In some embodiments, the first BGP packet further includes a fifth extended community attribute, and the fifth extended community attribute includes a fifth identifier. For example, refer to FIG. 25. The first BGP packet includes the fifth extended community attribute shown in FIG. 25, and the fifth extended community attribute includes a sub-type field, a global administrator field, or a local administrator field. The sub-type field includes a fifth type, and the fifth type indicates a key exchange algorithm. For example, the fifth type indicates a DH-group algorithm. The fifth type may also be referred to as a sub-type of the DH-group algorithm. The global administrator field or the local administrator field includes the fifth identifier.

In some embodiments, the first BGP packet further includes a sixth extended community attribute, and the sixth extended community attribute includes a rekey parameter. For example, refer to FIG. 26. The first BGP packet includes the sixth extended community attribute shown in FIG. 26, and the sixth extended community attribute includes a sub-type field, a global administrator field, or a local administrator field. The sub-type field includes a sixth type, and the sixth type indicates the rekey parameter. For example, the sixth type indicates IKE SA rekey. The sixth type may also be referred to as a sub-type of the IKE SA rekey. The global administrator field or the local administrator field includes the rekey parameter.

For example, a parameter is advertised according to an IGP. For example, the first network device obtains a first IGP packet, and the first network device sends the first IGP packet to the second network device. The first IGP packet includes a first identifier, a feature of a data flow, and the encryption-related parameter. For example, the first IGP packet is an OSPF packet or an IS-IS packet.

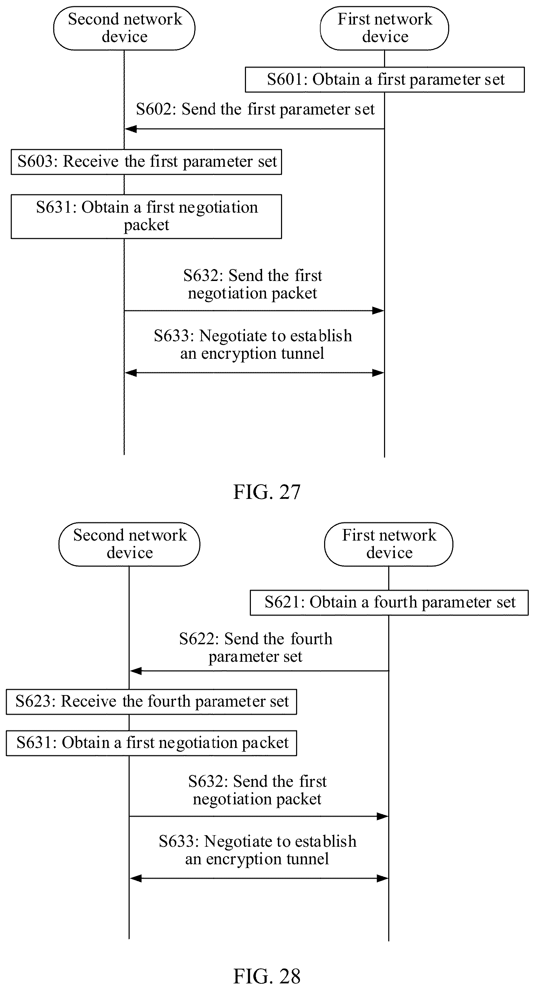

The first network device advertises the second network device of an IP address of the first network device that is used to establish an encryption tunnel. After receiving the IP address of the first network device, the second network device may negotiate with the first network device based on the IP address of the first network device to establish the encryption tunnel. For example, refer to FIG. 27. The embodiment shown in FIG. 27 further includes the following step S631 to step S633 based on S601 to S603.

Step S631: The second network device obtains a first negotiation packet based on an IP address of the first network device.

The first negotiation packet is used to negotiate to establish an encryption tunnel. The first negotiation packet is, for example, an IPsec negotiation packet. In some embodiments, the first negotiation packet includes an IP address that is of the second network device and that is used to establish the encryption tunnel.

Step S632: The second network device sends the first negotiation packet to the first network device.

For example, the second network device sends the first negotiation packet to the first network device based on the IP address advertised by the first network device.

Step S633: The first network device negotiates with the second network device based on the first negotiation packet to establish the encryption tunnel.

In the foregoing embodiment, the first network device advertises the second network device of three types of data: a feature of a data flow, an encryption-related parameter (for example, an IP address of an encryption tunnel), and a packing-related parameter (for example, an identifier of a compression algorithm) together, so that the feature of the data flow does not need to be advertised twice for packing and encryption. In some other embodiments of this application, the first network device first advertises the second network device of the feature of the data flow and the encryption-related parameter, and advertises the second network device of the feature of the data flow and the packing-related parameter, or the first network device first advertises the second network device of the feature of the data flow and the packing-related parameter, and advertises the second network device of the feature of the data flow and the encryption-related parameter. An embodiment in FIG. 28 is used as an example below for description. In the embodiment in FIG. 28, the foregoing step S601 to step S603 are replaced with step S621 to step S623.

Step S621: The first network device obtains a fourth parameter set.

The fourth parameter set is equivalent to replacing a packing-related parameter in a first parameter set with an encryption-related parameter. In other words, the fourth parameter set includes a feature of a data flow and the encryption-related parameter. For example, the fourth parameter set includes the feature of the data flow and an IP address of the first network device that is used to establish an encryption tunnel. Optionally, the fourth parameter set further includes at least one of a third identifier, a fourth identifier, a fifth identifier, a rekey parameter, an authentication mode, or an encapsulation mode.

For how the first network device obtains the fourth parameter set, two manners are used as examples below for description.

### Implementation 1: Delivered by a controller

For example, the controller determines a data flow of interest. The controller determines an encryption algorithm that needs to be used for the data flow. The controller obtains a feature of the data flow and a second identifier. The controller determines a tail node of a forwarding path of the data flow as a decryption end (first network device). The controller sends the feature of the data flow and the second identifier to the first network device. Optionally, the controller further sends at least one of the third identifier, the fourth identifier, the fifth identifier, the rekey parameter, the authentication mode, or the encapsulation mode to the first network device. The data flow of interest is a data flow that needs to be encrypted, or a data flow that needs to be protected by using IPsec. For example, the controller sends a BGP-LS packet to the first network device. The BGP-LS packet includes the feature of the data flow and a first identifier.

Implementation 2: The feature of the data flow and the packing-related parameter are configured on the first network device by using a command line, or the feature of the data flow and the packing-related parameter are configured by a third-party network management system for the first network device.

Step S622: The first network device sends the fourth parameter set to the second network device.

For example, the first network device obtains a fifth BGP packet, and the first network device sends the fifth BGP packet to the second network device. The fifth BGP packet includes the fourth parameter set. The fifth BGP packet is, for example, a BGP update packet. For example, the fifth BGP packet is a BGP flow spec packet or a BGP EVPN packet. For example, an NLRI field in the fifth BGP packet includes the feature of the data flow, and an extended community attribute field in the fifth BGP packet includes the fourth parameter set. For example, the fifth BGP packet includes at least one of the foregoing second extended community attribute, third extended community attribute, fourth extended community attribute, fifth extended community attribute, or sixth extended community attribute.

Step S623: The second network device receives the fourth parameter set from the first network device.

A sequence of advertising the fourth parameter set and the first parameter set is not limited in this embodiment. Optionally, the fourth parameter set and the first parameter set are sequentially advertised. For example, the first parameter set is first advertised and then the fourth parameter set is advertised, or the fourth parameter set is first advertised and then the first parameter set is advertised, or the fourth parameter set and the first parameter set are advertised concurrently. In some other embodiments, only one of the first parameter set and the fourth parameter set may be advertised.

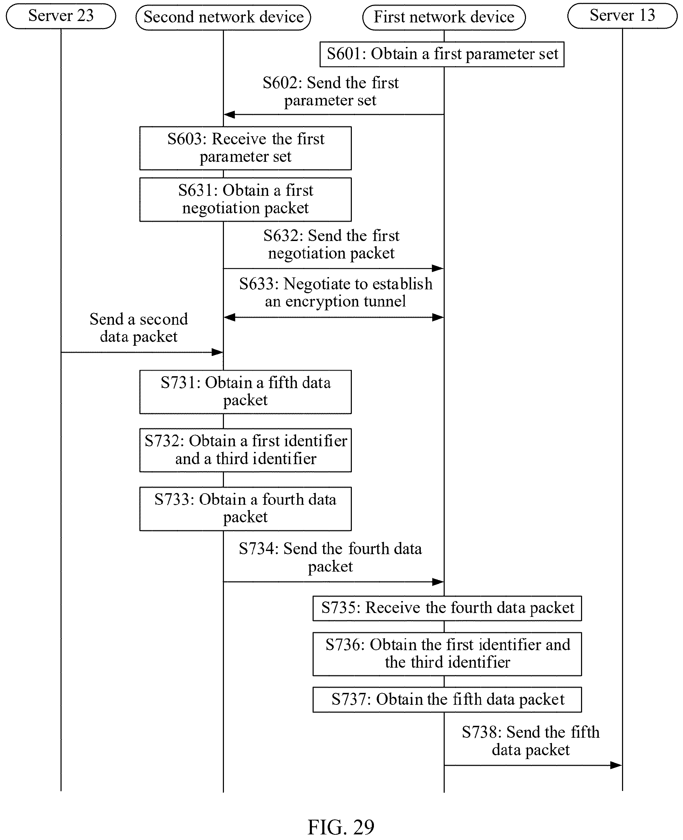

The following describes a data packet forwarding procedure in an encryption plus packing scenario by using an example. In the following embodiment, a data packet is packed and encrypted when being forwarded. For example, refer to FIG. 29. An embodiment shown in FIG. 29 further includes the following step S731 to step S737 based on the foregoing step S601 to step S603 and step S631 to step S633.

Step S731: The second network device obtains a fifth data packet. The fifth data packet includes a feature of a data flow.

Step S732: The second network device obtains a first identifier and a third identifier based on the fifth data packet and the feature of the data flow.

In a possible implementation, this step specifically includes the following step A and step B.

Step A: The second network device performs matching between the fifth data packet and the feature of the data flow.

Step B: In response to determining that the fifth data packet includes the feature of the data flow, the second network device obtains the first identifier and the third identifier based on the feature of the data flow.

In some embodiments, the second network device searches for a correspondence between the feature of the data flow, the first identifier, and the third identifier by using the feature of the data flow as an index, to obtain the first identifier and the third identifier.

In some embodiments, the second network device searches for the correspondence between the feature of the data flow and the first identifier by using the feature of the data flow as an index, to obtain the first identifier. The second network device searches for the correspondence between the feature of the data flow and the third identifier by using the feature of the data flow as an index, to obtain the third identifier.

A sequence of obtaining the first identifier and obtaining the third identifier is not limited in this embodiment. The first identifier may be obtained before the third identifier, or the third identifier may be obtained before the first identifier.

Step S733: The second network device obtains a fourth data packet based on the first identifier, the third identifier, and the fifth data packet.

The fourth data packet is a data packet obtained by packing and encrypting the fifth data packet based on the first identifier and the third identifier. The fourth data packet includes the feature of the data flow. A payload of the fourth data packet is obtained by packing and encrypting a payload of the fifth data packet. For example, step S733 includes the following step S733a and step S733b.

Step S733a: The second network device determines a compression algorithm based on the first identifier, and the second network device packs the payload of the fifth data packet by using the compression algorithm, to obtain a packed payload.

Step S733b: The second network device determines an encryption algorithm based on the third identifier. The second network device encrypts the packed payload by using the encryption algorithm, to obtain a packed payload in a ciphertext form, namely, the payload of the fourth data packet. In this manner, a data packet is packed and encrypted by using a compression algorithm specified by a peer end and an encryption algorithm specified by the peer end. In addition, the packing is performed before the encryption, to avoid impact on a packing effect caused by the packing performed on the payload in the ciphertext form.

In some embodiments, the fourth data packet further includes an IP PCP header. The IP PCP header is encapsulated in an outer layer of the packed and encrypted payload.

In some embodiments, the second network device not only encrypts the payload, but also encapsulates an encryption tunnel header at the outer layer of the encrypted payload. In other words, the fourth data packet further includes the encryption tunnel header, and the encryption tunnel header is, for example, located at an outer layer of an original packet header, and optionally located at an outer layer of the IP PCP header. The encryption tunnel header is, for example, an IPsec header. The encryption tunnel header includes a source address field and a destination address field. The source address field of the encryption tunnel header includes an IP address that is of the second network device and that is used to establish an encryption tunnel, and the destination address field of the encryption tunnel header includes an IP address that is of the first network device and that is used to establish the encryption tunnel. The encryption tunnel header is encapsulated in the outer layer of the IP PCP header.

Step S734: The second network device sends the fourth data packet to the first network device through the encryption tunnel.

For example, the second network device sends the fourth data packet through an IPsec tunnel. In some embodiments, the second network device searches a routing table for an address of a next hop to the first network device by using a destination address of the encryption tunnel header (namely, the IP address of the first network device that is used to establish the encryption tunnel) as an index. The second network device sends the fourth data packet to the next hop based on the address of the next hop. After receiving the fourth data packet, the next hop also forwards the packet based on the destination address of the encryption tunnel header, and so on, so that the fourth data packet is forwarded to the first network device.

Step S735: The first network device receives the fourth data packet from the second network device through the encryption tunnel. The fourth data packet includes the feature of the data flow.

In some embodiments, the first network device parses a destination IP address and a source address in the encryption tunnel header of the fourth data packet, and determines that the destination IP address in the encryption tunnel header is an IPsec local address of the first network device, and the source address in the encryption tunnel header is an IPsec peer address of the first network device. In this case, the first network device determines that the first network device is a tail node of the encryption tunnel, and the first network device strips the encryption tunnel header from the fourth data packet, and performs the following steps based on a data packet obtained by stripping the encryption tunnel header.

Step S736: The first network device obtains the first identifier and the third identifier based on the fourth data packet and the feature of the data flow.

In a possible implementation, this step specifically includes the following step A and step B.

Step A: The first network device performs matching between the fourth data packet and the feature of the data flow.

Step B: In response to determining that the fourth data packet matches the feature of the data flow, the first network device obtains the first identifier and the third identifier based on the feature of the data flow.

A manner in which the first network device obtains the first identifier and the third identifier is similar to the manner in which the second network device obtains the first identifier and the third identifier.

Step S737: The first network device obtains the fifth data packet based on the first identifier, the third identifier, and the fourth data packet.

The fifth data packet is a data packet obtained by unpacking and decrypting the fourth data packet based on the first identifier and the third identifier. The payload of the fifth data packet is obtained by unpacking and decrypting the payload of the fourth data packet. For example, step S737 includes the following step S737a and step S737b.

Step S737a: The first network device determines a decryption algorithm based on the third identifier, and the first network device decrypts the payload of the fourth data packet by using the decryption algorithm, to convert the payload of the fourth data packet from the ciphertext form to a plaintext form.

Step S737b: The first network device determines a decompression algorithm based on the first identifier, and the first network device unpacks the payload in the plaintext form by using the decompression algorithm, to obtain the payload of the fifth data packet. In addition, when the fourth data packet includes the IP PCP header, the first network device strips the IP PCP header.

Step S738: The first network device sends the fifth data packet.

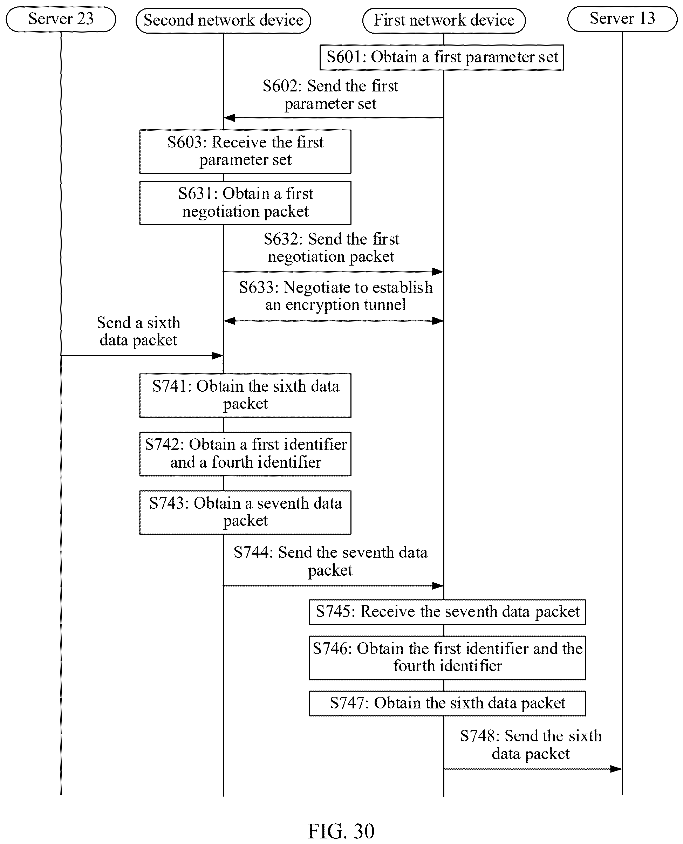

The foregoing embodiment focuses on an encryption procedure, and the following describes an authentication procedure by using an example. The following authentication procedure and encryption procedure may be implemented together or independently. Refer to FIG. 30. The method shown in FIG. 30 includes the following step S741 to step S748.

Step S741: The second network device obtains a sixth data packet. The sixth data packet includes an identifier of a data flow.

Step S742: The second network device obtains a first identifier and a fourth identifier based on the sixth data packet and a feature of the data flow.

In a possible implementation, the second network device stores a correspondence between the feature of the data flow and the fourth identifier. The second network device searches for the correspondence between the feature of the data flow and the fourth identifier by using the feature of the data flow as an index, to obtain the fourth identifier. For a process of obtaining the first identifier, refer to the descriptions in the foregoing embodiment.

Step S743: The second network device obtains a seventh data packet based on the first identifier, the fourth identifier, and the sixth data packet.

The seventh data packet is a data packet obtained by packing the sixth data packet based on the first identifier. The seventh data packet includes a signature obtained based on an authentication algorithm. For example, the second network device packs a payload of the sixth data packet by using a compression algorithm indicated by the first identifier, generates the signature based on a packed payload by using an authentication algorithm indicated by the fourth identifier, and encapsulates the packed payload and the signature to obtain the seventh data packet.

Step S744: The second network device sends the seventh data packet to the first network device through the encryption tunnel.

Step S745: The first network device receives the seventh data packet from the second network device through the encryption tunnel.

Step S746: The first network device obtains the first identifier and the fourth identifier based on the seventh data packet and the feature of the data flow.

Step S747: The first network device obtains the sixth data packet based on the first identifier, the fourth identifier, and the seventh data packet.

For example, the first network device determines the authentication algorithm based on the fourth identifier, and the first network device verifies the signature in the seventh data packet by using the authentication algorithm. If the verification on the signature in the seventh data packet succeeds, the first network device unpacks the payload in the seventh data packet by using a decompression algorithm corresponding to the first identifier, to obtain the sixth data packet. If the verification on the signature in the seventh data packet is invalidated, the first network device withdraws unpacking, and discards the seventh data packet.

Step S748: The first network device sends the sixth data packet.

According to the method provided in this embodiment, a decryption end sends a feature of a data flow and an identifier of an authentication algorithm to an encryption end, so that the encryption end generates a signature for the specified data flow by using the specified authentication algorithm, and the decryption end verifies the signature by using the specified authentication algorithm, to verify data integrity and validity of a data source. In addition, a correspondence between the data flow and the authentication algorithm does not need to be configured on the encryption end.

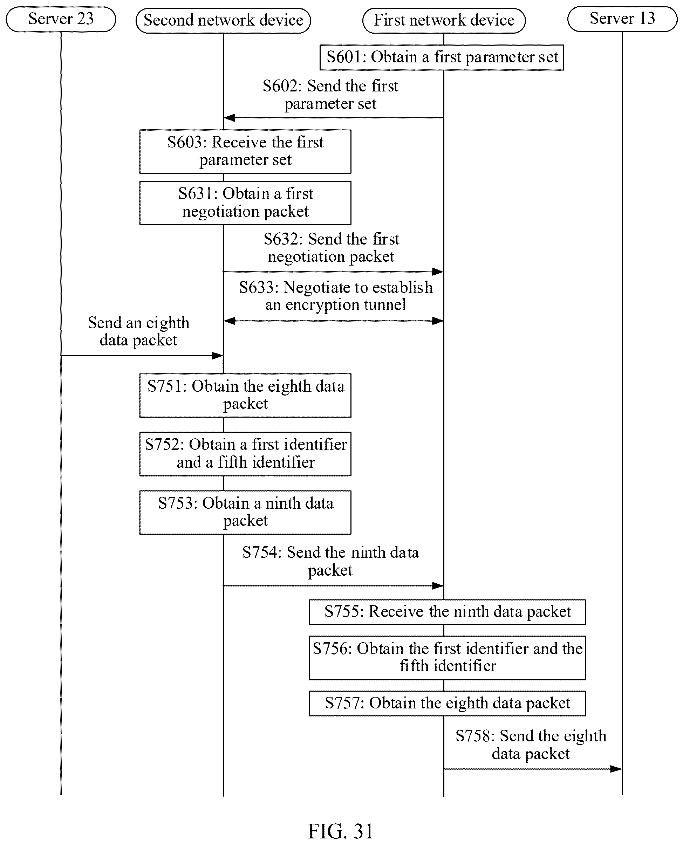

With reference to the embodiment shown in FIG. 31, the following describes application of the foregoing fifth identifier: the key exchange algorithm, by using an example.

Step S751: The second network device obtains an eighth data packet. The eighth data packet includes a feature of a data flow.

Step S752: The second network device obtains a first identifier and a fifth identifier based on the eighth data packet and the feature of the data flow.

Step S753: The second network device obtains a ninth data packet based on the first identifier, the fifth identifier, and the eighth data packet.

The ninth data packet is a data packet obtained by packing and encrypting the eighth data packet based on the first identifier and the fifth identifier. For example, the second network device determines a compression algorithm based on the first identifier, and packs a payload of the eighth data packet by using the compression algorithm, to obtain a packed payload. The second network device determines a key exchange algorithm based on the fifth identifier, and encrypts the packed payload based on a key generated by using the key exchange algorithm, to obtain a packed payload in a ciphertext form. The second network device adds an encryption tunnel header and an IP PCP header to the packed payload in the ciphertext form, to obtain the ninth data packet.

Step S754: The second network device sends the ninth data packet to the first network device through the encryption tunnel.

Step S755: The first network device receives the ninth data packet from the second network device through the encryption tunnel.

Step S756: The first network device obtains the first identifier and the fifth identifier based on the ninth data packet and the feature of the data flow.

Step S757: The first network device obtains the eighth data packet based on the first identifier, the fifth identifier, and the ninth data packet.

For example, the first network device determines the key exchange algorithm based on the fifth identifier, and decrypts the payload in the ninth data packet based on the key generated by using the key exchange algorithm, to obtain a packed payload in a plaintext form. The first network device determines a decompression algorithm based on the first identifier, decrypts the packed payload in the plaintext form by using the decompression algorithm, and strips the encryption tunnel header and the IP PCP header, to obtain the eighth data packet.

Step S758: The first network device sends the eighth data packet.

According to the method provided in this embodiment, a decryption end sends a feature of a data flow and an identifier of a key exchange algorithm to an encryption end, so that the encryption end generates a key by using the specified key exchange algorithm to perform encryption. The decryption end decrypts a packet by using the specified key exchange algorithm, so that the key exchange algorithms of the decryption end and the encryption end are consistent. In addition, a correspondence between the data flow and the key exchange algorithm does not need to be configured on the encryption end, to reduce configuration complexity at the encryption end.

The following further describes in detail the method embodiment of packing plus encryption with reference to components inside the devices.

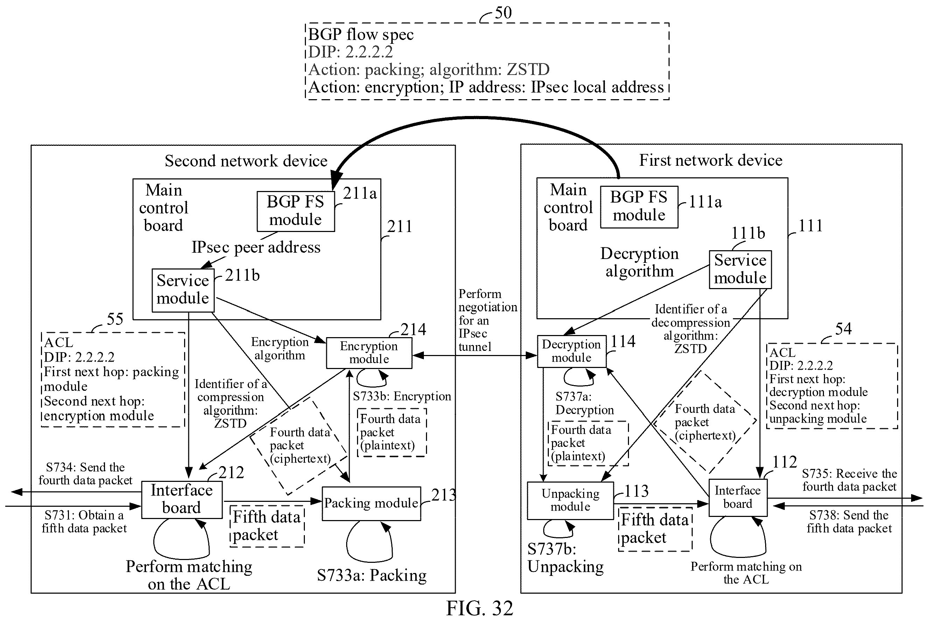

FIG. 32 is a diagram of internal structures of a first network device and a second network device. As shown in FIG. 32, based on the structure shown in FIG. 11, the first network device further includes a decryption module 114. The decryption module 114 is configured to decrypt a data packet based on a decryption algorithm corresponding to an identifier of the decryption algorithm, for example, perform the decryption step S737a. There may be one or more decryption modules 114. For example, the decryption module 114 includes a first decryption module and a second decryption module. The first decryption module and the second decryption module decrypt the packet through load balancing. In some other embodiments, the first decryption module and the second decryption module belong to a same decryption group, one of the first decryption module and the second decryption module is in an active state, and the other decryption module is in a standby state. When one of the first decryption module and the second decryption module is faulty, a decryption task is switched to the other decryption module that is not faulty for execution. When both the first decryption module and the second decryption module are faulty, the first network device may redirect a decryption data flow to a third network device that belongs to a same decryption group as the first network device, to perform the decryption.

Based on the structure shown in FIG. 11, the second network device further includes an encryption module 214. The encryption module 214 is configured to encrypt a data packet based on an encryption algorithm corresponding to an identifier of the encryption algorithm, for example, perform the encryption step S733b. There may be one or more encryption modules 214. For example, the encryption module 214 includes a first encryption module and a second encryption module. The first encryption module and the second encryption module encrypt the packet through load balancing. In some other embodiments, the first encryption module and the second encryption module belong to a same encryption group, one of the first encryption module and the second encryption module is in an active state, and the other encryption module is in a standby state. When one of the first encryption module and the second encryption module is faulty, an encryption task is switched to the other encryption module that is not faulty for execution. When both the first encryption module and the second encryption module are faulty, the second network device may redirect a data flow to a fourth network device that belongs to a same encryption group as the first network device, to perform the encryption.

In some embodiments, in a packing plus encryption scenario, the execution action field in the foregoing unpacking ACL is replaced with forwarding based on a first service chain. The first service chain includes a first next hop and a second next hop. The first next hop is configured to decrypt a packet, and the second next hop is configured to unpack the packet. For example, in a local decryption and unpacking scenario, the first next hop is the decryption module of the first network device, and the second next hop is the unpacking module of the first network device. In a hot standby scenario in which decryption and unpacking are performed by a peer end, the first next hop is the third network device that belongs to the same decryption group as the first network device, and the second next hop is a third network device that belongs to a same unpacking group as the first network device.

For example, as shown in FIG. 32, an ACL generated by the service module 111b in the main control board of the first network device includes a feature of the data flow, an identifier of the first next hop, and an identifier of the second next hop. The service module 111b in the main control board sends the ACL to the interface board 112, so that when the received packet matches the feature of the data flow, the interface board 112 directs the packet to the first service chain based on the correspondence. That is, the packet is forwarded from the interface board 112 to the decryption module 114 and the unpacking module 113 in sequence.

Optionally, the unpacking module and the decryption module are disposed on a same CPU, to reduce a packet detour between CPUs caused by unpacking and decryption performed by using different CPUs. Optionally, the unpacking module and the decryption module are disposed on a same service board, to reduce a packet detour between service boards caused by unpacking and decryption performed by using different service boards.

In some embodiments, in a packing plus encryption scenario, the execution action field in the foregoing unpacking ACL is replaced with forwarding based on a second service chain. The second service chain includes a first next hop and a second next hop. The first next hop is configured to pack a packet, and the second next hop is configured to encrypt the packet. For example, in a local packing and encryption scenario, the first next hop is the packing module 213 of the first network device, and the second next hop is the encryption module 214 of the first network device. In a hot standby scenario in which packing and encryption are performed by a peer end, the first next hop is a fourth network device that belongs to a same packing group as the first network device, and the second next hop is the fourth network device that belongs to the same encryption group as the first network device.

Optionally, the packing module and the encryption module are disposed on a same CPU, to reduce a packet detour between CPUs caused by packing and encryption performed by using different CPUs. Optionally, the packing module and the encryption module are disposed on a same service board, to reduce a packet detour between service boards caused by packing and encryption performed by using different service boards.

For example, after the interface board 212 of the second network device receives a fifth data packet, the interface board 212 performs matching between the fifth data packet and an ACL. In response to that the fifth data packet matches the ACL, the interface board 212 determines the second service chain based on a correspondence between an identifier of the ACL and the second service chain. The interface board 212 sends the fifth data packet to the packing module 213 based on a fact that the first next hop in the second service chain is the packing module 213. The packing module 213 packs a payload of the fifth data packet to obtain a packed payload. The packing module 213 sends a packed packet to the encryption module 214 of the second network device based on a fact that the second next hop in the second service chain is the encryption module 214 of the second network device. The encryption module 214 encrypts the packed payload, and encapsulates an encryption tunnel header to obtain a fourth data packet. The encryption module 214 sends the fourth data packet to the interface board 212, and the interface board 212 sends the fourth data packet based on a destination IP address in the encryption tunnel header.

For example, after the interface board 112 of the first network device receives the fourth data packet, the interface board 112 performs matching between the fourth data packet and the ACL. In response to that the fourth data packet matches the ACL, the interface board 112 determines the first service chain based on a correspondence between the identifier of the ACL and the first service chain. The interface board 112 sends the fifth data packet to the decryption module 114 based on a fact that the first next hop in the first service chain is the decryption module 114 of the first network device. The decryption module 114 decrypts the fifth data packet to obtain a packed payload in a plaintext form. The decryption module 114 sends the packed payload in the plaintext form to the unpacking module 113 of the first network device based on a fact that the second next hop in the first service chain is the unpacking module 113 of the first network device. The unpacking module 113 unpacks the packed payload in the plaintext form to obtain a payload in the plaintext form, namely, the payload of the fifth data packet. The unpacking module 113 sends the fifth data packet to the interface board 112.

In some embodiments, the first network device further advertises the second network device of a BFD identifier. For example, a first parameter set further includes the BFD identifier, and the BFD identifier indicates to establish a BFD session between the first network device and the second network device. The second network device receives the BFD identifier sent by the first network device, and the second network device obtains a second negotiation packet based on the BFD identifier. The second negotiation packet is used to negotiate to establish the BFD session. The second network device sends the second negotiation packet to the first network device. The first network device establishes the BFD session with the second network device based on the second negotiation packet. For example, the first network device sends a BGP flow spec packet to the second network device. The BGP flow spec packet includes an extended community attribute field, and the extended community attribute field includes the BFD identifier. In the foregoing manner, the second network device automatically initiates negotiation of the BFD session, to reduce configuration complexity of pre-configuring the BFD session on the second network device.

In combination with a BFD detection function, in a scenario in which an unpacking group is deployed, when a BFD session between a packing end and one device in the unpacking group is in a down state, a packed data flow may be forwarded to another device. For example, after the second network device sends the second negotiation packet to the first network device, the method further includes: The second network device obtains a tenth data packet. The tenth data packet includes the feature of the data flow. The second network device obtains a first identifier based on the tenth data packet and the feature of the data flow. The second network device obtains an eleventh data packet based on the first identifier and the tenth data packet. The eleventh data packet is a data packet obtained by packing the tenth data packet based on the first identifier. When the BFD session between the second network device and the first network device is in the down state, the second network device sends the eleventh data packet to the third network device that belongs to the same unpacking group as the first network device.

In some embodiments, the first parameter set further includes a sixth identifier. The sixth identifier indicates a role of the first network device in an active/standby scenario or a role of the first network device in a load balancing scenario.

In the active/standby scenario, the second network device preferentially sends a packet to an active device based on the sixth identifier. For example, the first network device and the third network device belong to the same unpacking group, the role of the first network device is the active device, and a role of the third network device is the standby device. The first network device advertises the second network device of a feature of one data flow and the sixth identifier, where the sixth identifier indicates active, to indicate that the first network device is the active device for the data flow. The third network device advertises the second network device of the feature of the data flow and the sixth identifier, where the sixth identifier indicates standby, to indicate that the third network device is the standby device for the data flow. After the second network device receives the data packet, if the data packet matches the feature of the data flow, the second network device packs the data packet to obtain a packed packet. The second network device obtains, based on the feature of the data flow, the sixth identifier advertised by the first network device and the sixth identifier advertised by the third network device. The second network device determines, based on the sixth identifiers advertised by the two network devices, that the first network device is the active device. The second network device sends the packed data packet to the first network device.

In the load balancing scenario, the second network device forwards the packet based on the sixth identifier through load balancing. For example, the first network device and the third network device belong to the same unpacking group, the role of the first network device is the active device, and a role of the third network device is the active device. The first network device advertises the second network device of a feature of one data flow and the sixth identifier, where the sixth identifier indicates active. The third network device advertises the second network device of the feature of the data flow and the sixth identifier, where the sixth identifier indicates active. The second network device determines, based on a fact that the feature of the data flow that is advertised by the first network device is the same as the feature of the data flow that is advertised by the third network device, that the data flow may be forwarded to a destination end via the first network device, or may be forwarded to the destination end via the third network device. In other words, the first network device and the third network device have a backup relationship. After the second network device receives the data packet, if the data packet matches the feature of the data flow, the second network device packs the data packet to obtain a packed packet. The second network device selects, through load balancing and based on the sixth identifier advertised by the first network device and the sixth identifier advertised by the third network device, one network device from the first network device and the third network device, and sends the packed data packet to the selected network device.

A configuration model provided in an embodiment of this application is described below by using an example.

### Configuration model at an unpacking end

For example, the following step (1) to step (4) are performed on a device, so that the device is configured as the unpacking end (first network device) in the foregoing embodiment, and the device performs the process performed by the first network device in the foregoing method embodiment.

Step (1): Configure a BGP peer.
bgp 100
private-4-byte-as enable//Enable a BGP process, specify a process number as 100, and enable usage of a 4-byte AS number.
peer 2.2.2.2 as-number 100//Specify an IP address of the peer as 2.2.2.2, and set the AS number to 100.
ipv4-family unicast
peer 2.2.2.2 enable//Establish a BGP peer relationship with the peer 2.2.2.2.
ipv4-family flow
peer 2.2.2.2 enable

Step (2): Configure a CPU that performs unpacking.

Step (2-a): Configure an unpacking group by using the following command lines. One unpacking group includes a plurality of unpacking modules. For example, one unpacking group includes a plurality of CPUs or a plurality of service boards.
service-location 1//"location 1" represents one unpacking group
service-location 2//"location 2" represents another unpacking group

Step (2-b): Group the CPUs or the service boards into corresponding unpacking groups by using the following command lines, for example, group a CPU whose slot number is 1 and whose name is engine 0 into an unpacking group identified by the location 1, and group a CPU whose slot number is 1 and whose name is engine 1 into an unpacking group identified by the location 2.
[service-location-1] location slot 1 engine 0
[service-location-2] location slot 1 engine 1

Step (2-c): Configure a service group by using the following command lines. The service group includes a plurality of unpacking groups, and the plurality of unpacking groups in the service group are used for load balancing.
service-instance-group test
[service-instance-group] service-location 1
[service-instance-group] service-location 2
[service-instance-group] remote-backup-service test

Step (3): Configure an ACL rule by using the following command lines. The ACL rule includes a 5-tuple sent to the peer according to a BGP FS.
acl 3000;
rule permit tcp source 10.1.1.1 0 source-port eq 1111 destination 20.1.1.1 0 destination-port eq 2222 [vpn-instance].

The foregoing configuration means that an ACL number is 3000. If a source IP address of a packet is 10.1.1.1, a destination IP address is 20.1.1.1, a source port number is 1111, a destination port number is 2222, and a protocol is a TCP, the packet matches the ACL.

Step (4): Configure an unpacking instance by using the following command lines.
data-processing instance test
[data-processing-instance-test] data-processing type unpack
[data-processing-instance-test] data-processing algorithm zstd
[data-processing-instance-test] service-instance-group test
[data-processing-instance-test] bind acl 3000

The foregoing configuration means that a name of the unpacking instance is data-processing instance test, an action type of the unpacking instance is unpacking (unpack), a compression algorithm is ZSTD, and the unpacking instance corresponds to a data pack service group (service-instance-group test). A binding relationship is established between the unpacking instance and the ACL 3000.

### Configuration model at a packing end

For example, the following step (1) to step (4) are performed on a device, so that the device is configured as the packing end (second network device) in the foregoing embodiment, and the device performs the foregoing process performed by the second network device.

Step (1): Configure a BGP peer.
bgp 100
private-4-byte-as enable
peer 1.1.1.1 as-number 100
ipv4-family unicast
peer 1.1.1.1 enable
ipv4-family flow
peer 1.1.1.1 enable

Step (2): Configure a CPU that performs packing.

Step (2-a): Configure a packing group by using the following command lines. The packing group includes a plurality of packing modules. For example, one packing group includes a plurality of CPUs or a plurality of service boards.
service-location 1//"location 1" represents one packing group
service-location 2//"location 2" represents another packing group

Step (2-b): Group the CPUs or the service boards into corresponding packing groups by using the following command lines, for example, group a CPU whose slot number is 1 and whose name is engine 0 into a packing group identified by the location 1, and group a CPU whose slot number is 1 and whose name is engine 1 into a packing group identified by the location 2.
[service-location-1] location slot 1 engine 0
[service-location-2] location slot 1 engine 1

Step (2-c): Configure a service group by using the following command lines. The service group includes a plurality of packing groups, and the plurality of packing groups in the service group are used for load balancing.
service-instance-group test
[service-instance-group] service-location 1
[service-instance-group] service-location 2

Step (3): Configure a packing instance by using the following command lines.
data-processing instance test
[data-processing-instance-test] data-processing type pack
[data-processing-instance-test] data-processing algorithm zstd
[data-processing-instance-test] service-instance-group test
Configuration model at a decryption end

For example, the following step (1) to step (4) are performed on a device, so that the device is configured as the decryption end (first network device) in the foregoing embodiment, and the device performs the process performed by the first network device in the foregoing method embodiment.

Step (1): Configure a BGP peer.
bgp 100
private-4-byte-as enable
peer 2.2.2.2 as-number 100
ipv4-family unicast
peer 2.2.2.2 enable
ipv4-family flow
peer 2.2.2.2 enable

Step (2): Configure an ACL rule by using the following command lines. The ACL rule includes a 5-tuple sent to the peer according to a BGP FS.
acl 3000
[acl4-advance-3000] rule permit tcp source 10.1.1.1 0 source-port eq 1111 destination 20.1.1.1 0 destination-port eq 2222 [vpn-instance]

The foregoing configuration means that an ACL number is 3000. If a source IP address of a packet is 10.1.1.1, a destination IP address is 20.1.1.1, a source port number is 1111, a destination port number is 2222, and a protocol is a TCP, the packet matches the ACL.

Step (3): Configure, by using the following command lines, a service instance for decryption.

Step (3-a): Configure a decryption authentication group.
service-location 2

Step (3-b): Group a CPU or a service board into a corresponding decryption authentication group, for example, group a CPU whose slot number is 2 and whose card number is 0 into a decryption authentication group identified by the location 2.
[service-location-2] location slot 2 card 0

Step (3-c): Configure an IPsec service group.
service-instance-group IPsec_test
[service-instance-group] service-location 2
[service-instance-group] remote-backup-service test

Step (3-d): Configure a decryption instance.
IPsec instance IPsec_test

[IPsec-instance-test] ip address 10.10.1.1 255.255.255.0\\Configure a local IKE address (IPsec tunnel address) for IPsec tunnel negotiation.

[IPsec-instance-test] ike sa rekey 7200\\Configure IKE SA rekey duration, and perform renegotiation for an encryption key and an authentication key of an IKE protocol at a specified interval based on the configured duration. Configuring the IKE SA rekey duration is an optional step. If the IKE SA rekey duration is not configured, the IKE SA rekey duration is 12800s by default.

[IPsec-instance-test] ike DPD 20\\Configure Internet key exchange dead peer detection (Internet Key Exchange Dead Peer Detection, IKE DPD) duration, and perform IKE tunnel keepalive detection based on the configured duration. Configuring the IKE DPD duration is an optional step. If the IKE DPD duration is not configured, the IKE DPD duration is 5 seconds by default.

[IPsec-instance-test] ike encryption-algorithm aes-cbc 256\\Configure an IKE encryption algorithm, and perform negotiation for matching based on the algorithm. The negotiation succeeds when algorithms on the two ends match with each other. Configuring the IKE encryption algorithm is an optional step. If the IKE encryption algorithm is not configured, the IKE encryption algorithm is AES_CBC _256 by default.

[IPsec-instance-test] ike authentication-algorithm aes-cbc 256\\Configure an IKE authentication algorithm, and perform negotiation for matching based on the algorithm. The negotiation succeeds only when algorithms on the two ends match with each other. Configuring the IKE authentication algorithm is an optional step. If the IKE authentication algorithm is not configured, the IKE authentication algorithm is AES_CBC_256 by default.

[IPsec-instance-test] ike dh group15\\Configure a DH-group algorithm, and perform negotiation for matching based on the algorithm. The negotiation succeeds only when algorithms on the two ends match with each other. Configuring the DH-group algorithm is an optional step. If the DH-group algorithm is not configured, the DH-group algorithm is a DH-group 14 by default.

[IPsec-instance-test] IPsec sa rekey 1000\\Configure IPsec SA rekey duration, and renegotiate an encryption key and an authentication key of an IPsec tunnel at a specified interval based on the configured duration. Configuring the IPsec SA rekey duration is an optional step. If the IPsec SA rekey duration is not configured, the IPsec SA rekey duration is 3600s by default.

[IPsec-instance-test] IPsec ah authentication-algorithm sha2-384\\Configure an IPsec AH authentication algorithm, and perform negotiation for matching based on the IPsec AH authentication algorithm. The negotiation succeeds only when algorithms on the two ends match with each other. Configuring the IPsec AH authentication algorithm is an optional step. If the IPsec AH authentication algorithm is not configured, the IPsec AH authentication algorithm is SHA2-256 by default.

[IPsec-instance-test] IPsec esp encryption-algorithm AES_CBC_128\\Configure an IPsec ESP authentication algorithm, and perform negotiation for matching based on the IPsec ESP authentication algorithm. The negotiation succeeds only when algorithms on the two ends match with each other. Supported IPsec ESP authentication algorithm types include DES, 3DES, AES_CBC_128, AES_CBC_192, AES_CBC_256, AES-GCM-128-128, AES-GCM-128-192, and AES-GCM-128-256. Configuring the IPsec ESP authentication algorithm is an optional step. If the IPsec ESP authentication algorithm is not configured, the IPsec ESP authentication algorithm is AES_CBC _256 by default.

[IPsec-instance-test] pre-shared-keycipher\\Configure an IKE to perform negotiation for a pre-shared key. An agreement needs to be reached between two parties of the negotiation. One of two authentication modes: the pre-shared key and certificate authentication, is selected for usage.

[IPsec-instance-test] certificate local-filename local.cer\\Configure an IKE to perform negotiation for an authenticated local certificate.

[IPsec-instance-test] psulation-mode transform\\Configure an IPsec forwarding packet encapsulation mode. Configuring the IPsec forwarding packet encapsulation mode is an optional step. If the IPsec forwarding packet encapsulation mode is not configured, the IPsec forwarding packet encapsulation mode is a tunnel mode by default.

[IPsec-instance-test] service-instance-group IPsec_test\\Bind an IPsec service group.

### Configuration model at an encryption end

For example, the following step (1) to step (4) are performed on a device, so that the device is configured as the encryption end (first network device) in the foregoing embodiment, and the device performs the foregoing process performed by the first network device.

Step (1): Configure a BGP peer.
bgp 100
private-4-byte-as enable
peer 1.1.1.1 as-number 100
ipv4-family unicast
peer 1.1.1.1 enable
ipv4-family flow
peer 1.1.1.1 enable

Step (2): Configure and deploy a service instance.

Step (2-a): Configure an encryption authentication group.
service-location 2

Step (2-b): Group a CPU and a board that are used for encryption authentication into an encryption authentication group, for example, group a CPU whose slot number is 2 and whose card number is 0 into an encryption authentication group identified by the location 2.
[service-location-2] location slot 2 card 0

Step (2-c): Configure an IPsec service group.
service-instance-group IPsec_test
[service-instance-group] service-location 2
[service-instance-group] remote-backup-service test

Step (2-d): Configure an encryption instance.
data-processing instance IPsec_test
[IPsec-instance-test] ip address 10.10.1.1 255.255.255.0

[IPsec-instance-test] ike sa rekey 7200\\Configure IKE SA rekey duration, and perform renegotiation for an encryption key and an authentication key of an IKE protocol at a specified interval based on the configured duration. Configuring the IKE SA rekey duration is an optional step. If the IKE SA rekey duration is not configured, the IKE SA rekey duration is 12800 seconds by default.

[IPsec-instance-test] ike DPD 20\\Configure IKE DPD duration, and perform IKE tunnel keepalive detection based on the configured duration. Configuring the IKE DPD duration is an optional step. If the IKE DPD duration is not configured, the IKE DPD duration is 5 seconds by default.

[IPsec-instance-test] ike encryption-algorithm aes-cbc 256\\Configure an IKE encryption algorithm, and perform negotiation for matching based on the algorithm. The negotiation succeeds when algorithms on the two ends match with each other. Supported encryption algorithm types include DES, 3DES, AES_CBC_128, AES_CBC_192, AES_CBC_256, AES-GCM-128-128, AES-GCM-128-192, and AES-GCM-128-256. Configuring the IKE encryption algorithm is an optional step. If the IKE encryption algorithm is not configured, the IKE encryption algorithm is AES_CBC_256 by default.

[IPsec-instance-test] ike authentication-algorithm aes-cbc 256\\Configure an IKE authentication algorithm, and perform negotiation for matching based on the algorithm. The negotiation succeeds only when algorithms on the two ends match with each other. Supported IKE authentication algorithm types include MD5, SHA1, SHA2-256, SHA2-384, and SHA2-512. Configuring the IKE authentication algorithm is an optional step. If the IKE authentication algorithm is not configured, the IKE authentication algorithm is AES_CBC_256 by default.

[IPsec-instance-test] ike dh group15\\Configure a DH-group algorithm, and perform negotiation for matching based on the algorithm. The negotiation succeeds only when algorithms on the two ends match with each other. Supported DH-group algorithms include DH-group 1, DH-group 2, DH-group 5, DH-group 14, DH-group 15, DH-group 16, DH-group 19, DH-group 20, DH-group 21, and the like. Configuring the DH-group algorithm is an optional step. If the DH-group algorithm is not configured, the DH-group algorithm is DH-group 14 by default.

[IPsec-instance-test] IPsec sa rekey 100\\Configure IPsec SA rekey duration, and perform renegotiation for an encryption key and an authentication key of an IPsec tunnel at a specified interval based on the configured duration. Configuring the IPsec SA rekey duration is an optional step. If the IPsec SA rekey duration is not configured, the IPsec SA rekey duration is 3600 seconds by default.

[IPsec-instance-test] IPsec ah authentication-algorithm sha2-384\\Configure an IPsec AH authentication algorithm, and perform negotiation for matching based on the IPsec AH authentication algorithm. The negotiation succeeds only when algorithms on the two ends match with each other. Supported IPsec AH authentication algorithms include MD5, SHA1, SHA2-256, SHA2-384, and SHA2-512. Configuring the IPsec AH authentication algorithm is an optional step. If the IPsec AH authentication algorithm is not configured, the IPsec AH authentication algorithm SHA2-256 by default.

[IPsec-instance-test] IPsec esp authentication-algorithm sha2-384\\Configure an IPsec ESP authentication algorithm. Supported ESP authentication algorithm types include MD5, SHA1, SHA2-256, SHA2-384, and SHA2-512. Configuring the IPsec ESP authentication algorithm is an optional step. If the IPsec ESP authentication algorithm is not configured, the IPsec ESP authentication algorithm SHA2-256 by default.

[IPsec-instance-test] IPsec esp encryption-algorithm AES_CBC_128\\Configure an IPsec ESP encryption algorithm. Supported IPsec ESP encryption algorithms include DES, 3DES, AES_CBC_128, AES_CBC_192, AES_CBC_256, AES-GCM-128-128, AES-GCM-128-192, and AES-GCM-128-256. Configuring the IPsec ESP encryption algorithm is an optional step. If the IPsec ESP encryption algorithm is not configured, the IPsec ESP encryption algorithm is AES_CBC_256 by default.

[IPsec-instance-test] pre-shared-keycipher\\Configure an IPsec pre-shared key. One of two authentication modes: the pre-shared key and certificate authentication, is selected for usage.

[IPsec-instance-test] certificate local-filename local.cer\\Import a private key file provided by a certificate authority if the certificate authentication is used.

[IPsec-instance-test] psulation-mode transform\\Configure an IPsec forwarding packet encapsulation mode. Configuring the IPsec forwarding packet encapsulation mode is an optional step. If the IPsec forwarding packet encapsulation mode is not configured, a tunnel mode is used by default.
[IPsec-instance-test] service-instance-group IPsec_test
[IPsec-instance-test] bind acl 3000\\Bind an IPsec service instance to the ACL 3000.

### Configuration model for unpacking plus decryption

For example, the following step (1) to step (4) are performed on a device, and the device is configured as the unpacking end and also the decryption end in the foregoing embodiment, so that the device performs a process of publishing a packing-related parameter and a decryption-related parameter, and unpacking and decrypting a data packet.

Step (1): Configure a BGP peer, and exchange a BGP flow spec packet with the BGP peer, to publish the packing-related parameter and an encryption-related parameter.
bgp 100
private-4-byte-as enable
peer 2.2.2.2 as-number 100
ipv4-family unicast
peer 2.2.2.2 enable
ipv4-family flow
peer 2.2.2.2 enable

Step (2): Configure and deploy a service instance.

Step (2-a): Configure a pack backup group.
service-location 1
Configure an encryption authentication backup group.
service-location 2

Step (2-b): Group a CPU and a board that are used for encryption authentication into an encryption authentication group, for example, group a CPU whose slot number is 1 and whose card number is 0 into an encryption authentication group identified by the location 1, and group a CPU whose slot number is 2 and whose card number is 0 into the encryption authentication group identified by the location 2.
[service-location-1] location slot 1 card 0
[service-location-2] location slot 2 card 0

Step (2-c): Configure a data packing service group.
service-instance-group pack_test
[service-instance-group] service-location 1
[service-instance-group] remote-backup-service test
IPsec service group
service-instance-group IPsec_test
[service-instance-group] service-location 2
[service-instance-group] remote-backup-service test

Step (2-d): Configure the service instance.

Configure a packing service instance by using the following command lines.

### data-processing instance pack_test

[data-processing-instance-test] data-processing type unpack//Configure a service type of the instance as unpacking.

[data-processing-instance-test] data-processing algorithm zstd//Configure a compression algorithm.

[data-processing-instance-test] service-instance-group pack_test//Bind a packing service group.

Configure an encryption service instance by using the following command lines.

### IPsec instance IPsec_test

[DEVICE-IPsec-instance-test] ip address 10.10.1.1 255.255.255.0\\Configure a local IKE address for IPsec tunnel negotiation.

[DEVICE-IPsec-instance-test] ike sa rekey 7200\\Configure IKE SA rekey duration, and perform renegotiation for encryption and authentication keys of an IKE protocol at a specified interval based on the configured duration. Configuring the IKE SA rekey duration is an optional step. If the IKE SA rekey duration is not configured, the IKE SA rekey duration is 12800 seconds by default.

[DEVICE-IPsec-instance-test] ike DPD 20\\Configure IKE DPD duration, and perform IKE tunnel keepalive detection based on the configured duration. Configuring the IKE DPD duration is an optional step. If the IKE DPD duration is not configured, the IKE DPD duration is 5 seconds by default.

[DEVICE-IPsec-instance-test] ike encryption-algorithm aes-cbc 256\\Configure an IKE encryption algorithm, and perform negotiation for matching based on the algorithm. The negotiation succeeds only when algorithms on the two ends match with each other. Supported IKE encryption algorithm types include DES, 3DES, AES_CBC_128, AES_CBC_192, AES_CBC_256, AES-GCM-128-128, AES-GCM-128-192, and AES-GCM-128-256. Configuring the IKE encryption algorithm is an optional step. If the IKE encryption algorithm is not configured, the IKE encryption algorithm is aes-cbc 256 by default.

[DEVICE-IPsec-instance-test] ike authentication-algorithm aes-cbc 256\\Configure an IKE authentication algorithm, and perform negotiation for matching based on the algorithm. The negotiation succeeds only when algorithms on the two ends match with each other. Supported IKE authentication algorithm types include MD5, SHA1, SHA2-256, SHA2-384, and SHA2-512. Configuring the IKE authentication algorithm is an optional step. If the IKE authentication algorithm is not configured, the IKE authentication algorithm is aes-cbc 256 by default.

[DEVICE-IPsec-instance-test] ike dh group 15\\Configure a DH-group algorithm, and perform negotiation for matching based on the algorithm. The negotiation succeeds only when algorithms on the two ends match with each other. Supported DH-group algorithms include DH-group 1, DH-group 2, DH-group 5, DH-group 14, DH-group 15, DH-group 16, DH-group 19, DH-group 20, or DH-group 21. Configuring the DH-group algorithm is an optional step. If the DH-group algorithm is not configured, the DH-group algorithm is DH-group 14 by default.

[DEVICE-IPsec-instance-test] IPsec sa rekey 1000\\Configure IPsec SA rekey duration, and perform renegotiation for an encryption key and an authentication key of an IPsec tunnel at a specified interval based on the configured duration. Configuring the IPsec SA rekey duration is an optional step. If the IPsec SA rekey duration is not configured, the IPsec SA rekey duration is 3600 seconds by default.

[DEVICE-IPsec-instance-test] IPsec ah authentication-algorithm sha2-384\\Configure an IPsec AH authentication algorithm, and perform negotiation for matching based on the algorithm. The negotiation succeeds only when algorithms on the two ends match with each other. Supported IPsec AH authentication algorithm types include message digest algorithm 5 (Message Digest Algorithm 5, MD5), secure hash algorithm 1 (Secure Hash Algorithm 1, SHA1), secure hash algorithm 2-256 (Secure Hash Algorithm 2-256, SHA2-256), secure hash algorithm 2-384 (Secure Hash Algorithm 2-384, SHA2-384), and secure hash algorithm 2-512 (Secure Hash Algorithm 2-512, SHA2-512). Configuring the IPsec AH authentication algorithm is an optional step. If the IPsec AH authentication algorithm is not configured, the IPsec AH authentication algorithm is SHA2-256 by default.

[DEVICE-IPsec-instance-test] IPsec esp encryption-algorithm AES_CBC_128\\Configure an IPsec authentication algorithm, and perform negotiation for matching based on the algorithm. The negotiation succeeds only when algorithms on the two ends match with each other. Supported IPsec authentication algorithm types include DES, 3DES, AES_CBC_128, advanced encryption standard with cipher block chaining mode using a 192-bit key, AES_CBC_192, advanced encryption standard with cipher block chaining mode using a 256-bit key, AES_CBC_256, advanced encryption standard using a 128-bit key and a 128-bit authentication label (AES-GCM-128-128), AES-GCM-128-192, and AES-GCM-128-256. Configuring the IPsec authentication algorithm is an optional step. If the IPsec authentication algorithm is not configured, the IPsec authentication algorithm is AES_CBC_256 by default.

[DEVICE-IPsec-instance-test] pre-shared-keycipher\\Configure an IKE to perform negotiation for a pre-shared key. The decryption end and the encryption end need to use the same pre-shared key through negotiation. One of two authentication modes: the pre-shared key and certificate authentication, is selected for usage.

[DEVICE-IPsec-instance-test] certificate local-filename local.cer\\Configure an IKE to perform negotiation for an authenticated local certificate.

[DEVICE-IPsec-instance-test] psulation-mode transform\\Configure an IPsec forwarding packet encapsulation mode. Configuring the IPsec forwarding packet encapsulation mode is an optional step. If the IPsec forwarding packet encapsulation mode is not configured, the IPsec forwarding packet encapsulation mode is a tunnel mode by default.

[DEVICE-IPsec-instance-test] service-instance-group IPsec_test\\Bind an IPsec service group.

Step (3): Define an ACL rule. The ACL rule includes a 5-tuple sent to the peer according to a BGP FS. The 5-tuple is a 5-tuple of a data flow that needs to be packed and encrypted.
acl 3000
[acl4-advance-3000] rule permit tcp source 10.1.1.1 0 source-port eq 1111 destination 20.1.1.1 0 destination-port eq 2222 [vpn-instance]

Step (4): Configure a service chain.
service-chain instance testsc\\Configure the service chain at the unpacking end. The service chain configured at the unpacking end indicates to first decrypt and then unpack the data flow, or first unpack and then decrypt the data flow. For example, the packing end automatically generates the service chain by performing matching on a local packing instance and a local encryption instance based on a BGP flow spec receiving parameter.
nexthop 1 bind pack instance IPsec_test
nexthop 3 bind IPsec instance pack_test
bind acl 3000\\Bind the unpacking ACL (ACL 3000) to the service chain. In this way, when a packet hits the unpacking ACL, a corresponding unpacking instance is invoked to unpack the packet, and a decryption instance is invoked to decrypt the packet.

Step (1): Configure a BGP peer.
bgp 100
private-4-byte-as enable
peer 1.1.1.1 as-number 100
ipv4-family unicast
peer 1.1.1.1 enable
ipv4-family flow
peer 1.1.1.1 enable

Step (2): Configure and deploy a service instance.

Step (2-a): Configure a pack backup group.
service-location 1

Configure an encryption authentication backup group.
service-location 2

Step (2-b): Group a CPU or a service board used for encryption authentication into the backup group.
[service-location-1] location slot 1 card 0
[service-location-2] location slot 2 card 0

Step (2-c): Configure a data packing service group.
service-instance-group pack_test
   [service-instance-group] service-location 1
   [service-instance-group] remote-backup-service test
IPsec service group
service-instance-group IPsec_test
   [service-instance-group] service-location 2
   [service-instance-group] remote-backup-service test

Step (2-d): Configure the service instance.
Packing service instance
data-processing instance pack_test

[data-processing-instance-test] data-processing type pack//Configure a service type of the instance as unpacking.

[data-processing-instance-test] data-processing algorithm zstd//Configure a compression algorithm.

[data-processing-instance-test] service-instance-group pack_test//Bind a packing service group.

### Encryption service instance

### [DEVICE] IPsec instance IPsec_test

[DEVICE-IPsec-instance-test] ip address 10.10.1.1 255.255.255.0\\Configure a local IKE address for IPsec tunnel negotiation.

[DEVICE-IPsec-instance-test] ike sa rekey 7200\\Configure IKE SA rekey duration, and perform renegotiation for encryption and authentication keys of an IKE protocol at a specified interval based on the configured duration. A process of configuring the IKE SA rekey duration is an optional step. If the IKE SA rekey duration is not configured, the IKE SA rekey duration is 12800 seconds by default.

[DEVICE-IPsec-instance-test] ike DPD 20\\Configure IKE DPD duration, and perform IKE tunnel keepalive detection based on the configured duration. A process of configuring the IKE DPD duration is an optional step. If the IKE DPD duration is not configured, IKE tunnel keepalive detection is performed at an interval of 5 seconds by default.

[DEVICE-IPsec-instance-test] ike encryption-algorithm aes-cbc 256\\Configure an IKE encryption algorithm, and perform negotiation for matching based on the algorithm. The negotiation succeeds only when algorithms on the two ends match with each other. Supported IKE encryption algorithm types include but not limited to DES, 3DES, AES_CBC_128, AES_CBC_192, AES_CBC_256, AES-GCM-128-128, AES-GCM-128-192, and AES-GCM-128-256. A process of configuring the IKE encryption algorithm is an optional step. If the IKE encryption algorithm is not configured, the IKE encryption algorithm is AES_CBC_256 by default.

[DEVICE-IPsec-instance-test] ike authentication-algorithm aes-cbc 256\\Configure an IKE authentication algorithm, and perform negotiation for matching based on the algorithm. The negotiation succeeds only when algorithms on the two ends match with each other. A process of configuring the IKE authentication algorithm is an optional step. If the IKE authentication algorithm is not configured, the IKE authentication algorithm is AES_CBC_256 by default. Supported IKE authentication algorithms include MD5, SHA1, SHA2-256, SHA2-384, and SHA2-512.

[DEVICE-IPsec-instance-test] ike dh group15\\Configure a DH-group algorithm, and perform negotiation for matching based on the algorithm. The negotiation succeeds only when algorithms on the two ends match with each other. Supported DH-group algorithms include DH-group 1/2/5/14/15/16/19/20/21. Configuring the DH-group algorithm is an optional step. If the DH-group algorithm is not configured, the DH-group algorithm is DH-group 14 by default.

[DEVICE-IPsec-instance-test] IPsec sa rekey 1000\\Configure IPsec SA rekey duration, and perform renegotiation for encryption and authentication keys of an IPsec tunnel at a specified interval based on the configured duration. Configuring the IPsec SA rekey duration is an optional step. If the IPsec SA rekey duration is not configured, renegotiation is performed for the encryption and authentication keys of the IPsec tunnel at an interval of 3600 seconds by default.

[DEVICE-IPsec-instance-test] IPsec ah authentication-algorithm sha2-384\\Configure an IPsec authentication algorithm, and perform negotiation for matching based on the algorithm. The negotiation succeeds only when algorithms on the two ends match with each other. Supported IPsec authentication algorithm types include MD5, SHA1, SHA2-256, SHA2-384, and SHA2-512. Configuring the IPsec authentication algorithm is an optional step. If the IPsec authentication algorithm is not configured, the IPsec authentication algorithm is SHA2-256 by default.

[DEVICE-IPsec-instance-test] IPsec esp encryption-algorithm AES_CBC_128\\Configure an IPsec authentication algorithm, and perform negotiation for matching based on the algorithm. The negotiation succeeds only when algorithms on the two ends match with each other. Supported algorithm types include DES, 3DES, AES_CBC_128, AES_CBC_192, AES_CBC_256, AES-GCM-128-128, AES-GCM-128-192, and AES-GCM-128-256. Configuring the IPsec authentication algorithm is an optional step. If the IPsec authentication algorithm is not configured, the IPsec authentication algorithm is the AES_CBC_256 by default.

[DEVICE-IPsec-instance-test] pre-shared-keycipher\\Configure an IKE to perform negotiation for a pre-shared key. The decryption end and the encryption end need to reach an agreement through negotiation. One of two authentication modes: the pre-shared key and certificate authentication, is selected for usage.

[DEVICE-IPsec-instance-test] certificate local-filename local.cer\\Configure an IKE to perform negotiation for an authenticated local certificate.

[DEVICE-IPsec-instance-test] psulation-mode transform\\Configure an IPsec forwarding packet encapsulation mode. Configuring the IPsec forwarding packet encapsulation mode is an optional step. If the IPsec forwarding packet encapsulation mode is not configured, the IPsec forwarding packet encapsulation mode is a tunnel mode by default.

[DEVICE-IPsec-instance-test] service-instance-group IPsec_test\\Bind an IPsec service group.

Optionally, in a scenario in which a plurality of unpacking ends or a plurality of decrypting ends are deployed, the following configurations are further performed.

remote-backup-service test\\Configure a backup group.

[rm-backup-srv-test] peer 10.1.1.1 source 10.1.1.2 1024\\Establish an active/standby relationship, and sense a state of a peer device in a same unpacking group (or decryption group), so that a packet can be redirected to the peer end if the local end is invalidated.

data-processing instance test\\Configure a redirection IP in the packing instance.
[data-processing-instance-test] redirect s ip-nexthop 6.1.1.1
[data-processing-instance-test] redirect ipv6-nexthop 3000::1

route-policy RP permit node 10\\ When the packing end has two routes, a non-zero flow route is set to a high priority in a BGP flow route filtering policy, to maintain a packing capability.
[R2-route-policy] apply extcommunity data-processing CPI 0 additive
bgp 100
peer 1.1.1.1 as-number 100
   ipv4-family unicast
   peer 1.1.1.1 route-policy RP import

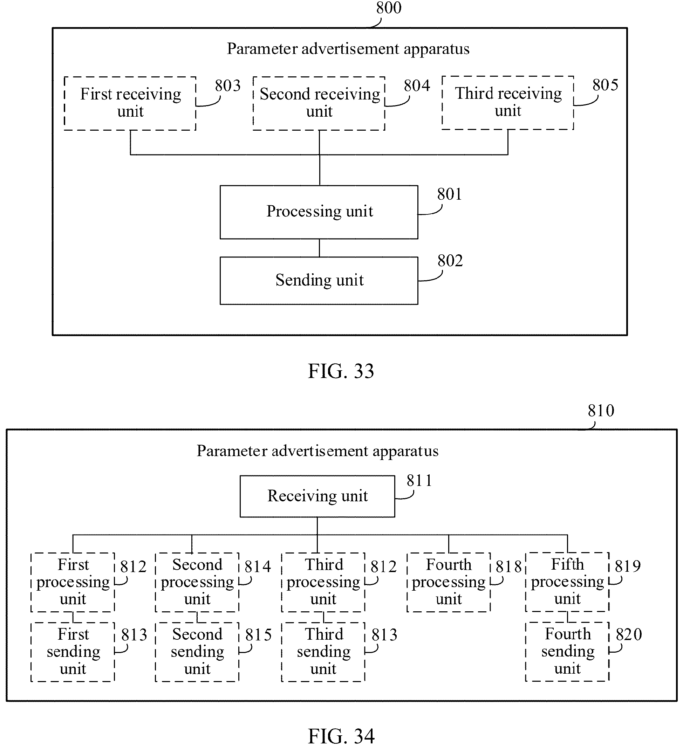

FIG. 33 is a diagram of a structure of a parameter advertisement apparatus 800 according to this application. The apparatus 800 is disposed in a first network device. The apparatus 800 includes: a processing unit 801, configured to obtain a first parameter set, where the first parameter set includes a first identifier and a feature of a data flow, and the first identifier indicates a compression algorithm; and a sending unit 802, configured to send the first parameter set.

Optionally, the first parameter set further includes at least one of an offset or a first priority. The offset indicates at least one of a packing start location or a packing end location. The first priority indicates that a packing function is validated.

Optionally, the sending unit 802 is further configured to send a first BGP packet to a second network device. The first BGP packet includes the first parameter set. An NLRI field in the first BGP packet includes the feature of the data flow. An extended community attribute field in the first BGP packet includes a first type and the first identifier. The first type indicates packing. The first BGP packet is a BGP flow spec packet or a BGP EVPN packet.

Optionally, the first parameter set includes the offset and the first priority, and the sending unit 802 is further configured to: send a second BGP packet to the second network device, where the second BGP packet includes the first priority and the feature of the data flow; and send a third BGP packet to the second network device, where the third BGP packet includes the offset and the feature of the data flow.

Optionally, the sending unit 802 is further configured to send an IGP packet to the second network device. The IGP packet includes a TLV, and the TLV includes a second type, the first identifier, and the feature of the data flow. The second type indicates packing.

Optionally, the apparatus 800 further includes a first receiving unit 803. The first receiving unit 803 is configured to receive a first data packet from the second network device. The first data packet includes the feature of the data flow. The processing unit 801 is further configured to: obtain the first identifier based on the first data packet and the feature of the data flow, and obtain a second data packet based on the first identifier and the first data packet. The second data packet is a data packet obtained by unpacking the first data packet based on the first identifier. The sending unit 802 is further configured to send the second data packet.

Optionally, the processing unit 801 is further configured to obtain a second parameter set. The second parameter set includes a second priority and the feature of the data flow. The second priority indicates that the packing function is invalidated. The sending unit 802 is further configured to send the second parameter set to the second network device.

Optionally, the processing unit 801 is further configured to obtain a third parameter set. The third parameter set includes a second identifier and the feature of the data flow. The second identifier indicates to withdraw packing or disable a packing function. The sending unit 802 is further configured to send the third parameter set to the second network device.

Optionally, the apparatus 800 further includes a second receiving unit 804. The second receiving unit 804 is configured to receive a third data packet from the second network device. The third data packet includes the feature of the data flow. The sending unit 802 is further configured to: if an unpacking function of the first network device is invalidated or the unpacking function of the first network device is disabled, send, based on the third data packet and the feature of the data flow, the third data packet to a third network device that is configured for unpacking and that is included in an unpacking group to which the first network device belongs.

Optionally, the first parameter set further includes at least one of an internet protocol IP address of the first network device or a third identifier. The IP address is used to establish an encryption tunnel. The third identifier indicates an encryption algorithm.

Optionally, the apparatus 800 further includes: a third receiving unit 805, configured to receive a fourth data packet from the second network device through the encryption tunnel. The fourth data packet includes the feature of the data flow. The processing unit 801 is further configured to: obtain the first identifier and the third identifier based on the fourth data packet and the feature of the data flow, and obtain a fifth data packet based on the first identifier, the third identifier, and the fourth data packet. The fifth data packet is a data packet obtained by unpacking and decrypting the fourth data packet based on the first identifier and the third identifier. The sending unit 802 is further configured to send the fifth data packet.

Optionally, the first parameter set further includes at least one of a fourth identifier or a fifth identifier. The fourth identifier indicates an authentication algorithm. The fifth identifier indicates a key exchange algorithm.

Optionally, the first parameter set further includes a BFD identifier. The BFD identifier indicates to establish a BFD session between the first network device and the second network device.

Optionally, the first parameter set further includes a sixth identifier. The sixth identifier indicates a role of the first network device in an active/standby scenario or a role of the first network device in a load balancing scenario.

Optionally, the feature of the data flow includes a destination IP address. The feature of the data flow further includes at least one of a source IP address, a source address prefix, a destination address prefix, a source port number, a destination port number, a protocol number, a flow identifier, an application identifier, or a user identifier.

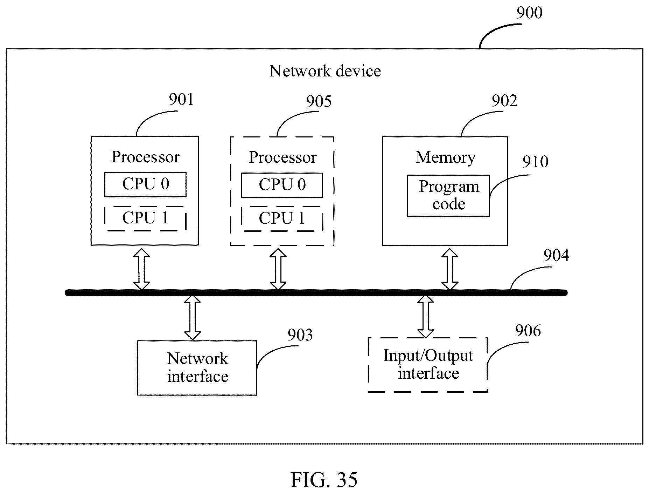

The apparatus embodiment in FIG. 33 is merely an example. For example, the foregoing unit division is merely logical function division and may be other division during actual implementation. For example, a plurality of units or components may be combined or integrated into another system, or some features may be ignored or not performed. Functional units in embodiments of this application may be integrated into one processing unit, each of the units may exist alone physically, or two or more units are integrated into one unit. All or some of the units in the apparatus 800 are implemented by using software, hardware, firmware, or any combination thereof. With reference to a network device 900 described below, the following describes some possible implementations of implementing the functional units in the apparatus 800 by using the hardware or software. When the software is used for implementation, for example, the processing unit 801 is implemented by a software functional unit that is generated after at least one processor 901 in FIG. 35 reads program code stored in a memory 902. When the hardware is used for implementation, for example, the units in FIG. 33 are implemented by different hardware in a device. For example, the processing unit 801 is implemented by some processing resources (for example, one or two cores in a multi-core processor) in at least one processor 901 in FIG. 35, or implemented by a programmable device such as a field-programmable gate array (field-programmable gate array, FPGA) or a coprocessor. The first receiving unit 803, the second receiving unit 804, the third receiving unit 805, and the sending unit 802 are implemented by a network interface 903 in FIG. 35.

FIG. 34 is a diagram of a structure of a parameter advertisement apparatus 810 according to this application. The apparatus 810 is disposed in a second network device. The apparatus 810 includes: a receiving unit 811, configured to receive a first parameter set from a first network device. The first parameter set includes a first identifier and a feature of a data flow, and the first identifier indicates a compression algorithm. Optionally, the first parameter set further includes at least one of an offset or a first priority. The offset indicates at least one of a packing start location or a packing end location. The first priority indicates that a packing function is validated.

Optionally, the apparatus 810 further includes a first processing unit 812 and a first sending unit 813. The first processing unit 812 is configured to: obtain a second data packet, where the second data packet includes the feature of the data flow; obtain the first identifier based on the second data packet and the feature of the data flow; and obtain a first data packet based on the first identifier and the second data packet, where the first data packet is a data packet obtained by packing the second data packet based on the first identifier. The first sending unit 813 is configured to send the first data packet to the first network device.

Optionally, the receiving unit 811 is further configured to receive a second parameter set from the first network device, where the second parameter set includes a second priority and the feature of the data flow, and the second priority indicates that a packing function is invalidated.

Optionally, the apparatus 810 further includes a second processing unit 814 and a second sending unit 815. The second processing unit 814 is configured to: obtain a third data packet, where the third data packet includes the feature of the data flow; and obtain the second priority based on the third data packet and the feature of the data flow. The second sending unit 815 is configured to send the third data packet to the first network device based on the second priority.

Optionally, the first parameter set includes the first priority, and the receiving unit 811 is further configured to receive a second parameter set from a third network device, where the second parameter set includes the feature of the data flow and a second priority, and the second priority indicates that a packing function is invalidated.

Optionally, the apparatus 810 further includes a third processing unit 816 and a third sending unit 817. The third processing unit 816 is configured to: obtain a second data packet, where the second data packet includes the feature of the data flow; obtain the first priority, the second priority, and the first identifier based on the second data packet and the feature of the data flow; and obtain a first data packet based on the first identifier and the second data packet when the first priority is higher than the second priority, where the first data packet is a data packet obtained by packing the second data packet based on the first identifier. The third sending unit 817 is configured to send the first data packet to the first network device.

Optionally, the receiving unit 811 is further configured to receive a third parameter set from the first network device, where the third parameter set includes the feature of the data flow and the second identifier, and the second identifier indicates to withdraw packing or disable a packing function.

The apparatus 810 further includes a fourth processing unit 818, configured to delete the feature of the data flow or disable the packing function of the second network device based on the second identifier.

Optionally, the first parameter set further includes an IP address of the first network device, and the apparatus 810 further includes a fifth processing unit 819 and a fourth sending unit 820. The fifth processing unit 819 is configured to obtain a first negotiation packet based on the IP address of the first network device, where the first negotiation packet is used to negotiate to establish an encryption tunnel. The fourth sending unit 820 is configured to send the first negotiation packet to the first network device.

Optionally, the first parameter set further includes a third identifier, and the third identifier indicates an encryption algorithm. The fifth processing unit 819 is further configured to: obtain a fifth data packet, where the fifth data packet includes the feature of the data flow; obtain the first identifier and the third identifier based on the fifth data packet and the feature of the data flow; and obtain a fourth data packet based on the first identifier, the third identifier, and the fifth data packet, where the fourth data packet is a data packet obtained by packing and encrypting the fifth data packet based on the first identifier and the third identifier. The fourth sending unit 820 is further configured to send the fourth data packet to the first network device through the encryption tunnel.

Optionally, the first parameter set further includes a fourth identifier, and the fourth identifier indicates an authentication algorithm. The fifth processing unit 819 is further configured to: obtain a sixth data packet, where the sixth data packet includes an identifier of the data flow; obtain the first identifier and the fourth identifier based on the sixth data packet and the feature of the data flow; and obtain a seventh data packet based on the first identifier, the fourth identifier, and the sixth data packet, where the seventh data packet includes a signature obtained based on the authentication algorithm, and the seventh data packet is a data packet obtained by packing the sixth data packet based on the first identifier. The fourth sending unit 820 is further configured to send the seventh data packet to the first network device through the encryption tunnel.

Optionally, the first parameter set further includes a fifth identifier, the fifth identifier indicates a key exchange algorithm, and the key exchange algorithm is used to obtain an encryption key. The fifth processing unit 819 is further configured to: obtain an eighth data packet, where the eighth data packet includes the feature of the data flow; obtain the first identifier and the fifth identifier based on the eighth data packet and the feature of the data flow; and obtain a ninth data packet based on the first identifier, the fifth identifier, and the eighth data packet, where the ninth data packet is a data packet obtained by packing and encrypting the eighth data packet based on the first identifier and the fifth identifier. The fourth sending unit 820 is further configured to send the ninth data packet to the first network device through the encryption tunnel.

Optionally, the first parameter set further includes a BFD identifier, and the BFD identifier indicates to establish a BFD session. The fifth processing unit 819 is further configured to obtain a second negotiation packet based on the BFD identifier, where the second negotiation packet is used to negotiate to establish the BFD session. The fourth sending unit 820 is further configured to send the second negotiation packet to the first network device.

Optionally, the fifth processing unit 819 is further configured to: obtain a tenth data packet, where the tenth data packet includes the feature of the data flow; obtain the first identifier based on the tenth data packet and the feature of the data flow; and obtain an eleventh data packet based on the first identifier and the tenth data packet, where the eleventh data packet is a data packet obtained by packing the tenth data packet based on the first identifier. The fourth sending unit 820 is further configured to: when the BFD session between the second network device and the first network device is in a down state, send the eleventh data packet to a third network device that belongs to a same unpacking group as the first network device.

Optionally, the first parameter set further includes a sixth identifier. The sixth identifier indicates a role of the first network device in an active/standby scenario or a role of the first network device in a load balancing scenario.

The apparatus embodiment in FIG. 34 is merely an example. For example, the foregoing unit division is merely logical function division and may be other division during actual implementation. For example, a plurality of units or components may be combined or integrated into another system, or some features may be ignored or not performed. Functional units in embodiments of this application may be integrated into one processing unit, each of the units may exist alone physically, or two or more units are integrated into one unit. All or some of the units in the apparatus 810 are implemented by using software, hardware, firmware, or any combination thereof. With reference to a network device 900 described below, the following describes some possible implementations of implementing the functional units in the apparatus 810 by using the hardware or software. When the software is used for implementation, for example, the first processing unit 812, the second processing unit 814, the third processing unit 816, the fourth processing unit 818, and the fifth processing unit 819 are implemented by a software functional unit that is generated after the at least one processor 901 in FIG. 35 reads the program code stored in the memory 902. When the hardware is used for implementation, for example, the units in FIG. 34 are implemented by different hardware in a device. For example, the first processing unit 812 is implemented by some processing resources (for example, one or two cores in a multi-core processor) in the at least one processor 901 in FIG. 35, or implemented by a programmable device such as a field-programmable gate array (field-programmable gate array, FPGA) or a coprocessor. The receiving unit 811, the first sending unit 813, the second sending unit 815, the third sending unit 817, and the fourth sending unit 820 are implemented by the network interface 903 in FIG. 35.

FIG. 35 is a diagram of a structure of a network device 900 according to an embodiment of this application. The network device 900 includes at least one processor 901, a memory 902, and at least one network interface 903. The processor 901 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 901 includes an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof. The memory 902 is, for example, a read-only memory (read-only memory, ROM) or another type of static storage device capable of storing static information and instructions, a random access memory (random access memory, RAM), or is, for another example, another type of dynamic storage device capable of storing information and instructions, or is, for another example, an electrically erasable programmable read-only memory (electrically erasable programmable read-only memory, EEPROM), a compact disc read-only memory (compact disc read-only memory, CD-ROM), another compact disc storage, an optical disc storage (including a compressed optical disc, a laser disc, an optical disc, a digital versatile optical disc, a Blue-ray optical disc, or the like), a magnetic disk storage medium, another magnetic storage device, or any other medium capable of carrying or storing expected program code in a form of instructions or a data structure and capable of being accessed by a computer, but is not limited thereto. Optionally, the memory 902 exists independently and is connected to the processor 901 through an internal connection 904. Alternatively, the memory 902 is optionally integrated with the processor 901. The network interface 903 is configured to communicate with another device or a communication network by using any transceiver-type apparatus. The network interface 903 includes, for example, at least one of a wired network interface or a wireless network interface. The wired network interface is, for example, an Ethernet interface. The Ethernet interface is, for example, an optical interface, an electrical interface, or a combination thereof. The wireless network interface is, for example, a wireless local area network (wireless local area network, WLAN) interface, a cellular network interface, or a combination thereof.

In some embodiments, the processor 901 includes one or more CPUs, such as a CPU 0 and a CPU 1 shown in FIG. 35. In some embodiments, the network device 900 optionally includes a plurality of processors, such as the processor 901 and a processor 905 shown in FIG. 35. Each of these processors is, for example, a single-core processor (single-CPU) or a multi-core processor (multi-CPU). The processor herein is optionally one or more devices, circuits, and/or processing cores configured to process data (for example, computer program instructions). In some embodiments, the network device 900 further includes the internal connection 904. The processor 901, the memory 902, and the at least one network interface 903 are connected through the internal connection 904. The internal connection 904 includes a pathway, for transferring information between the foregoing components. Optionally, the internal connection 904 is a board or a bus. Optionally, the internal connection 904 is classified into an address bus, a data bus, a control bus, and the like. In some embodiments, the network device 900 further includes an input/output interface 906. The input/output interface 906 is connected to the internal connection 904. Optionally, the processor 901 implements the method in the foregoing embodiment by reading program code stored in the memory 902, or the processor 901 implements the method in the foregoing embodiment by reading internally stored program code. When the processor 901 implements the method in the foregoing embodiment by reading the program code stored in the memory 902, the memory 902 stores program code 910 that implements the method provided in embodiments of this application. For more details about the processor 901 implementing the foregoing functions, refer to the descriptions in the foregoing method embodiments. Details are not described herein again.

Embodiments in this specification are described in a progressive manner. For same or similar parts in embodiments, refer to each other. Each embodiment focuses on a difference from other embodiments. That A refers to B means that A is the same as B or that A is a simple variant of B. In the specification and claims in embodiments of this application, the terms "first", "second", and the like are for distinguishing between different objects, but are not intended to describe a particular order of the objects, and cannot be understood as an indication or implication of relative importance. For example, a first identifier and a second identifier are used to distinguish between different identifiers, but are not used to describe a particular order of the identifiers, and it cannot be understood that the first identifier is more important than the second identifier. In embodiments of this application, unless otherwise specified, "at least one" means one or more, and "a plurality of" means two or more. All or some of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, all or some of the described procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A parameter advertisement method, wherein the method comprises:
obtaining, by a first network device, a first parameter set, wherein the first parameter set comprises a first identifier and a feature of a data flow, and the first identifier indicates a compression algorithm; and
sending, by the first network device, the first parameter set to a second network device.

2. The method according to claim 1, wherein the first parameter set further comprises at least one of an offset or a first priority, the offset indicates at least one of a packing start location or a packing end location, and the first priority indicates that a packing function is validated.

3. The method according to claim 1 or 2, wherein the sending, by the first network device, the first parameter set to a second network device comprises:
sending, by the first network device, a first border gateway protocol BGP packet to the second network device, wherein the first BGP packet comprises the first parameter set.

4. The method according to claim 3, wherein a network layer reachability information NLRI field in the first BGP packet comprises the feature of the data flow, an extended community attribute field in the first BGP packet comprises a first type and the first identifier, and the first type indicates packing.

5. The method according to claim 3 or 4, wherein the first BGP packet is a border gateway protocol flow specification BGP flow spec packet or a border gateway protocol Ethernet virtual private network BGP EVPN packet.

6. The method according to claim 2, wherein the first parameter set comprises the offset and the first priority, and the method further comprises:
sending, by the first network device, a second BGP packet to the second network device, wherein the second BGP packet comprises the first priority and the feature of the data flow; and
sending, by the first network device, a third BGP packet to the second network device, wherein the third BGP packet comprises the offset and the feature of the data flow.

7. The method according to any one of claims 1 to 6, wherein the sending, by the first network device, the first parameter set to a second network device comprises:
sending, by the first network device, an interior gateway protocol IGP packet to the second network device, wherein the IGP packet comprises a type-length-value TLV, the TLV comprises a second type, the first identifier, and the feature of the data flow, and the second type indicates packing.

8. The method according to any one of claims 1 to 7, wherein after the sending, by the first network device, the first parameter set to a second network device, the method further comprises:
receiving, by the first network device, a first data packet from the second network device, wherein the first data packet comprises the feature of the data flow;
obtaining, by the first network device, the first identifier based on the first data packet and the feature of the data flow;
obtaining, by the first network device, a second data packet based on the first identifier and the first data packet, wherein the second data packet is a data packet obtained by unpacking the first data packet based on the first identifier; and
sending, by the first network device, the second data packet.

9. The method according to any one of claims 1 to 8, wherein after the sending, by the first network device, the first parameter set to a second network device, the method further comprises:
obtaining, by the first network device, a second parameter set, wherein the second parameter set comprises a second priority and the feature of the data flow, and the second priority indicates that the packing function is invalidated; and
sending, by the first network device, the second parameter set to the second network device.

10. The method according to any one of claims 1 to 9, wherein after the sending, by the first network device, the first parameter set to a second network device, the method further comprises:
obtaining, by the first network device, a third parameter set, wherein the third parameter set comprises a second identifier and the feature of the data flow, and the second identifier indicates to withdraw packing or disable a packing function; and
sending, by the first network device, the third parameter set to the second network device.

11. The method according to any one of claims 1 to 10, wherein after the sending, by the first network device, the first parameter set to a second network device, the method further comprises:
receiving, by the first network device, a third data packet from the second network device, wherein the third data packet comprises the feature of the data flow; and
if an unpacking function of the first network device is invalidated or the unpacking function of the first network device is disabled, sending, by the first network device based on the third data packet and the feature of the data flow, the third data packet to a third network device that is configured for unpacking and that is comprised in an unpacking group to which the first network device belongs.

12. The method according to any one of claims 1 to 11, wherein the first parameter set further comprises at least one of an internet protocol IP address of the first network device or a third identifier, the IP address is used to establish an encryption tunnel, and the third identifier indicates an encryption algorithm.

13. The method according to claim 12, wherein after the sending, by the first network device, the first parameter set to a second network device, the method further comprises:
receiving, by the first network device, a fourth data packet from the second network device through the encryption tunnel, wherein the fourth data packet comprises the feature of the data flow;
obtaining, by the first network device, the first identifier and the third identifier based on the fourth data packet and the feature of the data flow;
obtaining, by the first network device, a fifth data packet based on the first identifier, the third identifier, and the fourth data packet, wherein the fifth data packet is a data packet obtained by unpacking and decrypting the fourth data packet based on the first identifier and the third identifier; and
sending, by the first network device, the fifth data packet.

14. The method according to any one of claims 1 to 13, wherein the first parameter set further comprises at least one of a fourth identifier or a fifth identifier, the fourth identifier indicates an authentication algorithm, and the fifth identifier indicates a key exchange algorithm.

15. The method according to any one of claims 1 to 14, wherein the first parameter set further comprises a bidirectional forwarding detection BFD identifier, and the BFD identifier indicates to establish a BFD session between the first network device and the second network device.

16. The method according to any one of claims 1 to 15, wherein the first parameter set further comprises a sixth identifier, and the sixth identifier indicates a role of the first network device in an active/standby scenario or a role of the first network device in a load balancing scenario.

17. The method according to any one of claims 1 to 16, wherein the feature of the data flow comprises a destination IP address.

18. The method according to claim 17, wherein the feature of the data flow further comprises at least one of a source IP address, a source address prefix, a destination address prefix, a source port number, a destination port number, a protocol number, a flow identifier, an application identifier, or a user identifier.

19. A parameter advertisement method, wherein the method comprises:
receiving, by a second network device, a first parameter set from a first network device, wherein the first parameter set comprises a first identifier and a feature of a data flow, and the first identifier indicates a compression algorithm.

20. The method according to claim 19, wherein the first parameter set further comprises at least one of an offset or a first priority, the offset indicates at least one of a packing start location or a packing end location, and the first priority indicates that a packing function is validated.

21. The method according to claim 19 or 20, wherein after the receiving, by a second network device, a first parameter set from a first network device, the method further comprises:
obtaining, by the second network device, a second data packet, wherein the second data packet comprises the feature of the data flow;
obtaining, by the second network device, the first identifier based on the second data packet and the feature of the data flow;
obtaining, by the second network device, a first data packet based on the first identifier and the second data packet, wherein the first data packet is a data packet obtained by packing the second data packet based on the first identifier; and
sending, by the second network device, the first data packet to the first network device.

22. The method according to any one of claims 19 to 21, wherein the method further comprises:
receiving, by the second network device, a second parameter set from the first network device, wherein the second parameter set comprises a second priority and the feature of the data flow, and the second priority indicates that the packing function is invalidated.

23. The method according to claim 22, wherein after the receiving, by the second network device, a second parameter set from the first network device, the method further comprises:
obtaining, by the second network device, a third data packet, wherein the third data packet comprises the feature of the data flow;
obtaining, by the second network device, the second priority based on the third data packet and the feature of the data flow; and
sending, by the second network device, the third data packet to the first network device based on the second priority.

24. The method according to claim 20, wherein the first parameter set comprises the first priority, and the method further comprises:
receiving, by the second network device, a second parameter set from a third network device, wherein the second parameter set comprises the feature of the data flow and a second priority, and the second priority indicates that the packing function is invalidated.

25. The method according to claim 24, wherein after the receiving, by the second network device, a second parameter set from a third network device, the method further comprises:
obtaining, by the second network device, a second data packet, wherein the second data packet comprises the feature of the data flow;
obtaining, by the second network device, the first priority, the second priority, and the first identifier based on the second data packet and the feature of the data flow;
when the first priority is higher than the second priority, obtaining, by the second network device, a first data packet based on the first identifier and the second data packet, wherein the first data packet is a data packet obtained by packing the second data packet based on the first identifier; and
sending, by the second network device, the first data packet to the first network device.

26. The method according to any one of claims 19 to 25, wherein the method further comprises:
receiving, by the second network device, a third parameter set from the first network device, wherein the third parameter set comprises the feature of the data flow and a second identifier, and the second identifier indicates to withdraw packing or disable a packing function; and
deleting, by the second network device, the feature of the data flow or disabling the packing function of the second network device, based on the second identifier.

27. The method according to any one of claims 19 to 26, wherein the first parameter set further comprises an IP address of the first network device, and the method further comprises:
obtaining, by the second network device, a first negotiation packet based on the IP address of the first network device, wherein the first negotiation packet is used to negotiate to establish an encryption tunnel; and
sending, by the second network device, the first negotiation packet to the first network device.

28. The method according to claim 27, wherein the first parameter set further comprises a third identifier, the third identifier indicates an encryption algorithm, and the method further comprises:
obtaining, by the second network device, a fifth data packet, wherein the fifth data packet comprises the feature of the data flow;
obtaining, by the second network device, the first identifier and the third identifier based on the fifth data packet and the feature of the data flow;
obtaining, by the second network device, a fourth data packet based on the first identifier, the third identifier, and the fifth data packet, wherein the fourth data packet is a data packet obtained by packing and encrypting the fifth data packet based on the first identifier and the third identifier; and
sending, by the second network device, the fourth data packet to the first network device through the encryption tunnel.

29. The method according to claim 27 or 28, wherein the first parameter set further comprises a fourth identifier, the fourth identifier indicates an authentication algorithm, and the method further comprises:
obtaining, by the second network device, a sixth data packet, wherein the sixth data packet comprises an identifier of the data flow;
obtaining, by the second network device, the first identifier and the fourth identifier based on the sixth data packet and the feature of the data flow;
obtaining, by the second network device, a seventh data packet based on the first identifier, the fourth identifier, and the sixth data packet, wherein the seventh data packet comprises a signature obtained based on the authentication algorithm, and the seventh data packet is a data packet obtained by packing the sixth data packet based on the first identifier; and
sending, by the second network device, the seventh data packet to the first network device through the encryption tunnel.

30. The method according to any one of claims 27 to 29, wherein the first parameter set further comprises a fifth identifier, the fifth identifier indicates a key exchange algorithm, the key exchange algorithm is used to obtain an encryption key, and the method further comprises:
obtaining, by the second network device, an eighth data packet, wherein the eighth data packet comprises the feature of the data flow;
obtaining, by the second network device, the first identifier and the fifth identifier based on the eighth data packet and the feature of the data flow;
obtaining, by the second network device, a ninth data packet based on the first identifier, the fifth identifier, and the eighth data packet, wherein the ninth data packet is a data packet obtained by packing and encrypting the eighth data packet based on the first identifier and the fifth identifier; and
sending, by the second network device, the ninth data packet to the first network device through the encryption tunnel.

31. The method according to any one of claims 19 to 30, wherein the first parameter set further comprises a BFD identifier, the BFD identifier indicates to establish a BFD session, and the method further comprises:
obtaining, by the second network device, a second negotiation packet based on the BFD identifier, wherein the second negotiation packet is used to negotiate to establish the BFD session; and
sending, by the second network device, the second negotiation packet to the first network device.

32. The method according to claim 31, wherein after the sending, by the second network device, the second negotiation packet to the first network device, the method further comprises:
obtaining, by the second network device, a tenth data packet, wherein the tenth data packet comprises the feature of the data flow;
obtaining, by the second network device, the first identifier based on the tenth data packet and the feature of the data flow;
obtaining, by the second network device, an eleventh data packet based on the first identifier and the tenth data packet, wherein the eleventh data packet is a data packet obtained by packing the tenth data packet based on the first identifier; and
when the BFD session between the second network device and the first network device is in a down state, sending, by the second network device, the eleventh data packet to a third network device that belongs to a same unpacking group as the first network device.

33. The method according to any one of claims 19 to 32, wherein the first parameter set further comprises a sixth identifier, and the sixth identifier indicates a role of the first network device in an active/standby scenario or a role of the first network device in a load balancing scenario.

34. A parameter advertisement apparatus, disposed in a first network device, wherein the apparatus comprises:
a processing unit, configured to obtain a first parameter set, wherein the first parameter set comprises a first identifier and a feature of a data flow, and the first identifier indicates a compression algorithm; and
a sending unit, configured to send the first parameter set.

35. The apparatus according to claim 34, wherein the first parameter set further comprises at least one of an offset or a first priority, the offset indicates at least one of a packing start location or a packing end location, and the first priority indicates that a packing function is validated.

36. The apparatus according to claim 34 or 35, wherein the sending unit is configured to send a first border gateway protocol BGP packet to a second network device, wherein the first BGP packet comprises the first parameter set.

37. The apparatus according to claim 36, wherein a network layer reachability information NLRI field in the first BGP packet comprises the feature of the data flow, an extended community attribute field in the first BGP packet comprises a first type and the first identifier, and the first type indicates packing.

38. The apparatus according to claim 36 or 37, wherein the first BGP packet is a border gateway protocol flow specification BGP flow spec packet or a border gateway protocol Ethernet virtual private network BGP EVPN packet.

39. The apparatus according to claim 35, wherein the first parameter set comprises the offset and the first priority, and the sending unit is configured to: send a second BGP packet to the second network device, wherein the second BGP packet comprises the first priority and the feature of the data flow; and send a third BGP packet to the second network device, wherein the third BGP packet comprises the offset and the feature of the data flow.

40. The apparatus according to any one of claims 34 to 39, wherein the sending unit is configured to send an interior gateway protocol IGP packet to a second network device, wherein the IGP packet comprises a type-length-value TLV, the TLV comprises a second type, the first identifier, and the feature of the data flow, and the second type indicates packing.

41. The apparatus according to any one of claims 34 to 40, wherein the apparatus further comprises:
a first receiving unit, configured to receive a first data packet from the second network device, wherein the first data packet comprises the feature of the data flow;
the processing unit is further configured to: obtain the first identifier based on the first data packet and the feature of the data flow; and obtain a second data packet based on the first identifier and the first data packet, wherein the second data packet is a data packet obtained by unpacking the first data packet based on the first identifier; and
the sending unit is further configured to send the second data packet.

42. The apparatus according to any one of claims 34 to 41, wherein
the processing unit is further configured to obtain a second parameter set, wherein the second parameter set comprises a second priority and the feature of the data flow, and the second priority indicates that the packing function is invalidated; and
the sending unit is further configured to send the second parameter set to the second network device.

43. The apparatus according to any one of claims 34 to 42, wherein the processing unit is further configured to obtain a third parameter set, wherein the third parameter set comprises a second identifier and the feature of the data flow, and the second identifier indicates to withdraw packing or disable a packing function; and
the sending unit is further configured to send the third parameter set to the second network device.

44. The apparatus according to any one of claims 34 to 43, wherein the apparatus further comprises:
a second receiving unit, configured to receive a third data packet from the second network device, wherein the third data packet comprises the feature of the data flow; and
the sending unit is further configured to: if an unpacking function of the first network device is invalidated or the unpacking function of the first network device is disabled, send, based on the third data packet and the feature of the data flow, the third data packet to a third network device that is configured for unpacking and that is comprised in an unpacking group to which the first network device belongs.

45. The apparatus according to any one of claims 34 to 44, wherein the first parameter set further comprises at least one of an internet protocol IP address of the first network device or a third identifier, the IP address is used to establish an encryption tunnel, and the third identifier indicates an encryption algorithm.

46. The apparatus according to claim 45, wherein the apparatus further comprises:
a third receiving unit, configured to receive a fourth data packet from the second network device through the encryption tunnel, wherein the fourth data packet comprises the feature of the data flow;
the processing unit is further configured to: obtain the first identifier and the third identifier based on the fourth data packet and the feature of the data flow; and obtain a fifth data packet based on the first identifier, the third identifier, and the fourth data packet, wherein the fifth data packet is a data packet obtained by unpacking and decrypting the fourth data packet based on the first identifier and the third identifier; and
the sending unit is further configured to send the fifth data packet.

47. The apparatus according to any one of claims 34 to 46, wherein the first parameter set further comprises at least one of a fourth identifier or a fifth identifier, the fourth identifier indicates an authentication algorithm, and the fifth identifier indicates a key exchange algorithm.

48. The apparatus according to any one of claims 34 to 47, wherein the first parameter set further comprises a bidirectional forwarding detection BFD identifier, and the BFD identifier indicates to establish a BFD session between the first network device and the second network device.

49. The apparatus according to any one of claims 34 to 48, wherein the first parameter set further comprises a sixth identifier, and the sixth identifier indicates a role of the first network device in an active/standby scenario or a role of the first network device in a load balancing scenario.

50. The apparatus according to any one of claims 34 to 49, wherein the feature of the data flow comprises a destination IP address.

51. The apparatus according to claim 50, wherein the feature of the data flow further comprises at least one of a source IP address, a source address prefix, a destination address prefix, a source port number, a destination port number, a protocol number, a flow identifier, an application identifier, or a user identifier.

52. A parameter advertisement apparatus, disposed in a second network device, wherein the apparatus comprises:
a receiving unit, configured to receive a first parameter set from a first network device, wherein the first parameter set comprises a first identifier and a feature of a data flow, and the first identifier indicates a compression algorithm.

53. The apparatus according to claim 52, wherein the first parameter set further comprises at least one of an offset or a first priority, the offset indicates at least one of a packing start location or a packing end location, and the first priority indicates that a packing function is validated.

54. The apparatus according to claim 52 or 53, wherein the apparatus further comprises:
a first processing unit, configured to: obtain a second data packet, wherein the second data packet comprises the feature of the data flow; obtain the first identifier based on the second data packet and the feature of the data flow; and obtain a first data packet based on the first identifier and the second data packet, wherein the first data packet is a data packet obtained by packing the second data packet based on the first identifier; and
a first sending unit, configured to send the first data packet to the first network device.

55. The apparatus according to any one of claims 52 to 54, wherein the receiving unit is further configured to receive a second parameter set from the first network device, wherein the second parameter set comprises a second priority and the feature of the data flow, and the second priority indicates that the packing function is invalidated.

56. The apparatus according to claim 55, wherein the apparatus further comprises:
a second processing unit, configured to: obtain a third data packet, wherein the third data packet comprises the feature of the data flow; and obtain the second priority based on the third data packet and the feature of the data flow; and
a second sending unit, configured to send the third data packet to the first network device based on the second priority.

57. The apparatus according to claim 53, wherein the first parameter set comprises the first priority, and the receiving unit is further configured to receive a second parameter set from a third network device, wherein the second parameter set comprises the feature of the data flow and a second priority, and the second priority indicates that the packing function is invalidated.

58. The apparatus according to claim 57, wherein the apparatus further comprises:
a third processing unit, configured to: obtain a second data packet, wherein the second data packet comprises the feature of the data flow; obtain the first priority, the second priority, and the first identifier based on the second data packet and the feature of the data flow; and when the first priority is higher than the second priority, obtain a first data packet based on the first identifier and the second data packet, wherein the first data packet is a data packet obtained by packing the second data packet based on the first identifier; and
a third sending unit, configured to send the first data packet to the first network device.

59. The apparatus according to any one of claims 52 to 58, wherein
the receiving unit is further configured to receive a third parameter set from the first network device, wherein the third parameter set comprises the feature of the data flow and a second identifier, and the second identifier indicates to withdraw packing or disable a packing function; and
the apparatus further comprises:
a fourth processing unit, configured to delete the feature of the data flow or disable the packing function of the second network device, based on the second identifier.

60. The apparatus according to any one of claims 52 to 59, wherein the first parameter set further comprises an IP address of the first network device, and the apparatus further comprises:
a fifth processing unit, configured to obtain a first negotiation packet based on the IP address of the first network device, wherein the first negotiation packet is used to negotiate to establish an encryption tunnel; and
a fourth sending unit, configured to send the first negotiation packet to the first network device.

61. The apparatus according to claim 60, wherein the first parameter set further comprises a third identifier, and the third identifier indicates an encryption algorithm;
the fifth processing unit is further configured to: obtain a fifth data packet, wherein the fifth data packet comprises the feature of the data flow; obtain the first identifier and the third identifier based on the fifth data packet and the feature of the data flow; and obtain a fourth data packet based on the first identifier, the third identifier, and the fifth data packet, wherein the fourth data packet is a data packet obtained by packing and encrypting the fifth data packet based on the first identifier and the third identifier; and
the fourth sending unit is further configured to send the fourth data packet to the first network device through the encryption tunnel.

62. The apparatus according to claim 60 or 61, wherein the first parameter set further comprises a fourth identifier, and the fourth identifier indicates an authentication algorithm;
the fifth processing unit is further configured to: obtain a sixth data packet, wherein the sixth data packet comprises the identifier of the data flow; obtain the first identifier and the fourth identifier based on the sixth data packet and the feature of the data flow; and obtain a seventh data packet based on the first identifier, the fourth identifier, and the sixth data packet, wherein the seventh data packet comprises a signature obtained based on the authentication algorithm, and the seventh data packet is a data packet obtained by packing the sixth data packet based on the first identifier; and
the fourth sending unit is further configured to send the seventh data packet to the first network device through the encryption tunnel.

63. The apparatus according to any one of claims 60 to 62, wherein the first parameter set further comprises a fifth identifier, the fifth identifier indicates a key exchange algorithm, and the key exchange algorithm is used to obtain an encryption key;
the fifth processing unit is further configured to: obtain an eighth data packet, wherein the eighth data packet comprises the feature of the data flow; obtain the first identifier and the fifth identifier based on the eighth data packet and the feature of the data flow; and obtain a ninth data packet based on the first identifier, the fifth identifier, and the eighth data packet, wherein the ninth data packet is a data packet obtained by packing and encrypting the eighth data packet based on the first identifier and the fifth identifier; and
the fourth sending unit is further configured to send the ninth data packet to the first network device through the encryption tunnel.

64. The apparatus according to any one of claims 52 to 63, wherein the first parameter set further comprises a BFD identifier, the BFD identifier indicates to establish a BFD session, and the fifth processing unit is further configured to obtain a second negotiation packet based on the BFD identifier, wherein the second negotiation packet is used to negotiate to establish the BFD session; and the fourth sending unit is further configured to send the second negotiation packet to the first network device.

65. The apparatus according to claim 64, wherein the fifth processing unit is further configured to: obtain a tenth data packet, wherein the tenth data packet comprises the feature of the data flow; obtain the first identifier based on the tenth data packet and the feature of the data flow; and obtain an eleventh data packet based on the first identifier and the tenth data packet, wherein the eleventh data packet is a data packet obtained by packing the tenth data packet based on the first identifier; and
the fourth sending unit is further configured to: when the BFD session between the second network device and the first network device is in a down state, send the eleventh data packet to a third network device that belongs to a same unpacking group as the first network device.

66. The apparatus according to any one of claims 52 to 65, wherein the first parameter set further comprises a sixth identifier, and the sixth identifier indicates a role of the first network device in an active/standby scenario or a role of the first network device in a load balancing scenario.

67. A network device, wherein the network device comprises a processor and a network interface, and the network device performs the method according to any one of claims 1 to 33 via the processor and the network interface.

68. A network system, wherein the system comprises the apparatus according to any one of claims 34 to 51 and the apparatus according to any one of claims 52 to 66.

69. A computer-readable storage medium, wherein the storage medium stores at least one instruction, and when the instruction is run on a computer, the computer is enabled to perform the method according to any one of claims 1 to 33.

70. A computer program product, wherein the computer program product comprises one or more computer program instructions, and when the computer program instructions are loaded and run by a computer, the computer is enabled to perform the method according to any one of claims 1 to 33.
